# EUROPEAN PATENT APPLICATION

(11) **EP 4 477 123 A2**
(43) Date of publication of application: **18.12.2024**
(21) Application number: 24180958.1
(22) Date of filing: 10.06.2024
(51) Int. Cl.: A47L 9/16

(54) **SURFACE CLEANING APPARATUS**

(30) Priority: 13.06.2023 US 202318333931
(71) Applicant: Omachron Intellectual Property Inc., Hampton, Ontario L0B 1J0 (CA)
(72) Inventor: CONRAD, Wayne Ernest, Hampton, Ontario (CA)
(74) Representative: Contadin, Giorgio

(57) **Abstract**

A surface cleaning apparatus including an air flow path from a dirty air inlet to a clean air outlet with a motor and fan assembly located in the air flow path; a cyclone located in the air flow path having a first end, an opposed second end, a cyclone axis of rotation that extends between the first and second ends, a sidewall located between the first and second ends, a cyclone air inlet, a cyclone air outlet, and a first dirt outlet, wherein a cyclone chamber is located internal of the sidewall between the first and second ends; and a dirt collection chamber external to the cyclone chamber and in communication with the cyclone chamber via the first dirt outlet. The cyclone chamber has a non-circular cross-sectional area in a plane that is transverse to the cyclone axis of rotation. The first dirt outlet includes an opening in the sidewall.

## Description

### FIELD

This disclosure relates to surface cleaning apparatuses, such as vacuum cleaners. Particularly, this disclosure relates to surface cleaning apparatuses including one or more non-circular element.

### INTRODUCTION

The following is not an admission that anything discussed below is prior art or part of the common general knowledge of persons skilled in the art.

Various types of surface cleaning apparatuses are known, including upright surface cleaning apparatuses, canister surface cleaning apparatuses, stick surface cleaning apparatuses, central vacuum systems, and hand carriable surface cleaning apparatuses such as hand vacuums. Further, various designs of such surface cleaning apparatuses deploying cyclonic dirt separation are known in the art.

### SUMMARY

The following introduction is provided to introduce the reader to the more detailed discussion to follow. The introduction is not intended to limit or define any claimed or as yet unclaimed invention. One or more inventions may reside in any combination or sub-combination of the elements or process steps disclosed in any part of this document including its claims and figures.

In accordance with one aspect of this disclosure, which may be used alone or in combination with any other aspect, a surface cleaning apparatus is provided with a cyclone wherein part or all of the cyclone has a non-circular cross-sectional area in a plane that is transverse to the cyclone axis of rotation. A dirt collection chamber is provided external to the cyclone and is in communication with the cyclone by at least one dirt outlet that is provided by an opening in the sidewall of the cyclone and/or a gap between an end of the sidewall of the cyclone and an end wall of the cyclone. If an opening is provided, then the perimeter of the opening may be bounded by the sidewall, the sidewall and the end wall. Alternately, only part of the opening may be bounded by the sidewall and/or the opening.

In accordance with this aspect, there is provided a surface cleaning apparatus comprising:
(a) an air flow path from a dirty air inlet to a clean air outlet with a motor and fan assembly located in the air flow path;
(b) a cyclone located in the air flow path, the cyclone having a first end, an opposed second end, a cyclone axis of rotation that extends between the first and second ends, a sidewall located between the first and second ends, a cyclone air inlet, a cyclone air outlet and a first dirt outlet wherein a cyclone chamber is located internal of the sidewall between the first and second ends;
(c) a dirt collection chamber external to the cyclone chamber and in communication with the cyclone chamber via the first dirt outlet
   wherein the cyclone chamber has a non-circular cross-sectional area in a plane that is transverse to the cyclone axis of rotation, and
   wherein the first dirt outlet comprises an opening in the sidewall.

In accordance with this aspect, there is also provided a surface cleaning apparatus comprising:
(a) an air flow path from a dirty air inlet to a clean air outlet with a motor and fan assembly located in the air flow path;
(b) a cyclone located in the air flow path, the cyclone having a first end comprising a first end wall, an opposed second end, a cyclone axis of rotation that extends between the first and second ends, a sidewall located between the first and second ends, a cyclone air inlet, a cyclone air outlet and a first dirt outlet wherein a cyclone chamber is located internal of the sidewall between the first and second ends;
(c) a dirt collection chamber external to the cyclone chamber and in communication with the cyclone chamber via the first dirt outlet

wherein the cyclone chamber has a non-circular cross-sectional area in a plane that is transverse to the cyclone axis of rotation, and
wherein the first end wall is moveable between a closed position and an open position and the first dirt outlet comprises a spacing between at least a portion of the first end wall and the sidewall.

In accordance with another aspect of this disclosure, which may be used alone or in combination with any other aspect, a surface cleaning apparatus is provided with a cyclone wherein part or all of the cyclone has a non-circular cross-sectional area in a plane that is transverse to the cyclone axis of rotation and the dirt outlet is at an axial opposed end to the cyclone from the cyclone air inlet. For example, in operation, the air inlet and the air outlet may be at a lower end of the cyclone and the dirt outlet may be at an upper end of the cyclone. Alternately, in operation, the air inlet may be at an upper end of the cyclone and the dirt outlet may be at a lower end of the cyclone.

In accordance with this aspect, there is provided a surface cleaning apparatus comprising:
(a) an air flow path from a dirty air inlet to a clean air outlet with a motor and fan assembly located in the air flow path;
(b) a cyclone located in the air flow path, the cyclone having a first end, an opposed second end, a cyclone axis of rotation that extends between the first and second ends, a sidewall located between the first and second ends, a cyclone air inlet, a cyclone air outlet and a dirt outlet wherein a cyclone chamber is located internal of the sidewall between the first and second ends;
(c) a dirt collection chamber external to the cyclone chamber and in communication with the cyclone chamber via the dirt outlet

wherein the cyclone chamber has a non-circular cross-sectional area in a plane that is transverse to the cyclone axis of rotation, and
wherein the dirt outlet is located at the first end and the cyclone air inlet and the cyclone air outlet are located at the second end.

In accordance with this aspect, there is also provided a surface cleaning apparatus comprising:
(a) an air flow path from a dirty air inlet to a clean air outlet with a motor and fan assembly located in the air flow path;
(b) a cyclone located in the air flow path, the cyclone having a first end, an opposed second end, a cyclone axis of rotation that extends between the first and second ends, a sidewall located between the first and second ends, a cyclone air inlet, a cyclone air outlet and a dirt outlet wherein a cyclone chamber is located internal of the sidewall between the first and second ends;
(c) a dirt collection chamber external to the cyclone chamber and in communication with the cyclone chamber via the dirt outlet

wherein the cyclone chamber has a non-circular cross-sectional area in a plane that is transverse to the cyclone axis of rotation, and
wherein the dirt outlet and the cyclone air outlet are located at the first end and the cyclone air inlet is located at the second end.

In accordance with another aspect of this disclosure, which may be used alone or in combination with any other aspect, a surface cleaning apparatus is provided with a cyclone. The cyclone is defined by a sidewall and part or all of the cyclone sidewall has a non-circular cross-sectional area in a plane that is transverse to the cyclone axis of rotation and a dirt collection region is provided internal of the cyclone sidewall and laterally spaced from the cyclone axis of rotation.

In accordance with this aspect, there is provided a surface cleaning apparatus comprising:
(a) an air flow path from a dirty air inlet to a clean air outlet with a motor and fan assembly located in the air flow path;
(b) a cyclone located in the air flow path, the cyclone comprising a first end, an opposed second end, a cyclone air inlet, a cyclone air outlet and a longitudinally extending outer wall wherein an internal cavity is located internal of the outer wall and between the first and second ends, the outer wall having an inner surface, the internal cavity having, in transverse section, a cyclone portion in which air rotates when the cyclone is in use and a dirt collection portion spaced laterally from the cyclone portion and contiguous therewith, wherein the cyclone is configured to inhibit air rotating in the cyclone portion from entering the dirt collection portion.

In accordance with another aspect of this disclosure, which may be used alone or in combination with any other aspect, a surface cleaning apparatus is provided with a cyclone wherein part or all of the cyclone has a non-circular cross-sectional area in a plane that is transverse to the cyclone axis of rotation. An insert, which is air impermeable, is provided in the cyclone and an air outlet conduit (vortex finder) is provided interior the insert. The air outlet conduit is off center from the insert or the cyclone.

In accordance with this aspect, there is provided a surface cleaning apparatus comprising:
(a) an air flow path from a dirty air inlet to a clean air outlet with a motor and fan assembly located in the air flow path;
(b) a cyclone located in the air flow path, the cyclone comprising a first end, an opposed second end, a cyclone air inlet, a cyclone air outlet and a longitudinally extending cyclone sidewall; and,
(c) a longitudinally extending air impermeable insert positioned interior the cyclone sidewall, the insert having a first end, a second end and a longitudinally extending insert sidewall, wherein an air flow region is located between an inner surface of the cyclone sidewall and an outer surface of the insert sidewall,

wherein the second end of the insert is open to air flow therethrough and the cyclone air outlet is provided at the first end of the insert, and
wherein the air outlet is off center from a center of the insert.

In accordance with this aspect, there is also provided a surface cleaning apparatus comprising:
(a) an air flow path from a dirty air inlet to a clean air outlet with a motor and fan assembly located in the air flow path;
(b) a cyclone located in the air flow path, the cyclone comprising a first end, an opposed second end, a cyclone air inlet, a cyclone air outlet and a longitudinally extending cyclone sidewall; and,
(c) a longitudinally extending air impermeable insert positioned interior the cyclone sidewall, the insert having a first end, a second end and a longitudinally extending insert sidewall, wherein an air flow region is located between an inner surface of the cyclone sidewall and an outer surface of the insert sidewall,

wherein the second end of the insert is open to air flow therethrough and the cyclone air outlet is provided at the first end of the insert, and
wherein the insert is off center from a center of the cyclone sidewall.

In accordance with another aspect of this disclosure, which may be used alone or in combination with any other aspect, a surface cleaning apparatus is provided with a cyclone wherein part or all of the cyclone has a non-circular cross-sectional area in a plane that is transverse to the cyclone axis of rotation. An insert, which is air impermeable, is provided in the cyclone and an air outlet conduit (vortex finder) is provided interior the insert. The air outlet conduit contacts the inner surface of at least one portion of the insert.

In accordance with this aspect, there is provided a surface cleaning apparatus comprising:
(a) an air flow path from a dirty air inlet to a clean air outlet with a motor and fan assembly located in the air flow path;
(b) a cyclone located in the air flow path, the cyclone comprising a first end, an opposed second end, a cyclone air inlet, a cyclone air outlet and a longitudinally extending cyclone sidewall; and,
(c) a longitudinally extending air impermeable insert positioned interior the cyclone sidewall, the insert having a first end, a second end and a longitudinally extending insert sidewall, wherein an air flow region is located between an inner surface of the cyclone sidewall and an outer surface of the insert sidewall,

wherein the second end of the insert is open to air flow therethrough and the cyclone air outlet is provided at the first end of the insert, and
wherein the cyclone air outlet contacts an inner surface of the insert sidewall.

In accordance with another aspect of this disclosure, which may be used alone or in combination with any other aspect, a surface cleaning apparatus is provided with a cyclone wherein part or all of each of the cyclone and the cyclone air outlet (screen, vortex finder) has a non-circular cross-sectional area in a plane that is transverse to the cyclone axis of rotation.

In accordance with this aspect, there is provided a surface cleaning apparatus comprising:
(a) an air flow path from a dirty air inlet to a clean air outlet with a motor and fan assembly located in the air flow path; and
(b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends,

wherein the cyclone chamber has a non-circular cross-sectional area in a plane that is transverse to the cyclone axis of rotation, and
wherein the cyclone air outlet comprises a porous member extending into the cyclone chamber from the first end, and
wherein the cyclone air outlet has a non-circular cross-sectional area in a plane that is transverse to the cyclone axis of rotation.

In accordance with another aspect of this disclosure, which may be used alone or in combination with any other aspect, a surface cleaning apparatus is provided with a cyclone wherein part or all of the cyclone and has a non-circular cross-sectional area in a plane that is transverse to the cyclone axis of rotation. The cyclone air outlet (screen, vortex finder) is off center from the cyclone axis of rotation.

In accordance with this aspect, there is provided a surface cleaning apparatus comprising:
(a) an air flow path from a dirty air inlet to a clean air outlet with a motor and fan assembly located in the air flow path; and,
(b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends,

wherein the cyclone chamber has a non-circular cross-sectional area in a plane that is transverse to the cyclone axis of rotation, and
wherein the cyclone air outlet is off center from the cyclone axis of rotation.

In accordance with this aspect, there is also provided a surface cleaning apparatus comprising:
(a) an air flow path from a dirty air inlet to a clean air outlet with a motor and fan assembly located in the air flow path; and,
(b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends,
wherein the cyclone air outlet is off center from the cyclone axis of rotation.

In accordance with another aspect of this disclosure, which may be used alone or in combination with any other aspect, a hand vacuum cleaner is provided with a cyclone wherein part or all of the cyclone and has a non-circular cross-sectional area in a plane that is transverse to the cyclone axis of rotation. The non-circular portion has a long diameter and a shorter diameter transverse thereto and long diameter is oriented generally vertically when the hand vacuum cleaner is placed on a horizontal surface with the lower end of the hand vacuum cleaner on the horizontal surface. Accordingly, the cyclone of the hand vacuum cleaner may be taller than wider.

In accordance with this aspect, there is provided a hand vacuum cleaner comprising:
(a) an air flow path from a dirty air inlet, which is located at a front end of the hand vacuum cleaner, to a clean air outlet with a motor and fan assembly located in the air flow path;
(b) a cyclone located in the air flow path, the cyclone having a front end, an opposed rear end, a cyclone axis of rotation that extends between the front and rear ends of the cyclone, a cyclone air inlet, a cyclone air outlet, and a sidewall located between the first and second ends of the cyclone, wherein a cyclone portion in which air rotates when the hand vacuum cleaner is in use is located internal of the sidewall between the first and second ends; and,
(c) a handle having a hand grip portion,

wherein, when the hand vacuum cleaner is oriented with the cyclone axis of rotation extending horizontally, a plane extends centrally through a longitudinal length of the hand grip portion and transverse to the cyclone axis of rotation, and
wherein the sidewall has a non-circular cross-sectional area in the plane, the sidewall has a first diameter that is located in the plane and a second diameter that is located in the plane and the first diameter is greater than the second diameter and, when the hand vacuum cleaner is oriented with the plane extending vertically, the first diameter extends vertically and the second diameter extends transversely.

In accordance with another aspect of this disclosure, which may be used alone or in combination with any other aspect, a hand vacuum cleaner is provided with a cyclone wherein part or all of the cyclone and has a non-circular cross-sectional area in a plane that is transverse to the cyclone axis of rotation. The non-circular portion has a long diameter and a shorter diameter transverse thereto and long diameter is oriented generally horizontally when the hand vacuum cleaner is placed on a horizontal surface with the lower end of the hand vacuum cleaner on the horizontal surface. Accordingly, the cyclone of the hand vacuum cleaner may be wider than taller.

In accordance with this aspect, there is provided a hand vacuum cleaner comprising:
(a) an air flow path from a dirty air inlet, which is located at a front end of the hand vacuum cleaner, to a clean air outlet with a motor and fan assembly located in the air flow path;
(b) a cyclone located in the air flow path, the cyclone having a front end, an opposed rear end, a cyclone axis of rotation that extends between the front and rear ends of the cyclone, a cyclone air inlet, a cyclone air outlet, and a sidewall located between the first and second ends of the cyclone, wherein a cyclone portion in which air rotates when the hand vacuum cleaner is in use is located internal of the sidewall between the first and second ends; and,
(c) a handle having a hand grip portion,

wherein, when the hand vacuum cleaner is oriented with the cyclone axis of rotation extending horizontally, a plane extends centrally through a longitudinal length of the hand grip portion and transverse to the cyclone axis of rotation, and
wherein the sidewall has a non-circular cross-sectional area in the plane, the sidewall has a first diameter that is located in the plane and a second diameter that is located in the plane and the first diameter is greater than the second diameter and, when the hand vacuum cleaner is oriented with the plane extending vertically, the first diameter extends transversely and the second diameter extends vertically.

In accordance with another aspect of this disclosure, which may be used alone or in combination with any other aspect, an upright vacuum cleaner is provided with a cyclone wherein part or all of the cyclone and has a non-circular cross-sectional area in a plane that is transverse to the cyclone axis of rotation. The non-circular portion has a long diameter and a shorter diameter transverse thereto and long diameter is oriented generally laterally (side to side) when the upright vacuum cleaner is placed on a horizontal surface with the surface cleaning head of the upright vacuum cleaner on the horizontal surface. Accordingly, the cyclone of the upright vacuum cleaner may be wider than deeper.

In accordance with this aspect, there is provided an upright vacuum cleaner comprising:
(a) a surface cleaning head having a front end and a rear end;
(b) an upright section rotationally mounted at the rear end of the surface cleaning head and moveable between an upright storage position in which the upright section extends generally vertically from the surface cleaning head and a reclined in use position;
(c) an air flow path from a dirty air inlet, which is provided at the front end of the surface cleaning head, to a clean air outlet with a motor and fan assembly located in the air flow path; and,
(d) a cyclone provided on the upright section and located in the air flow path, the cyclone having a cyclone air inlet, a cyclone air outlet and a sidewall located between the first and second ends of the cyclone and, when the upright section is in the storage position, the cyclone has an upper end, an opposed lower end and a cyclone axis of rotation that extends between the upper and lower ends, wherein a cyclone portion in which air rotates when the upright vacuum cleaner is in use is located internal of the sidewall between the upper and lower ends,

wherein, when the upright vacuum cleaner is oriented with the cyclone axis of rotation extending vertically, the sidewall has a non-circular cross-sectional area in a horizontal plane, the sidewall has a first diameter that is located in the plane and a second diameter that is located in the plane and the first diameter is greater than the second diameter, and
the second diameter extends in a forward/rearward direction and the second diameter extends transversely.

It will be appreciated by a person skilled in the art that an apparatus or method disclosed herein may embody any one or more of the features contained herein and that the features may be used in any particular combination or sub-combination.

These and other aspects and features of various embodiments will be described in greater detail below.

### BRIEF DESCRIPTION OF THE DRAWINGS

For a better understanding of the described embodiments and to show more clearly how they may be carried into effect, reference will now be made, by way of example, to the accompanying drawings in which:
Figure 1 is a perspective view of an example surface cleaning apparatus, the surface cleaning apparatus being an upright vacuum cleaner;
Figure 2 is a rear perspective view of the surface cleaning apparatus of Figure 1;
Figure 3A is a vertical perspective cross-sectional view of the cleaning unit of the of the surface cleaning apparatus of Figure 1;
Figure 3B is a vertical cross-sectional view of the cyclone bin assembly of the surface cleaning apparatus of Figure 1;
Figure 4 is a side view of the surface cleaning apparatus of Figure 1 wherein the cyclone bin assembly is being removed;
Figure 5A is a perspective view of the surface cleaning apparatus of Figure 1 in an above floor cleaning mode;
Figure 5B is a perspective view of the surface cleaning apparatus of Figure 1 in another above floor cleaning mode;
Figure 5C is a perspective view of the surface cleaning apparatus of Figure 1 in another floor cleaning mode;
Figure 6 is a front perspective view of a stick type vacuum cleaner with a removable hand vacuum cleaner;
Figure 7 is a rear perspective view of the surface cleaning apparatus of Figure 6;
Figure 8 is a vertical cross-sectional view of the hand vacuum cleaner of Figure 6 while mounted to the rigid wand;
Figure 9A is a front perspective view of the surface cleaning apparatus of Figure 6 in an above floor cleaning mode;
Figure 9B is a front perspective view of the surface cleaning apparatus of Figure 6 in another above floor cleaning mode;
Figure 10 is a front perspective view of another stick type vacuum cleaner with a removable hand vacuum cleaner;
Figure 11 is a rear perspective view of the surface cleaning apparatus of Figure 10;
Figure 12A is a horizontal cross-sectional view of the upright vacuum cleaner of Figure 1 wherein the upright vacuum cleaner has an ovaloid cyclone with a laterally extending major dimension;
Figure 12B is a horizontal cross-sectional view of the upright vacuum cleaner of Figure 1 wherein the upright vacuum cleaner has an ovaloid cyclone with a major dimension extending in a forward/rearward direction;
Figure 12C is a horizontal cross-sectional view of the upright vacuum cleaner of Figure 1 wherein the upright vacuum cleaner has a rectangular shaped cyclone with rounded end with a laterally extending major dimension;
Figure 12D is a horizontal cross-sectional view of the upright vacuum cleaner of Figure 1 wherein the upright vacuum cleaner has a nautiloid cyclone;
Figure 12E is a horizontal cross-sectional view of the upright vacuum cleaner of Figure 1 wherein the upright vacuum cleaner has an ellipsoidal cyclone with a laterally extending major dimension and a forward facing dirt outlet;
Figure 12F is a horizontal cross-sectional view of the upright vacuum cleaner of Figure 1 wherein the upright vacuum cleaner has an ovaloidal cyclone portion spaced laterally from a dirt collection portion;
Figure 13A is a perspective view of the cyclone bin assembly of the hand vacuum cleaner of Figure 6;
Figure 13B is a cross-sectional view, in a plane transverse to the cyclone axis of rotation, of the example cyclone bin assembly of Figure 13A;
Figure 14A is a perspective view of the cyclone bin assembly of the hand vacuum cleaner of Figure 10;
Figure 14B is a cross-sectional view, in a plane transverse to the cyclone axis of rotation, of the example cyclone bin assembly of Figure 14A;
Figure 15A is a perspective cross-sectional view of an alternate cyclone bin assembly of the surface cleaning apparatus of Figure 1 having a cylindrical vortex finder and a lower air inlet;
Figure 15B is a perspective cross-sectional view of a further alternate cyclone bin assembly of the example surface cleaning apparatus of Figure 1 having a frusto-conical vortex finder and a lower air inlet;
Figure 15C is a perspective cross-sectional view of a further alternate cyclone bin assembly of the example surface cleaning apparatus of Figure 1 having a conical vortex finder and a lower air inlet;
Figure 16A is a horizontal cross-sectional view of an alternate cyclone bin assembly of the surface cleaning apparatus of Figure 1 having an off center ovaloid vortex finder;
Figure 16B is a horizontal cross-sectional view of a further alternate cyclone bin assembly of the surface cleaning apparatus of Figure 1 having an off center rectangular vortex finder with rounded ends;
Figure 16C is a horizontal cross-sectional view of a further alternate cyclone bin assembly of the surface cleaning apparatus of Figure 1 having a nautiloid vortex finder;
Figure 17A is a perspective cross-sectional view of a further alternate cyclone bin assembly of the surface cleaning apparatus of Figure 1 having an ovaloid insert in a plane transverse to the cyclone axis of rotation;
Figure 17B is a horizontal cross-sectional view of a further alternate cyclone bin assembly of Figure 17A having an ovaloid insert;
Figure 17C is a horizontal cross-sectional view of a further alternate cyclone bin assembly of the surface cleaning apparatus of Figure 1 having a rectangular insert with rounded ends;
Figure 17D is a perspective cross-sectional view of a further alternate cyclone bin assembly of the surface cleaning apparatus of Figure 1 having an ovaloid insert with an open first end in a plane parallel to the cyclone axis of rotation;
Figure 17E is a cross-sectional view of a further alternate cyclone bin assembly of the example surface cleaning apparatus of Figure 1 having an ovaloid insert with a screened first end in a plane parallel to the cyclone axis of rotation;
Figure 18A is a perspective view of a further alternate cyclone of the surface cleaning apparatus of Figure 1 having an ovaloid cyclone air outlet;
Figure 18B is a schematic horizontal cross-sectional view, in a plane transverse to the cyclone axis of rotation, of the cyclone of Figure 18A;
Figure 19A is a perspective view of a further alternate cyclone of the surface cleaning apparatus of Figure 1 having a rectangular cyclone air outlet with rounded ends;
Figure 19B is a schematic horizontal cross-sectional view, in a plane transverse to the cyclone axis of rotation, of the cyclone of Figure 19A;
Figure 20A is a perspective view of a further alternate cyclone of the example surface cleaning apparatus of Figure 1 having a nautiloid cyclone air outlet;
Figure 20B is a schematic horizontal cross-sectional view, in a plane transverse to the cyclone axis of rotation, of the cyclone of Figure 20A;
Figure 21A is a perspective view of a further alternate cyclone of the surface cleaning apparatus of Figure 1, wherein the air outlet has one point of contact with the insert;
Figure 21B is a schematic horizontal cross-sectional view, in a plane transverse to the cyclone axis of rotation, of the cyclone of Figure 21A;
Figure 22A is a perspective view of a further alternate cyclone of the surface cleaning apparatus of Figure 1, wherein the air outlet has two points of contact with the insert;
Figure 22B is a schematic horizontal cross-sectional view of the cyclone of Figure 22A in a plane transverse to the cyclone axis of rotation;
Figure 23A is a horizontal cross-sectional view of a further alternate cyclone bin assembly of the surface cleaning apparatus of Figure 1 having a constant air flow region;
Figure 23B is a horizontal cross-sectional view of a further alternate cyclone bin assembly of the surface cleaning apparatus of Figure 1 having a continuously decreasing air flow region;
Figure 23C is an enlargement of the cyclone of Figure 23A;
Figure 24A is a perspective view of a further alternate cyclone bin assembly of the surface cleaning apparatus of Figure 1 having a tangential air inlet at a second, lower, end of the cyclone;
Figure 24B is a perspective cross-sectional view, in a plane transverse to the cyclone axis of rotation, of the cyclone bin assembly of Figure 24A;
Figure 25A is a perspective view of a further alternate cyclone bin assembly of the surface cleaning apparatus of Figure 1 having an axial air inlet at a first, upper, end of the cyclone;
Figure 25B is a perspective cross-sectional view, in a plane transverse to the cyclone axis of rotation, of the cyclone bin assembly of Figure 25A;
Figure 26A is a perspective view of a further alternate cyclone bin assembly of the surface cleaning apparatus of Figure 1 having a non-circular tangential air inlet at the first end of the cyclone;
Figure 26B is a perspective cross-sectional view, in a plane transverse to the cyclone axis of rotation, of the cyclone bin assembly of Figure 26A;
Figure 27A is a perspective vertical cross-sectional view, in a plane parallel to the cyclone axis of rotation, of the cyclone bin assembly of Figure 15A being emptied;
Figure 27B is a perspective vertical cross-sectional view, in a plane parallel to the cyclone axis of rotation, of the cyclone bin assembly of Figure 15B being emptied;
Figure 27C is a perspective vertical cross-sectional view, in a plane parallel to the cyclone axis of rotation, of the cyclone bin assembly of Figure 15C being emptied;
Figure 28A is a perspective vertical cross-sectional view of a further alternate cyclone bin assembly of the surface cleaning apparatus of Figure 1 having two laterally opposed dirt outlets;
Figure 28B is a perspective vertical cross-sectional view, in a plane parallel to the cyclone axis of rotation, of the cyclone bin assembly of Figure 20A being emptied;
Figure 29A is a perspective cross-sectional view of the cyclone bin assembly of Figure 12E in a plane transverse to the cyclone axis of rotation;
Figure 29B is a perspective cross-sectional view, in a plane parallel to the cyclone axis of rotation, of the example cyclone bin assembly of Figure 12E;
Figure 29C is a perspective cross-sectional view, in a plane parallel to the cyclone axis of rotation, of the example cyclone bin assembly of Figure 12E being emptied;
Figure 30A is a perspective cross-section view, in a plane parallel to the cyclone axis of rotation, of the example cyclone bin assembly of Figure 13A;
Figure 30B is a perspective cross-section view, in a plane parallel to the cyclone axis of rotation, of the example cyclone bin assembly of Figure 13A being emptied;
Figure 31 is a perspective cross-sectional view, in a plane parallel to the cyclone axis of rotation, of a further alternate cyclone bin assembly of the example surface cleaning apparatus of Figure 6 having an upwardly facing dirt outlet and a downwardly facing dirt outlet at the first end;
Figure 32 is a perspective cross-sectional view, in a plane parallel to the cyclone axis of rotation, of a further alternate cyclone bin assembly of the surface cleaning apparatus of Figure 6 having an upwardly facing dirt outlet and a downwardly facing dirt outlet at the second end;
Figure 33A is a perspective horizontal cross-section view, in a plane transverse to the cyclone axis of rotation, of the example cyclone bin assembly of Figure 12F;
Figure 33B is a perspective horizontal cross-section view, in a plane transverse to the cyclone axis of rotation, of the example cyclone bin assembly of Figure 12F being emptied;
Figure 33C is a perspective horizontal cross-section view, in a plane transverse to the cyclone axis of rotation, of the cyclone bin assembly of Figure 12F having a downstream deflecting member;
Figure 33D is a perspective horizontal cross-section view, in a plane transverse to the cyclone axis of rotation, of the cyclone bin assembly of Figure 12F having an upstream deflecting member;
Figure 33E is a perspective horizontal cross-section view, in a plane transverse to the cyclone axis of rotation, of the cyclone bin assembly of Figure 12F wherein an innermost point of the downstream deflecting member extends farther from an inner surface of a cyclone bin assembly sidewall than an innermost point of the upstream deflecting member; and,
Figure 34 is a cross-section, in a plane transverse to the cyclone axis of rotation, of a circular cyclone with a circular vortex finder wherein the axis of the vortex finder is coincident with the cyclone axis of rotation.

The drawings included herewith are for illustrating various examples of articles, methods, and apparatuses of the teaching of the present specification and are not intended to limit the scope of what is taught in any way.

### DESCRIPTION OF VARIOUS EMBODIMENTS

Various apparatuses, methods and compositions are described below to provide an example of an embodiment of each claimed invention. No embodiment described below limits any claimed invention and any claimed invention may cover apparatuses and methods that differ from those described below. The claimed inventions are not limited to apparatuses, methods and compositions having all of the features of any one apparatus, method or composition described below or to features common to multiple or all of the apparatuses, methods or compositions described below. It is possible that an apparatus, method or composition described below is not an embodiment of any claimed invention. Any invention disclosed in an apparatus, method or composition described below that is not claimed in this document may be the subject matter of another protective instrument, for example, a continuing patent application, and the applicant(s), inventor(s) and/or owner(s) do not intend to abandon, disclaim, or dedicate to the public any such invention by its disclosure in this document.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

As used herein and in the claims, two or more parts are said to be "coupled", "connected", "attached", or "fastened" where the parts are joined or operate together either directly or indirectly (i.e., through one or more intermediate parts), so long as a link occurs. As used herein and in the claims, two or more parts are said to be "directly coupled", "directly connected", "directly attached", or "directly fastened" where the parts are connected in physical contact with each other. None of the terms "coupled", "connected", "attached", and "fastened" distinguish the manner in which two or more parts are joined together.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures, and components have not been described in detail so as not to obscure the example embodiments described herein. Also, the description is not to be considered as limiting the scope of the example embodiments described herein.

### General Description of an Upright Vacuum Cleaner

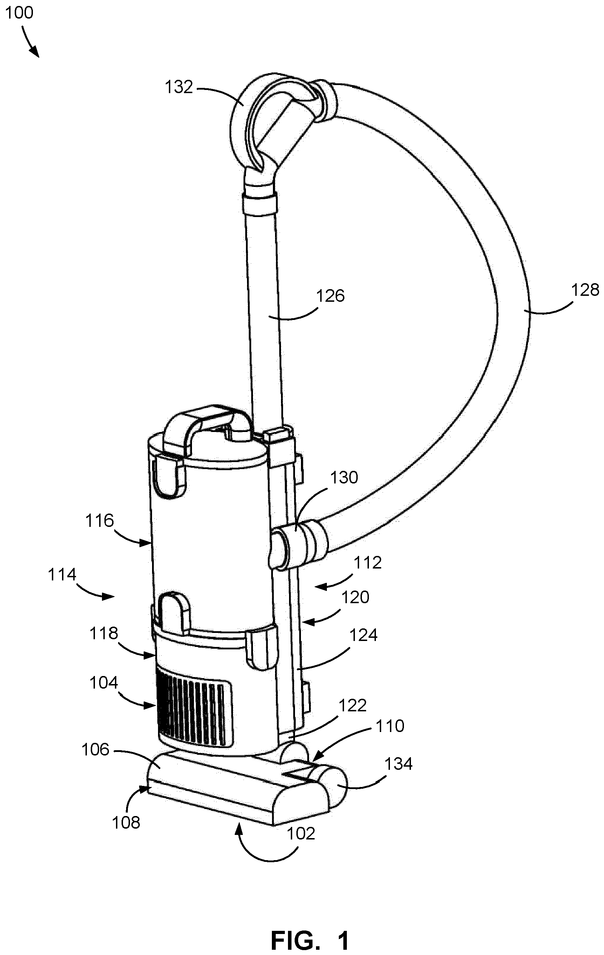

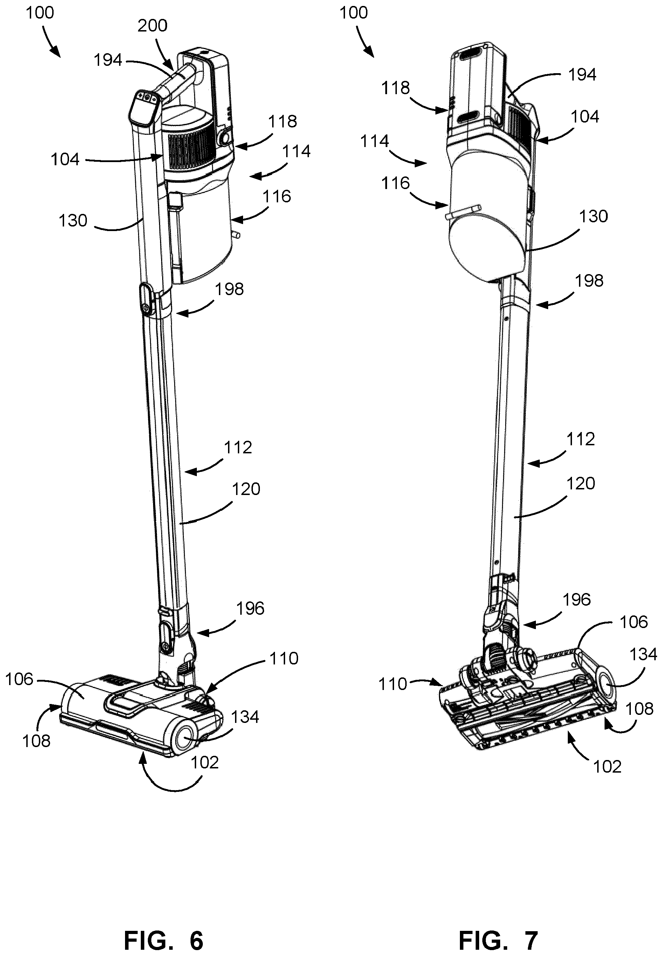

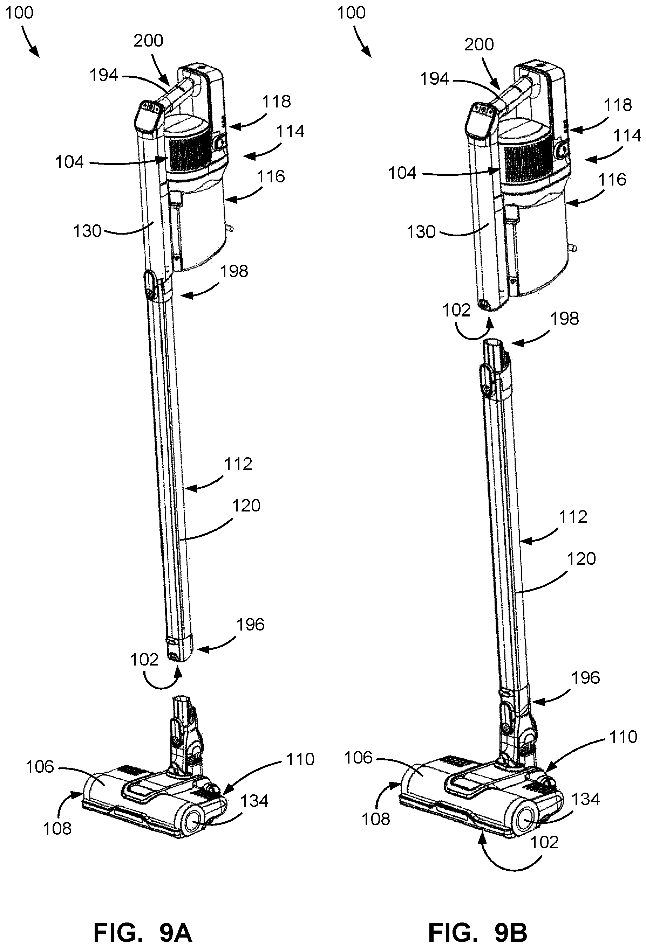

Several aspects of this specification are exemplified in the upright vacuum cleaner which is shown in Figures 1-5. It will be appreciated that any of that, in alternate embodiments, any surface cleaning apparatus, such as a such as a canister vacuum cleaner, a hand vacuum cleaner (see for example Figures 9A and 9B), a stick vac (see for example Figures 6 and 7), a wet-dry vacuum cleaner or a carpet extractor, may contain one or more of the aspects disclosed herein.

As exemplified in Figure 1, the surface cleaning apparatus 100 has an air flow path from a dirty air inlet 102 to a clean air outlet 104. In the example shown, the dirty air inlet 102 is provided in a surface cleaning head 106, shown to be a floor cleaning head. The surface cleaning head 106 has a front end 108 and a rear end 110 space apart in a forward/rearward direction. The dirty air inlet 102 is provided at the front end 108 of the surface cleaning head 106. The surface cleaning apparatus 100 further has an upright section 112 rotationally mounted at the rear end 110 of the surface cleaning head 106. In the example shown, the upright section 112 has a cleaning unit 114 including a cyclone bin assembly 116 and a suction unit 118. From the dirty air inlet 102, the airflow path extends through the surface cleaning head 106, through an air conduit 120, through the cyclone bin assembly 116 and the suction unit 118 of cleaning unit 114, to the clean air outlet 104 provided in the suction unit 118. It will be appreciated that any surface cleaning head known in the art may be used.

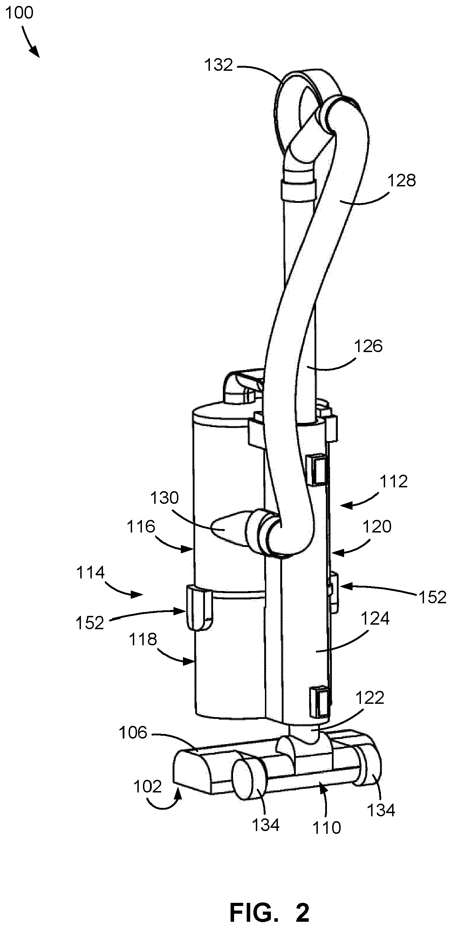

Referring to Figure 2, showing a rear view of the example surface cleaning apparatus 100, the air conduit 120 includes a pivoting joint member 122 connected to the surface cleaning head 106, a lower upflow duct 124, an upper upflow duct 126, a flexible airflow conduit member 128, such as a hose, and cyclone bin assembly inlet conduit 130 in airflow communication with the cyclone bin assembly 116.

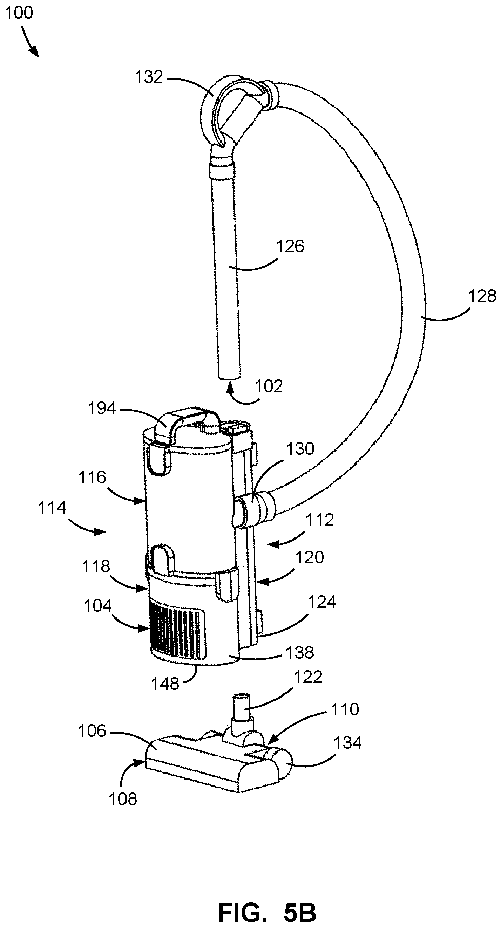

Optionally, as exemplified, the cleaning unit 114 may be a portable cleaning unit that is removable and useable to clean a surface (a portable configuration as discussed subsequently). As exemplified in Figure 5B, the portable cleaning unit 114 may be removably mounted to the pivoting joint member 122. A handle 132 is provided on the upper upflow duct 126 to facilitate manipulation of the surface cleaning apparatus 100 by a user when the cleaning unit 114 is mounted to the pivoting joint member 122 (the upright vacuum cleaner configuration). It will be appreciated that the portable cleaning unit 114 may be removably mounted in any way known in the art.

As exemplified, the upright section 112 includes the lower upflow duct 124, to which the cyclone bin assembly 116 and suction unit 118 is removably mounted. The pivoting joint member 122 may have sufficient structural strength and rigidity to support the cyclone bin assembly 116 and suction unit 118, and the lower upflow duct 124, upper upflow duct 126, and handle 132 may each have sufficient structural strength and rigidity to enable controlled manipulation of the surface cleaning apparatus 100 when in the upright vacuum cleaner configuration. As exemplified, the lower upflow duct 124 may be part of the housing of the portable cleaning unit and may function as a mount to connect the upper upflow duct 126 in flow communication with the dirty air in via the pivoting joint member 122.

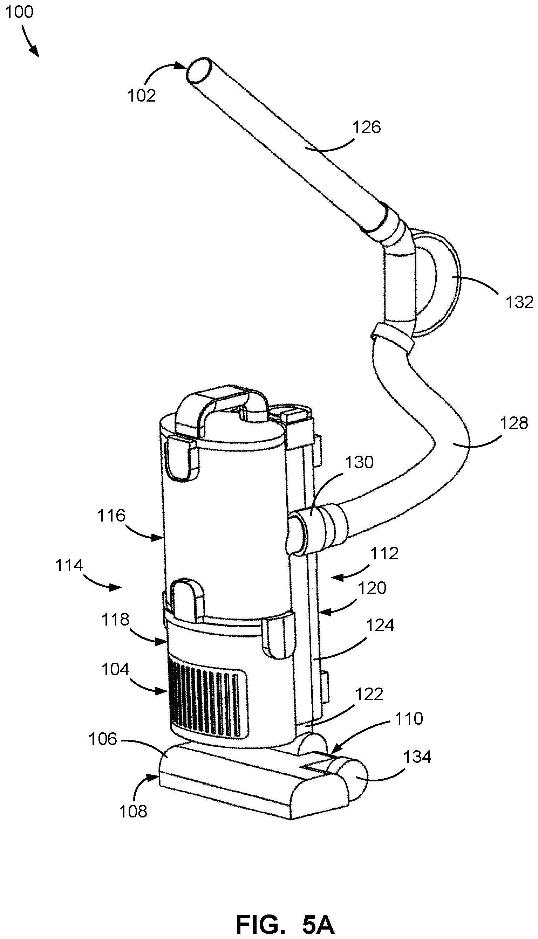

The surface cleaning apparatus may also have an above floor cleaning configuration as discussed subsequently. As exemplified in Figure 5A, the upper upflow duct 126 is releasably coupled at one end to the lower upflow duct 124 and useable as an above floor cleaning wand.

In Figures 1 and 2, the surface cleaning apparatus 100 is in an upright storage position in which the upright section 112 extends generally vertically from the surface cleaning head 106. The upright section 112 is moveable, such as rotatable, with respect to the surface cleaning head 106 between the upright storage position and a reclined in use position. A pair of wheels 134 are provided at laterally opposed sides at the rear end 110 of the surface cleaning head 106. Optionally, one or more additional wheels may be provided on the surface cleaning head 106 such as, for example, and the front end 108 thereof.

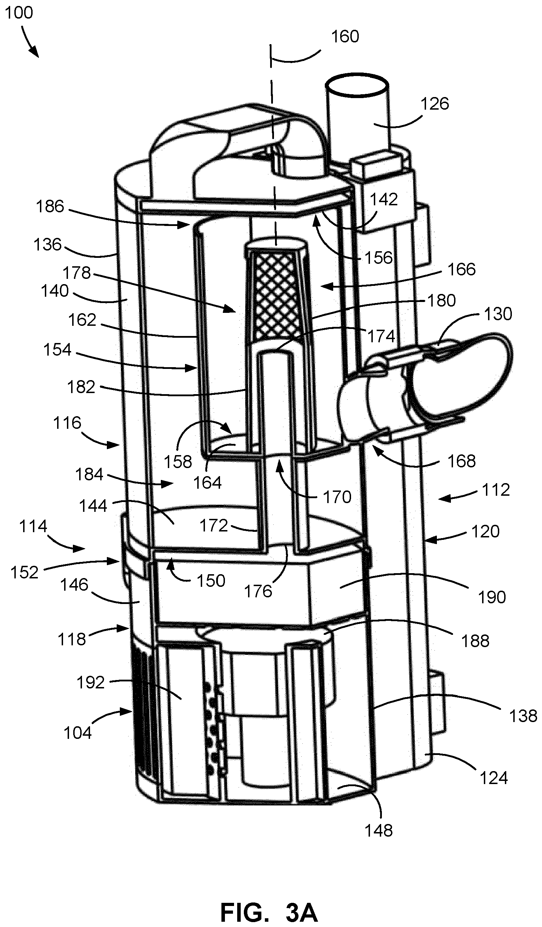

Referring now to Figure 3A, showing a cross-section of the cleaning unit 114 of the example surface cleaning apparatus 100, the cyclone bin assembly 116 includes a housing 136, and the suction unit 118 includes a housing 138. The housing 136 of the cyclone bin assembly 116 includes a sidewall 140, a top wall 142, and a bottom wall 144. The housing 138 of the suction unit 118 includes a sidewall 146, a bottom wall 148, and an open top 150. Optionally, as exemplified, the cyclone bin assembly housing 136 is removably mounted to the suction unit housing 138 such that the bottom wall 144 seals the open top 150. The cyclone bin assembly housing 136 may be removably mounted as part of the portable cleaning unit 114, such as by one or more latch members 152 which secure the cyclone bin assembly housing 136 to the suction unit 118. It will be appreciated that, optionally, the cyclone bin assembly is removable from the suction unit 118 when the portable cleaning unit 114 is in the portable configuration and also in the upright vacuum cleaner configuration.

The cyclone bin assembly may comprise one or more cyclonic stages, each of which may comprise one cyclone or a plurality of cyclones in parallel. Any cyclone known in the art may be used, such as an inverted or uniflow cyclone. As exemplified in Figure 3A, the housing 136 of the cyclone bin assembly 116 houses a cyclone 154 which is positioned in the airflow path. The cyclone 154 has a first end 156 and an opposed second end 158. A cyclone axis of rotation 160 extends between the first and second ends 156, 158. The cyclone 154 further has a sidewall 162, shown to be generally cylindrical, extending between the first and second ends 156, 158. When the upright section 112 is in the storage position, the first end 156 of the cyclone 154 is an upper end, the opposed second end 158 is a lower end, and the cyclone axis of rotation 160 and sidewall 162 extend vertically. As discussed subsequently, in accordance with an aspect, the cyclone 154 may have a non-circular cross-sectional area in a plane transverse to the cyclone axis of rotation 160. In the example shown, the first end 156 of the cyclone 154 is an open end positioned adjacent the top wall 142 of the housing 136 of the cyclone bin assembly 116, and the second end 158 is closed and includes a lower wall 164. The sidewall 162 and the first and second ends 156, 158 of the cyclone 154 define a cyclone chamber 166 in the internal volume of the cyclone 154.

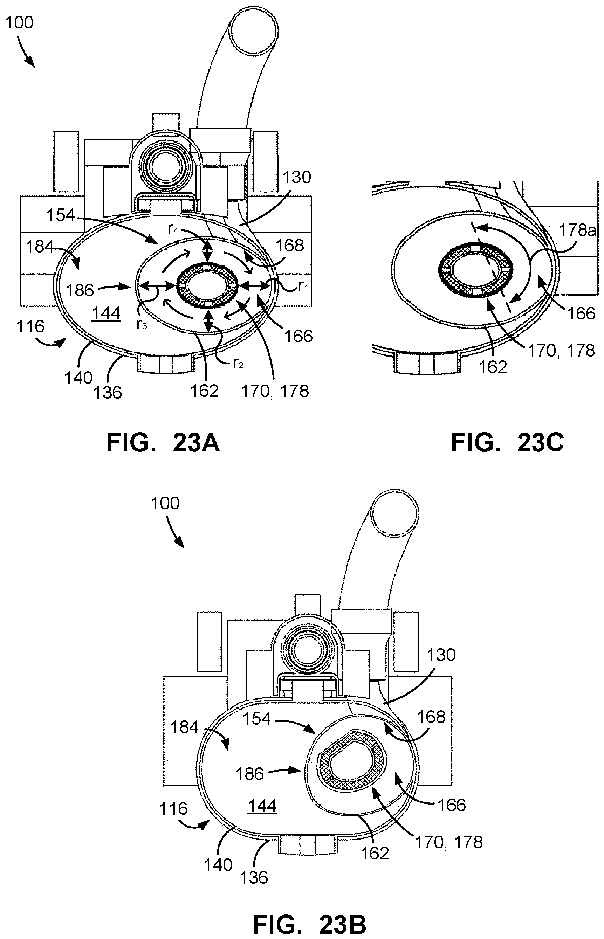

The cyclone 154 has a cyclone air inlet 168 and a cyclone air outlet 170. The cyclone air inlet 168 provides fluid flow communication from the cyclone bin assembly inlet conduit 130, through the sidewall 140 of the cyclone bin assembly housing 136, to the cyclone chamber 166 of the cyclone 154. The cyclone air outlet 170 includes an air outlet conduit 172 extending parallel to, and optionally centered on, the axis 160. The air outlet conduit 172 extends from a first end 174 that is positioned within the cyclone chamber 166, through the lower wall 164, to a second end 176 that is in communication with an interior of the suction unit housing 138. Optionally, the cyclone air outlet 170 comprises or consists of a vortex finder 178 positioned at (e.g., over, around) the air outlet conduit 172 or extending from the first end 174 of the air outlet conduit 172. As discussed subsequently, in accordance with an aspect, the air outlet 170 and/or vortex finder 178 may have a non-circular cross-sectional area in a plane transverse to the cyclone axis of rotation 160. In the example shown, the air outlet 170 includes a vortex finder 178 having a porous portion 180 and a solid portion 182 positioned over the portion of the air outlet conduit 172 within the cyclone chamber 166. It will be appreciated that outlet conduit 172 may not be positioned in the vortex finder, e.g., it may commence at an outlet port in lower wall 164, which may be the same diameter as the lower end of the vortex finder. Accordingly, the vortex finder may therefore be upstream of the outlet conduit 172. It will be appreciated that the solid portion may extend only partway around the axis of the vortex finder 178. For example, as exemplified in Figure 23C, the portion 178a of the vortex finder which is located at the air inlet 168 is solid. The remainder of the vortex finder angularly spaced around the axis from solid portion 178a may be porous.

The cyclone chamber 166 may be configured such that the cyclone air inlet 168 and the cyclone air outlet 170 are positioned toward the same axial end of the cyclone chamber 166 and the dirt outlet is at the opposed end. If the cyclone axis extends vertically or generally vertically in use, such as with an upright vacuum cleaner or a stick vacuum cleaner, then the cyclone air inlet 168 and the cyclone air outlet 170 may be located at the lower or second end 158, the dirt outlet 186 is at the opposed end 156 and the cyclone may be referred to as an inverted cyclone.

Alternatively, the cyclone chamber 166 may be configured with the cyclone air inlet 168 and the cyclone air outlet 170 at opposed axial ends 156, 158 of the cyclone chamber 166 and may be referred to as a uniflow cyclone chamber.

In any cyclone, the cyclone air inlet 168 may be a tangential air inlet that introduces dirty air into the cyclone chamber 166 in the plane that is transverse to the cyclone axis of rotation 160 through the sidewall 162 of the cyclone 154 or an axial air inlet that introduces air through an end wall before the air is redirected to form cyclonic air flow.

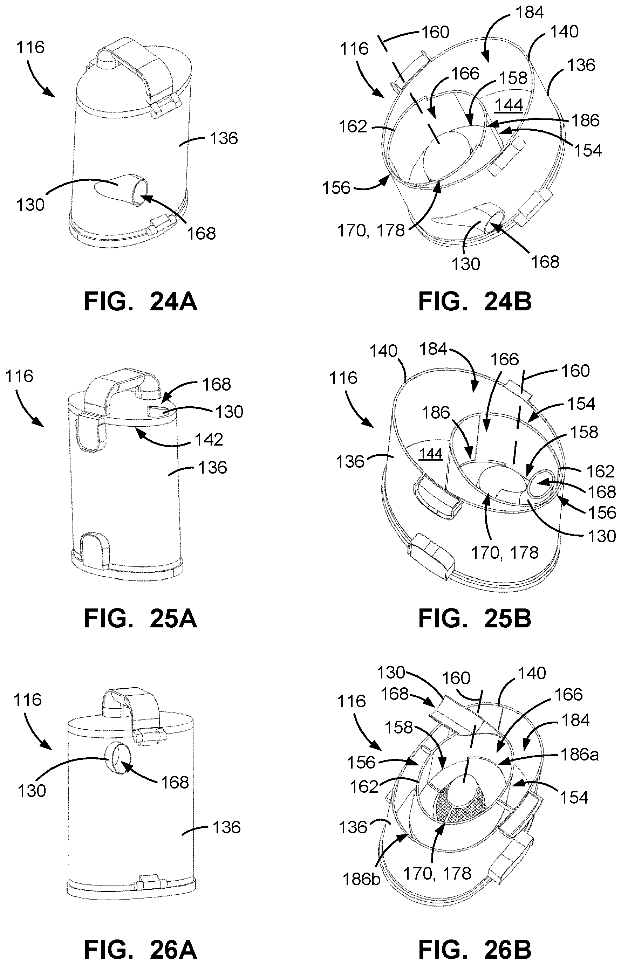

As exemplified in Figures 24A and 24B, the cyclone 154 is an inverted cyclone wherein the cyclone air inlet 168 is a tangential air inlet at the second end 158 of the cyclone 154, the cyclone air outlet 170 is provided at the second end 158 of the cyclone, and the dirt outlet 186 is at the first end 156 of the cyclone 154. The cyclone bin assembly inlet conduit 130 passes through the sidewall 140 of the cyclone bin assembly 116 and the sidewall 162 of the cyclone 154 to introduce dirty air tangentially into the cyclone chamber 166.

As exemplified in Figures 25A and 25B, the cyclone 154 is a uniflow cyclone wherein the cyclone air inlet 168 is an axial air inlet provided at the first end 156 of the cyclone 154, and the cyclone air outlet 170 and dirt outlet 186 are provided at the second end 158 of the cyclone. The cyclone bin assembly inlet conduit 130 passes through the top wall 142 of the cyclone bin assembly 116 in the direction of the cyclone axis of rotation 160 into the cyclone chamber 166. The cyclone bin assembly inlet conduit 130 includes a bend to introduce dirty air tangentially into the cyclone chamber 166.

As exemplified in Figures 26A and 26B, the cyclone 154 is a uniflow cyclone wherein the cyclone air inlet 168 is a tangential air inlet at the first end 156 of the cyclone 154, the cyclone air outlet 170 is provided at the second end 158 of the cyclone, and first and second dirt outlets 186a, 186b are provided at laterally opposed sides of the second end 158 of the cyclone 154.

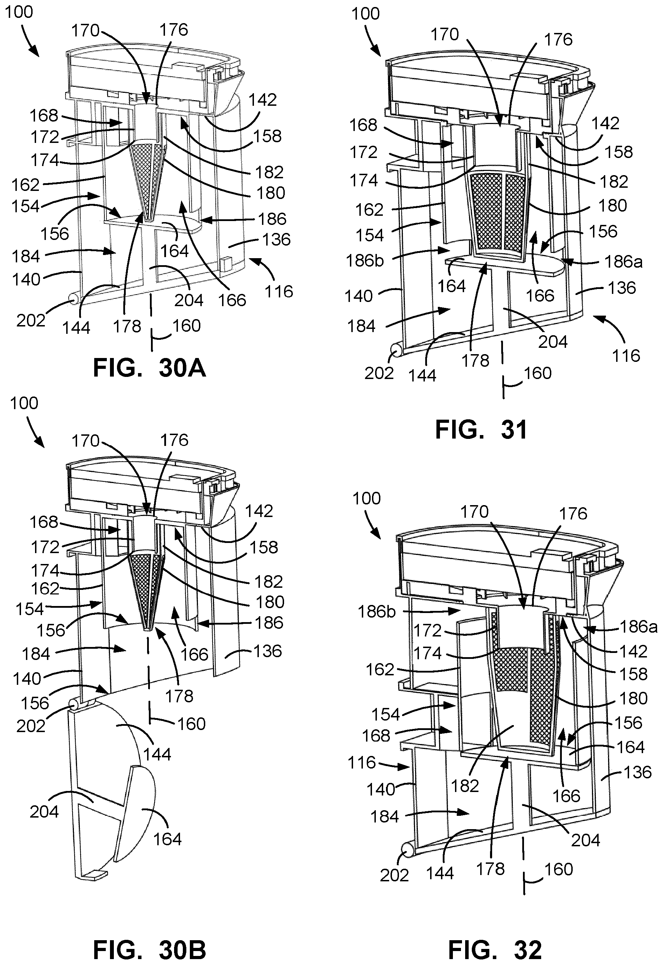

In the examples illustrated in Figures 24A to 26B, the surface cleaning apparatus 100 is an upright vacuum. It will be appreciated that similar configuration may be applied to other types of surface cleaning apparatuses, such as hand or stick type vacuums. For example, Figures 31 and 32 (described in greater detail subsequently) respectively show an inverted cyclone wherein the cyclone air inlet 168 is a tangential air inlet at the second end 158 (rear end adjacent rear wall 142) and a uniflow cyclone wherein the cyclone air inlet 168 is a tangential air inlet at the first end 156 (front end adjacent front wall 164).

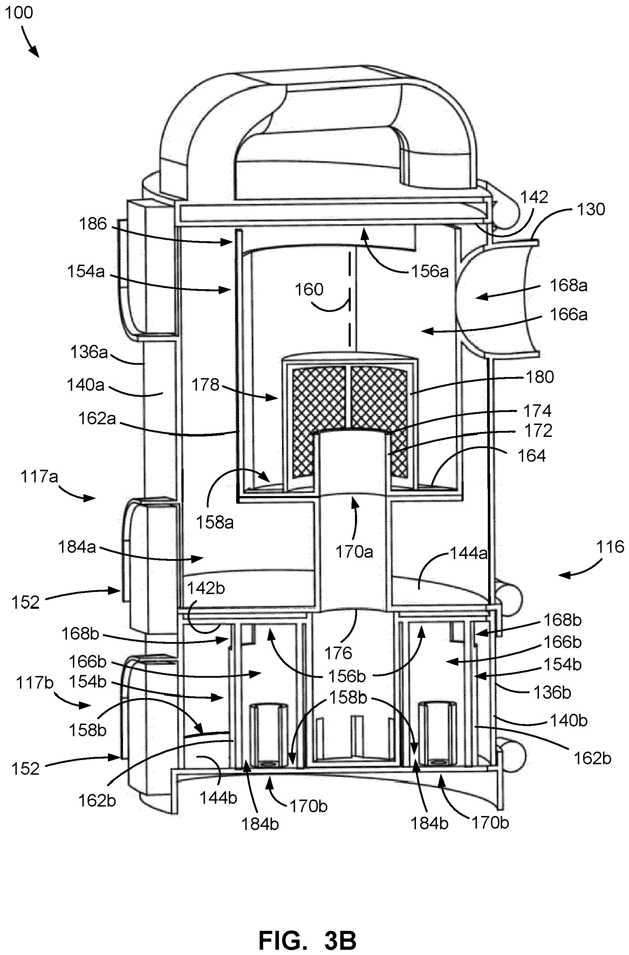

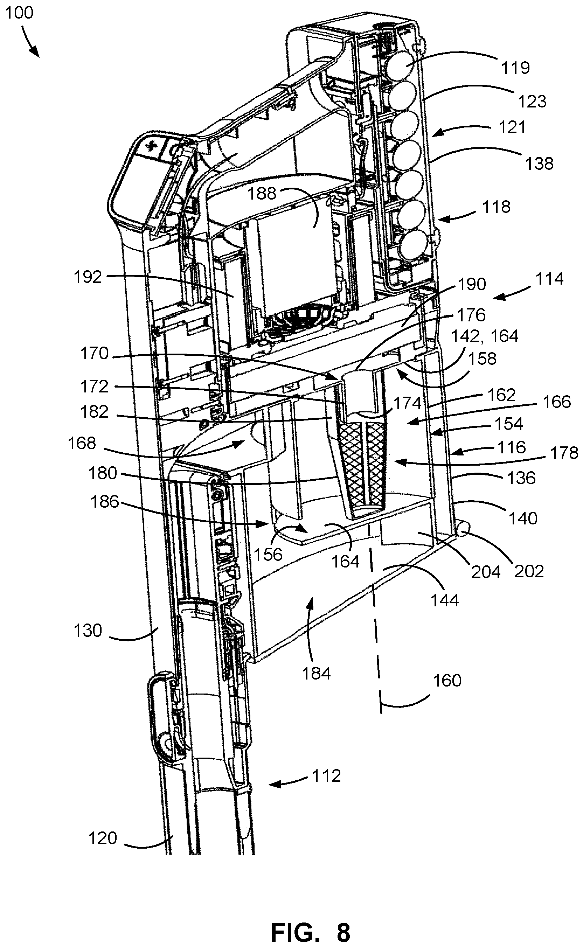

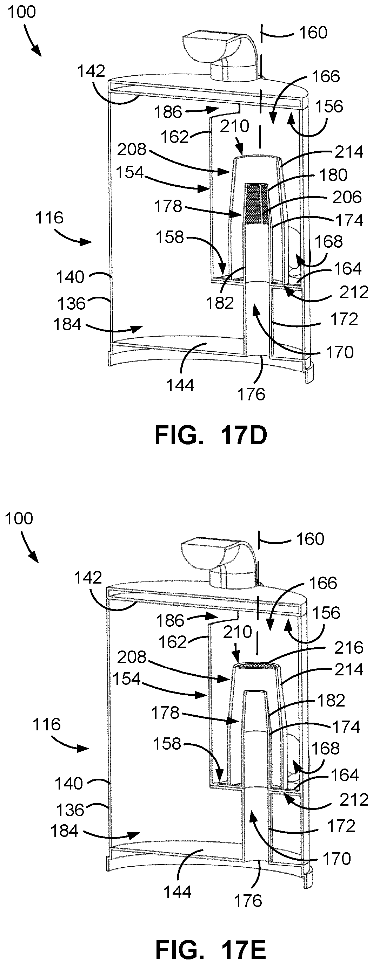

As exemplified in Figures 3A, 3B, 8 15A and 15B, the vortex finder overlies a portion of the outlet conduit 172, i.e., a portion of the outlet conduit is located within the vortex finder 178. Alternately, as exemplified in Figures 17E and 17F, the vortex finder 178 is positioned at the inlet of the air outlet conduit 172. As exemplified, the solid portion 182 of the vortex finder 178 is the portion of the air outlet conduit 172 that extends into the interior of an optional insert 208, which is discussed subsequently. The porous portion 180 extends from the first end 174 of the air outlet conduit 172.

Particulate material, e.g., dirt, which is entrained in an air stream entering the cyclone is collected in a dirt collection region. The dirt collection region may be a portion of the cyclone chamber, e.g., a lower end thereof and/or a dirt collection chamber may be provided external to the cyclone chamber. As exemplified in Figure 3A and as discussed subsequently, a dirt collection chamber surrounds a portion of the cyclone. It will be appreciated that any dirt collection chamber known in the art may be used.

In the alternate embodiment of Figure 3B, the cyclone bin assembly 116 includes a first cyclonic stage 117a and a second cyclonic stage 117b positioned downstream of, e.g., below, the first cyclonic stage 117a. The bottom wall 144a of the first cyclonic stage 117a may be removably mounted to the top wall 142b of the second cyclonic stage 117b. From the cyclone chamber 166a of the first cyclone 154a of the first cyclonic stage 117a, air is directed out of cyclone air outlet 170a and into a plurality of second stage cyclones 154b arranged in parallel in the second cyclonic stage 117b. Each second stage cyclone 154b has a cyclone axis of rotation 160b extending vertically when the surface cleaning apparatus is in the upright position. Each second stage cyclone 154b has an air inlet 168b provided at the first end 156b in fluid communication with cyclone air outlet 170a, and an air outlet 170b provided at the second end 158b in fluid communication with the suction motor downstream in the suction motor housing (not shown). Each second stage cyclone 154b includes a cyclone chamber 166b and a dirt collection region 184b. The plurality of second stage cyclones 154b may remove particulate matter finer than the particulate matter that is removed in the first cyclonic cleaning stage 117a. Accordingly, the coarsest particulate matter that is entrained in an air stream may be removed in the first cyclonic cleaning stage 117a and finer particulate matter may be removed in the downstream second cyclonic cleaning stage 117b.

It will be appreciated that the cyclone bin assembly 116 may include additional air treatment means such as, a filter bag and/or a filter media such as a foam filter.

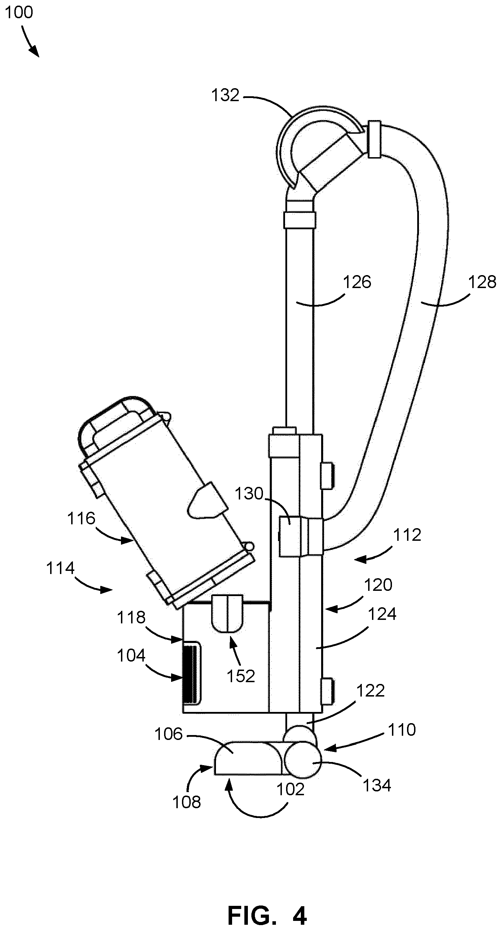

Referring again to Figure 3A, the dirt collection chamber 184 may be emptied in any suitable manner. In the example shown, the bottom wall 144 is pivotally mounted to the sidewall 140 and serves as an openable door. The dirt collection chamber 184 may be emptied by removing the cyclone bin assembly 116 from the second cyclonic stage (Figure 3B), where used, or the suction unit 118 (Figure 4), such as by releasing the latch(es) 152 and pivoting the bottom wall 144 away from the sidewall 140 as described in greater detail subsequently herein. Referring to Figure 3B, the second stage 117b may similarly be removably mounted to the suction unit (not shown), such as by releasing the latch(es) 152 and pivoting the bottom wall 144b away from the sidewall 140b. Accordingly, the second stage 117b may be removed for emptying or optionally replacement when it is full. Alternately, the second cyclonic stage 117b maybe removable and/or emptyable together with the first cyclonic separation stage 117a by any means known in the vacuum cleaner art. It will also be appreciated that alternately or in addition, the first end 156 may also be openable whereby the upper end of the cyclone chamber and the dirt collection chamber are opened.

Referring again to Figure 3A, the suction unit 118 houses a suction motor 188 and fan assembly located in the air flow path, an optional pre-motor filter 190 upstream of the suction motor 188 and downstream of the cyclone 154, and an optional post-motor filter 192 downstream of the suction motor 188 and upstream of the clean air outlet 104. As exemplified, the pre-motor filter 190 is sized to snuggly fit and extend across the open top 150 of the suction unit housing 138. An upstream side of the pre-motor filter 190 faces the cyclone air outlet 170. When the cyclone bin assembly 116 is lifted off of the suction unit 118, the upstream side of the pre-motor filter 190 is exposed, and the pre-motor filter 190 may be removed, replaced, or cleaned. In use, air may pass from the cyclone air outlet 170 through the pre-motor filter 190 from the upstream side to an opposed downstream side that faces the bottom wall 148 of the suction unit housing 138 and the suction motor 188. Air may then pass through the suction motor 188, optionally oriented such that a longitudinal axis is generally parallel to the cyclone axis of rotation 160, through the post-motor filter 192 from an upstream side facing the suction motor 188 to an opposed downstream side adjacent the clean air outlet 104, and exit the suction unit housing 138 through the clean air outlet 104. The pre-motor filter 190 and the post-motor filter 192 may use any suitable type of filter media known in the art. The suction motor 188 may be any suitable type of suction motor known in the art.

### Cyclone Bin Assembly

As exemplified in Figure 3A, the sidewall 162 of the cyclone 154 is positioned in the cyclone bin assembly housing 136 such that it is spaced from a portion of the sidewall 140 and from the bottom wall 144 of the cyclone bin assembly housing 136. The volume which is not occupied by the cyclone 154 may comprise or consist of a dirt collection chamber 184. Accordingly, the cyclone 154 is located internal of the sidewall 140 of the housing 136 of the cyclone bin assembly 116 between the top wall 142 (the rear wall in the hand vacuum cleaner embodiment of Figure 8) and the bottom wall 144 (the front wall in the hand vacuum cleaner embodiment of Figure 8), and the dirt collection chamber 184 is located external to the cyclone chamber 166 of the cyclone 154 and internal of the sidewall 140 of the housing 136 of the cyclone bin assembly 116 between the top/rear wall 142 and the bottom/front wall 144. The dirt collection chamber 184 is in communication with the cyclone chamber 166 via one or more dirt outlets 186.

The cyclone 154 may be coupled, such as integrally formed, heat welded, or other any other securing means, to a portion of the sidewall 140, such that the cyclone 154 is supported within the cyclone bin assembly housing 136. Optionally, the sidewall 162 of the cyclone 154 may form part of the outer surface of the cyclone bin assembly. The space between the lower wall 164 of the cyclone 154 and the bottom wall 144 of the cyclone bin assembly housing 136 forms a dirt collection chamber 184. The dirt collection chamber 184 is external to the cyclone chamber 166 and in communication with the cyclone chamber 166 via a dirt outlet 186. In the example shown, the dirt outlet 186 is a space between the top of the sidewall 162 of the cyclone 154 at the first end 156 and the top wall 142 of the cyclone bin assembly 116. In use, air may enter the cyclone chamber 166 from cyclone air inlet 168, rotate upwardly in a cyclonic air flow pattern about the cyclone axis of rotation 160, and then exit through the air outlet 170 to the suction unit 118. During the cyclonic air flow, particulate matter is separated from the air, and the particulate matter exits the cyclone chamber 166 through the dirt outlet 186 into the dirt collection chamber 184.

As exemplified in Figure 3A, the sidewall 162 of the cyclone 154 may be shorter than the sidewall 140 of the cyclone bin assembly 116 in the direction of the cyclone axis of rotation 160 such that the lower/front wall 144 of the cyclone 154 is spaced from the bottom/front wall 144 of the cyclone bin assembly 116. In such embodiments, the dirt collection chamber 184 may be located between the top/rear wall 142, bottom/front wall 144, and between the inner surface of the sidewall 140 of the cyclone bin assembly 116 and the outer surface of the sidewall 162 of the cyclone 154.

In alternate embodiments, the dirt collection chamber may be located only axially spaced from the cyclone chamber (e.g., between the top/rear wall 142, bottom/front wall 144).

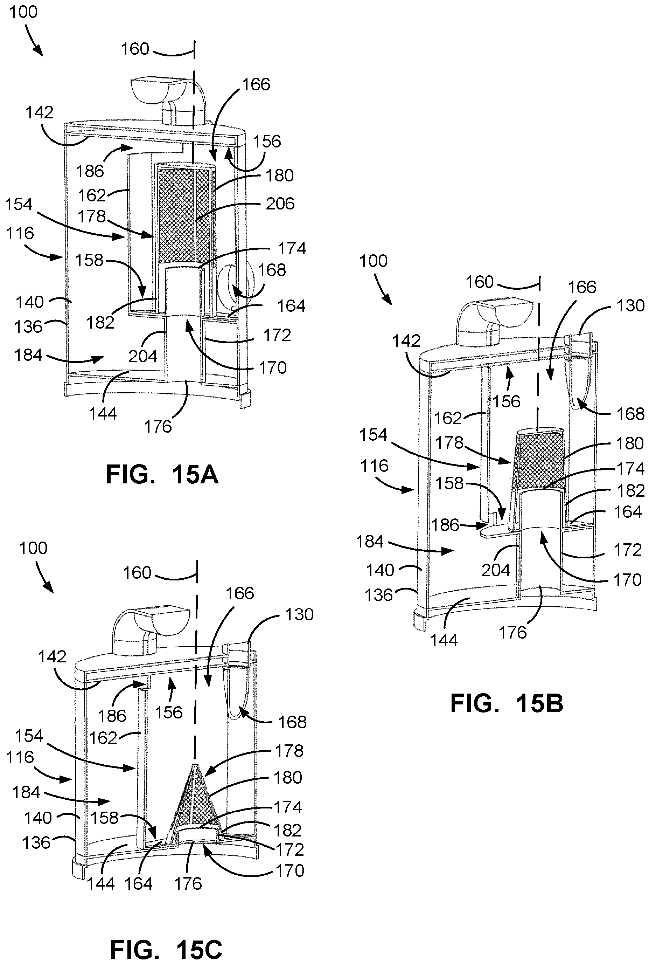

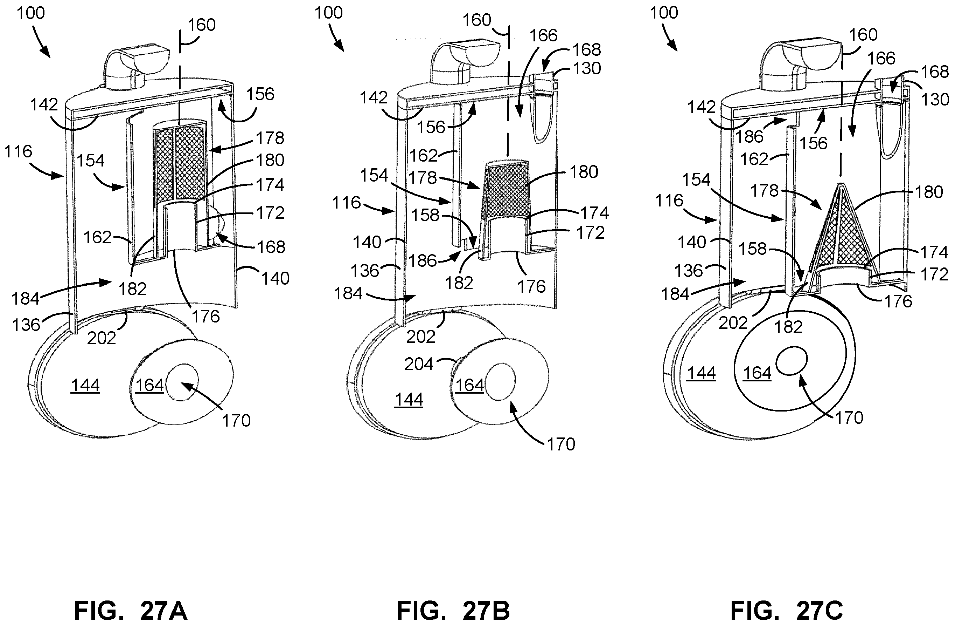

In alternate embodiments, as exemplified in Figures 15C and 27C, the dirt collection chamber may be located only laterally spaced from the cyclone chamber (e.g., between the inner surface of the sidewall 140 of the cyclone bin assembly 116 and the outer surface of the sidewall 162 of the cyclone 154). As exemplified therein, the sidewall 162 of the cyclone 154 and the sidewall 140 of the cyclone bin assembly 116 are about the same height in the direction of the cyclone axis of rotation 160 such that the lower/front wall 164 of the cyclone 154 is at the bottom/front wall 144 of the cyclone bin assembly 116.

The dirt collection chamber 184 is in communication with the cyclone chamber by one or more dirt outlets. Any dirt outlet may be used. The dirt outlet 186 may be an opening in the sidewall 162 of the cyclone 154 at one or both of the first and second ends 156, 158, or a gap or spacing between the sidewall 162 of the cyclone 154 and at least a portion of the lower/front wall 164 of the cyclone 154 and/or the top/rear wall 142 of the cyclone bin assembly 116. The dirt outlet(s) 186 may be at a lateral side, forward side, or rearward side of the cyclone 154.

As exemplified in Figures 3B, 17D and 27C, the dirt outlet 186 is an opening or slot formed in the sidewall 162 of the cyclone. As exemplified, an upper portion of the sidewall 152 terminates at a lower elevation than the top wall 142 such that dirt may exit the cyclone chamber is the opening between the upper portion of the sidewall 152 and the top wall 142. Alternately, all of the cyclone sidewall may terminate at a lower elevation than the top wall 142 such that a continuous gap is provided between the upper portion of the sidewall 152 and the top wall 142.

The cyclone air inlet, the cyclone air outlet and the dirt outlet may each be at one of the axially opposed ends of the cyclone chamber. As exemplified in Figure 3A, the cyclone is an inverted cyclone. The dirt outlet 186 is at the upper end of the cyclone chamber and the cyclone air inlet and the cyclone air outlet are at the lower end. As exemplified in Figures 8 and 30A, the cyclone is a non-inverted cyclone. The cyclone air inlet and the cyclone air outlet are at the upper end of the cyclone chamber and the dirt outlet 186 is at the lower end. As exemplified in Figure 15B, the cyclone is an inverted cyclone. The cyclone air inlet and the cyclone air outlet are at the lower end of the cyclone chamber and the dirt outlet 186 is also at the lower end. As exemplified in Figure 27B, the cyclone is a uniflow cyclone. The cyclone air inlet is at the upper end and the cyclone air outlet and the dirt outlet 186 are at the lower end.

It will be appreciated that if the cyclone bin assembly is used in a hand vacuum cleaner, as exemplified in Figure 8, then when the hand vacuum cleaner is oriented with the nozzle pointing forwardly, the cyclone axis of rotation may be oriented vertically or horizontally. If the cyclone axis of rotation is oriented horizontally, then one or more of the cyclone air inlet, the cyclone air outlet and the dirt outlet may be located at the front end and the others, if any, may be located at the rear end.

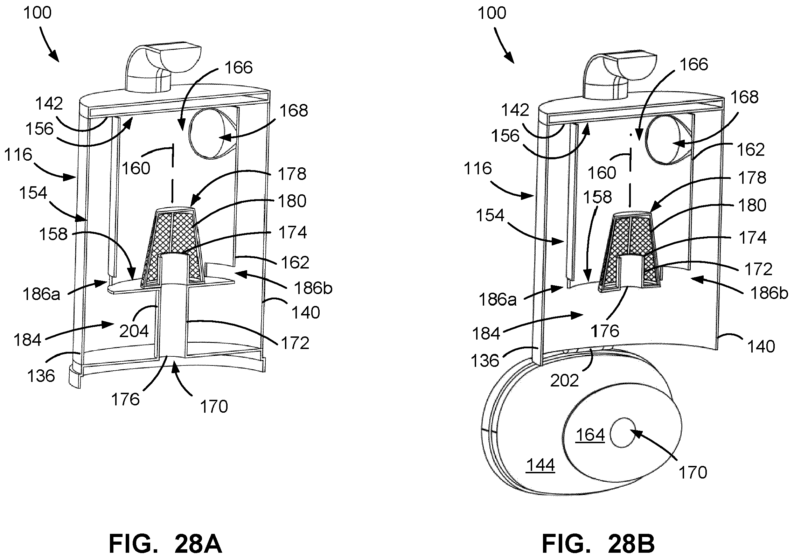

In some embodiments, the dirt collection chamber 184 may be in communication with the cyclone chamber 166 via a plurality of dirt outlets, which may be at the same elevation along the axis of the cyclone. As exemplified in Figure 28A, a first dirt outlet 186a and a second dirt outlet 186b that is angularly positioned around the sidewall 162 of the cyclone 154 from the first dirt outlet 186a may be provided.

The dirt collection chamber and the cyclone chamber may be concurrently openable, such as by opening the upper end and/or the lower end of the cyclone bin assembly. Accordingly, the lower/front wall 164 may be flush with the bottom/front wall 144, raised from the bottom/front wall 144, or coupled to the bottom/front wall 144 by a relatively short connector or support 204. Accordingly, the dirt collection chamber 184 and the cyclone chamber 166 may be emptied concurrently, similar to as described previously. The connector or support 204 may be a solid member (see for example Figure 30A) or may be a portion of the air outlet conduit 172 external to the cyclone chamber 166 in embodiments wherein the air outlet 170 passes through the lower/front wall 164 of the cyclone 154 and the bottom/front wall 144 of the cyclone bin assembly 116 toward the suction motor (see for example Figure 28A). Accordingly, the dirt collection chamber 184 and the cyclone chamber 166 may be emptied concurrently by actuating a release latch such that the bottom/front wall 144 of the cyclone bin assembly 116, the connector 204, and the lower/front wall 164 of the cyclone 154, may together rotate away from the housing 136 of the cyclone bin assembly 116 about the pivot 202. Other means of emptying may be used to empty concurrently, such as the top/rear wall 142 or a shared portion of sidewall 162, 140 being openable, or to empty separately.

Figures 27A to 27C shown the cyclone bin assemblies 116 of Figures 15A to 15C in the open or dirt emptying configuration. In each example, the lowerwall 164 of the cyclone is pivoted open concurrently with the lower wall 144 of the cyclone bin assembly.

### General Description of Upright Vacuum Cleaner Cleaning Modes

In accordance with one aspect of this disclosure, which may be used alone or in combination with any other aspect, the surface cleaning apparatus 100 may be operable in a variety of different functional configurations or operating modes in addition to the floor cleaning mode as shown and described with respect to Figure 1.

Referring to Figure 5A, the surface cleaning apparatus 100 is shown in an above floor cleaning mode. The cleaning unit 114 is mounted to the lower upflow duct 124 of the upright section 112 and is supported in the upright position by the surface cleaning head 106. In the example shown, the upper upflow duct 126 is detached from the lower upflow duct 124 such that the end of the upper upflow duct 126 opposite the handle 132 is an above floor dirty air inlet 102. Accordingly, the surface cleaning head 106, pivoting joint member 122, and lower upflow duct 124 do not form part of the air flow path. The flexible hose 128 may permit a user to manipulate the upper upflow duct 126 as an above floor wand using the handle 132, such as for cleaning crevices/corners, under furniture, above floor surfaces, or any other location not suitable for cleaning with the surface cleaning head 106. Optionally, additional accessory tools may be coupled at the dirt air inlet 102 of the upper upflow duct 126 to provide additional and/or improved functionality.

Referring to Figure 5B, the surface cleaning apparatus 100 is shown in another above floor cleaning mode (a portable mode). The cleaning unit 114 is detached from the pivoting joint member 122 and the surface cleaning head 106. The lower upflow duct 124 is removed with the cleaning unit 114 as in this embodiment it is formed as part thereof. Similar to the example shown in Figure 5A, the upper upflow duct 126 is detached from the lower upflow duct 124. Accordingly, the dirty air inlet 102 is at the end of the upper upflow duct 126 opposite the handle 132, and the surface cleaning head 106, pivoting joint member 122, and lower upflow duct 124 do not form part of the air flow path. In the portable cleaning mode exemplified, the surface cleaning apparatus 100 may be supported in the upright position by resting on the bottom wall 148 of the suction unit housing 138. A user may carry the surface cleaning apparatus 100 to a new location to be cleaned using the cleaning unit handle 194. Alternately, the user may simultaneously carry the surface cleaning apparatus 100 by cleaning unit handle 194 with one hand while manipulating the wand (upper upflow duct 126) using the handle 132 with the other hand. In alternate examples, the cleaning unit 114 may be detached from the lower upflow duct 124, and/or the surface cleaning apparatus 100 may further include straps permitting the cleaning unit 114 to be carried in a hands-free or "backpack" mode while the user manipulates the upper upflow duct 126 as a wand using the handle 132 with one of two free hands.

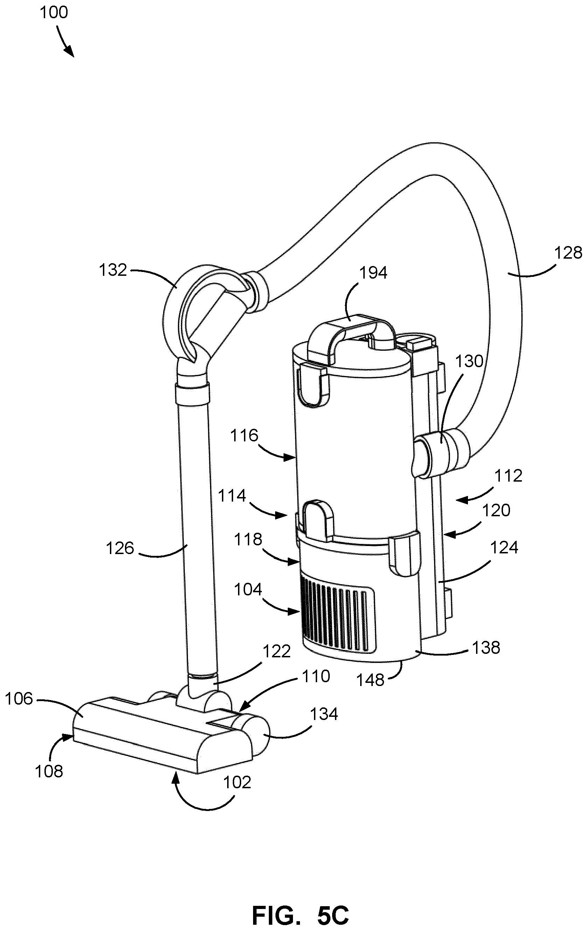

Referring to Figure 5C, the surface cleaning apparatus 100 is shown in another floor cleaning mode. The cleaning unit 114 has been detached from pivoting joint member 122 and surface cleaning head 106. The upper upflow duct 126 is detached from the lower upflow duct 124 and removably coupled to the surface cleaning head 106 by the pivoting joint member 122. Accordingly, the dirty air inlet 102 remains in the surface cleaning head 106 and the lower upflow duct 124 does not form part of the air flow path. Similar to the example shown in Figure 5B, the cleaning unit 114 of the surface cleaning apparatus 100 may be supported in the upright position by resting on the bottom wall 148 of the suction unit housing 138 while the user manipulates the surface cleaning head 106 using the handle 132 of the upper upflow duct 126. A user may carry the cleaning unit 114 to a new location to be cleaned using the cleaning unit handle 194. Alternately, the user may simultaneously carry the cleaning unit 114 by cleaning unit handle 194 with one hand while manipulating the surface cleaning head 106 using the handle 132 of the upper upflow duct 126 with the other hand. In alternate examples, the cleaning unit 114 may be detached from the lower upflow duct 124, and the surface cleaning apparatus 100 may further include straps permitting the cleaning unit 114 to be carried in a hands-free or "backpack" mode while the user manipulates the surface cleaning head 106 using the handle 132 of the upper upflow duct 126 with one of two free hands.

In a further optional embodiment, the cleaning unit 114 may be removable while the lower upflow duct 124 and the upper upflow duct 126 remain in position.

### General Description of a Stick Vacuum Cleaner with a Removable Hand Vacuum Cleaner

Referring to Figure 6, in accordance with another aspect of this disclosure, which may be used alone or in combination with any other aspect, the surface cleaning apparatus 100 exemplified is operable as a stick vacuum cleaner, which may have an optional removable hand vacuum cleaner, or a hand vacuum cleaner.

Similar to the example shown in Figure 1, the surface cleaning apparatus 100 has an air flow path from a dirty air inlet 102 in a surface cleaning head 106 to a clean air outlet 104. The surface cleaning head 106 may be similar to the surface cleaning head discussed previously.

The surface cleaning apparatus 100 further has an upright section 112 including an air conduit 120 rotationally mounted at an upstream end 196 to the rear end 110 of the surface cleaning head 106. The air conduit 120 of the upright section 112 has a cleaning unit 114, including a cyclone bin assembly 116 and a suction unit 118 provided at an upper end thereof. As exemplified, the cleaning unit 114 is removably coupled to a downstream end 198 of the air conduit 120 and may therefore be referred to as a hand vacuum cleaner. It will be appreciated that the hand vacuum cleaner may be of any configuration known in the art. The stick vacuum cleaner may use any upright section known in the art.

The air conduit 120 and handle 194 of the cleaning unit 114 may each have sufficient structural strength and rigidity to enable controlled manipulation of the surface cleaning apparatus 100 on and about surface cleaning head 106. The handle 194 has a hand grip portion 200, such as a pistol grip type handle. A finger gap is provided between the hand grip portion 200 and the suction unit 118.

As exemplified, the cleaning unit 114 includes a cyclone bin assembly inlet conduit 130 in airflow communication with the cyclone bin assembly 116. From the dirty air inlet 102, the airflow path extends through the surface cleaning head 106, the air conduit 120, the cyclone bin assembly inlet conduit 130, the cyclone bin assembly 116, and the suction unit 118, to the clean air outlet 104 provided in the suction unit 118.The upstream end of the inlet conduit 130 may be useable as a nozzle of a hand vacuum cleaner. Any cyclone bin assembly may be used.

As exemplified in the cross-section of Figure 8, the cyclone bin assembly 116 has the same construction as discussed previously with respect to the surface cleaning apparatus of Figure 1 and is openable in the same manner for emptying. As exemplified, the hand vacuum cleaner has a plurality of on board energy storage members 119 (e.g., batteries) which are optionally provided at a lower end of the handle and may provide a stand (e.g., a flat surface) whereby the hand vacuum cleaner may be placed in a stable position on a table or the like. When the hand vacuum cleaner is placed on a horizontal surface and oriented with the lower, flat surface 123 of the energy storage pack 121 on the horizontal surface, the cyclone axis of rotation is oriented horizontally and wall 144 may be referred to as a front wall and wall 142 may be referred to as a rear wall.

As discussed with respect to the upright vacuum cleaner of Figure 1, the suction unit 118 houses a suction motor 188 and fan assembly, the optional pre-motor filter 190 and the optional post-motor filter 192.

It will be appreciated that, as with the cyclone bin assembly 116 of the upright vacuum cleaner of Figure 1, the cyclone bin assembly 116 may be removable as a closed unit (other than the air inlet and the air outlets). The cyclone bin assembly 116 may be removable with the pre-motor filter 190 or the pre-motor filter may remain with the suction unit 118 when the cyclone bin assembly 116 is removed.

### General Description of Hand Vacuum Cleaner Cleaning Modes

In accordance with another aspect of this disclosure, which may be used alone or in combination with any other aspect, the surface cleaning apparatus 100 may be operable as a hand vacuum cleaner or stick vacuum cleaner in a variety of different functional configurations or operating modes in addition to the stick type floor cleaning mode as shown and described with respect to Figure 6.

Referring to Figure 9A, the surface cleaning apparatus 100 is shown in an above floor cleaning mode. The hand vacuum cleaner 114 remains coupled to the air conduit 120 of the upright section 112, which has been detached from surface cleaning head 106. The air conduit 120 may also be referred to as a wand in the example shown. Accordingly, the dirty air inlet 102 is at the upstream end 196 of the air conduit 120, and the surface cleaning head 106 does not form part of the air flow path. In the cleaning mode exemplified, a user may carry the surface cleaning apparatus 100 and manipulate the wand (air conduit 120) using the cleaning unit handle 194. The wand may extend the reach of the surface cleaning apparatus 100 such that a user may more easily clean, for example, ceiling corners, under furniture, or other hard to reach locations. Optionally, additional accessory tools may be coupled at the dirty air inlet 102 of the air conduit 120 to provide additional and/or improved functionality.

Referring to Figure 9B, the surface cleaning apparatus 100 is shown in a hand vacuum cleaning mode wherein the hand vacuum cleaner 114 is detached from the downstream end 198 of the air conduit 120. Accordingly, the dirty air inlet 102 is at the open end of the cyclone bin assembly inlet conduit 130, and the air conduit 120 and surface cleaning head 106 do not form part of the air flow path. In the cleaning mode exemplified, the user may carry and manipulate the surface cleaning apparatus 100 using the cleaning unit handle 194. Optionally, additional accessory tools may be coupled at the dirty air inlet 102 of the cyclone bin assembly inlet conduit 130 to provide additional and/or improved functionality.

It will be appreciated that the foregoing discussion is exemplary and intended to generally introduce various features of the surface cleaning apparatus. The following discussion is intended to provide more detail on particular configurations and/or functions of these features, each of which may be used by itself in any surface cleaning apparatus, such as the exemplary surface cleaning apparatuses discussed above, or in any combination or sub-combination with any other feature or features disclosed herein.

It will be appreciated from the following discussion that a surface cleaning apparatus may have a cyclone bin assembly wherein one or more elements of the cyclone bin assembly has a non-circular cross-sectional area. The use of non-circular elements, such as a non-circular cyclone, vortex finder, insert, air inlet, air outlet, dirt collection chamber, or any combination or sub combination thereof, may provide one or more advantages, such as an improved or more efficient airflow path without increasing the backpressure through the cyclone bin assembly, additional and/or enhanced dirt collection capacity of the cyclone chamber and/or cyclone chamber, or a slimmer or more compact profile of the surface cleaning apparatus without reduction or substantial reduction to the dirt collection capacity of the surface cleaning apparatus.

### Non-Circular Cyclone

In accordance this aspect of this disclosure, which may be used alone or in combination with any other aspect, the cyclone 154 of the surface cleaning apparatus 100 has a non-circular shape in a plane that is transverse to the cyclone axis of rotation 160. As exemplified in Figure 1 (the surface cleaning apparatus 100 is an upright vacuum cleaner) or Figure 6 (a hand and/or stick vacuum oriented with the cyclone axis of rotation 160 extending vertically), the plane transverse to the cyclone axis of rotation 160 is horizontal.

As described previously, the shape of the cyclone chamber 166 in a plane transverse to the cyclone axis of rotation 160 is defined by the perimeter established by the sidewall 162. In accordance with this aspect, the sidewall 162 may define a cyclone chamber 166 that has any non-circular cross-sectional area in the plane transverse to the cyclone axis of rotation 160, such as ovaloid, ellipsoid or rectangular with rounded ends. Any other shape may be possible.

It will be appreciated that the cross-sectional shape may be constant along the axial length of the cyclone (i.e., the sidewall 162 may extend parallel to the cyclone axis of rotation) or it may vary. For example, the cross-sectional area may increase or decrease for all or part of the axial length of the cyclone and the cross-sectional area may increase or decrease continuously. For example, part or all of the cyclone may be fursto-conical but with a non-circular cross-sectional area.

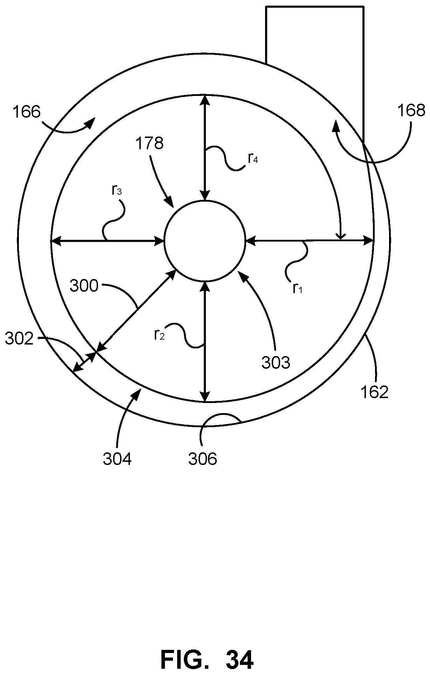

As exemplified in Figure 34 and as discussed in more detail subsequently, in a cyclone having a circular cross-sectional area as commonly used in the art, dirty air enters the cyclone from the air inlet and, as the dirty air travels cyclonic air flow path about the cyclone axis of rotation, the dirty air compresses (e.g., the air flow pushes toward the outer surface of the vortex finder or insert) in the direction of rotation of air in the cyclone chamber. Accordingly, as the air rotates, the radius of the flow area of air in the cyclone chamber in a plane transverse to the cyclone axis of rotation decreases continuously in the direction of rotation of air in the cyclone chamber. Accordingly, an air flow gap between a radial outer wall of the air outlet, vortex finder, and/or insert and the air flow path increases in the direction of rotation of air in the cyclone chamber. The sidewall of a cyclone having a non-circular cross-sectional area may approximate this compression effect over at least a portion of the air flow path by decreasing the flow area between the sidewall and the air outlet, vortex finder, and/or insert. This may advantageously maintain a consistent air flow gap between the interior of the sidewall of the cyclone and the air flow path over at least a portion of the air flow path. It will be appreciated that the sidewall may compensate for part or all of the air flow gap (i.e., the sidewall may have a shape such that the air flow gap is reduced and/or eliminated for part or all of the perimeter of the sidewall.

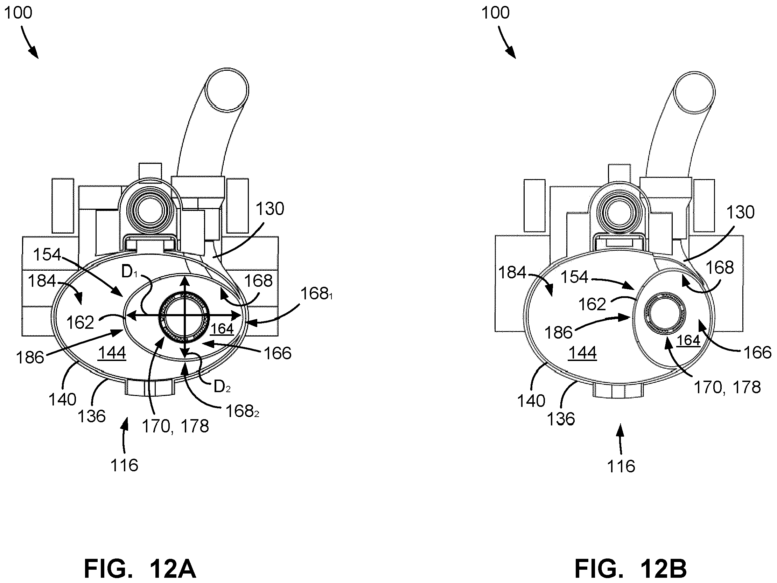

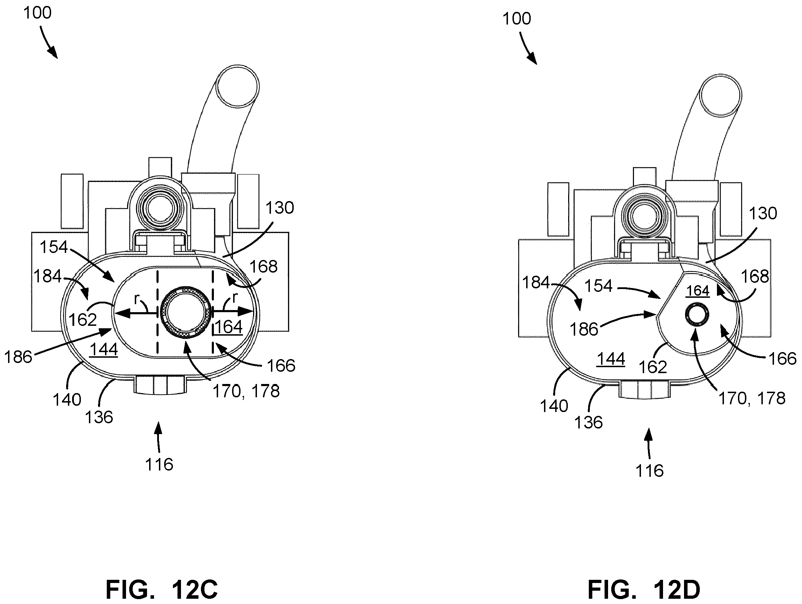

Optionally, similar to the cyclone 154, the sidewall 140 of the cyclone bin assembly housing 136 and/or the sidewall 146 of the suction unit housing 138, may define an interior space having a non-circular cross-sectional area in the plane transverse to the cyclone axis of rotation 160 such as ovaloid, ellipsoid (see, e.g., Figure 12A), rectangular with rounded corners, rectangular with rounded ends (see, e.g., Figure 12C), or any other shape. The sidewall 140 of the housing 136 of the cyclone bin assembly 116 may define a cross-sectional area having the same or partially the same non-circular shape or a different non-circular shape as the cyclone chamber 166.

As exemplified in Figure 12A, the cross-sectional area of the cyclone and/or cyclone bin assembly, whether shaped as an ovaloid, ellipsoid, or rectangular with rounded ends, may have a major dimension (long dimension/diameter D₁) and a minor dimension (short dimension/diameter D₂). The use of a non-circular shaped cyclone and/or cyclone bin assembly may provide one or more advantages. For example, a circular cyclone or cyclone bin assembly as used in the art may be replaced with a non-circular shaped cyclone or cyclone bin assembly wherein the minor dimension is equal to the diameter of its circular predecessor. In such examples, the dirt storage capacity of the cyclone or cyclone bin assembly may be increased while maintaining the size of the original surface cleaning apparatus in at least one dimension. As another example, a circular cyclone or cyclone bin assembly may be replaced with a non-circular shaped cyclone or cyclone bin assembly wherein the minor dimension is less than the diameter of its circular predecessor and the major dimension is greater than the diameter of its circular predecessor. In such examples, the size of the original surface cleaning apparatus in at least one dimension may be reduced while the dirt storage capacity of the cyclone or cyclone bin assembly may be maintained or increased (depending on the ratio of major dimension to minor dimension).

### Non-Circular Cyclone Bin Assembly

In accordance this aspect of this disclosure, which may be used alone or in combination with any other aspect, the cyclone bin assembly 116 has a non-circular shape in a plane that is transverse to the cyclone axis of rotation 160. As exemplified in Figure 1 (the surface cleaning apparatus 100 is an upright vacuum cleaner) or Figure 6 (a hand and/or stick vacuum oriented with the cyclone axis of rotation 160 extending vertically), the plane transverse to the cyclone axis of rotation 160 is horizontal.

As exemplified in Figure 3A, a cyclone bin assembly may comprise a single cyclonic stage, which has a single cyclone. Alternately, the cyclone bin assembly 116 may comprise a plurality of cyclonic stages, each of which comprises a single cyclone or a plurality of cyclones in parallel. Alternately, the cyclone bin assembly may include one or more cyclonic cleaning stages and one or more additional air treatment members (e.g., non-cyclonic momentum separator, one or more filter media, etc.).

In addition, any one or more of the cyclones in a cyclone bin assembly 116 may have a dirt collection chamber 184 external to the cyclone chamber. The dirt collection chamber may surround part or all of the cyclone chamber and/or may be axially spaced from (e.g., located above and/or below) the cyclone chamber. As exemplified in Figures 12A and 12B, the dirt collection chamber 184 surrounds all of the cyclone chamber other than the portion of the cyclone chamber that forms an exterior surface of the cyclone bin assembly 116.

As discussed with respect to a cyclone, the cyclone bin assembly 116 may have any non-circular shape in the plane that is transverse to the cyclone axis of rotation 160. For example, as discussed previous with respect to the cyclone, the cyclone bin assembly 116 may be ovaloid, ellipsoid (see, e.g., Figure 12A), nautiloid, rectangular with rounded corners, r rectangular with rounded corners (see, e.g., Figure 12C). It will be appreciated that the long diameter D₁ and the shorter diameter D₂ may extend in the same direction as the long diameter D₁ and the shorter diameter D₂ of the cyclone. Alternately, the long diameter D₁ and the shorter diameter D₂ of the cyclone may be oriented differently to the long diameter D₁ and the shorter diameter D₂ of the cyclone bin assembly 116. For example, the long diameter D₁ of the cyclone may extend in the direction of the shorter diameter D₂ of the cyclone bin assembly 116.

It may be desirable to increase the dirt collection capacity of the dirt collection chamber 184 without extending the sidewall 140 axially. Depending on the desired profile of a particular surface cleaning apparatus, the major dimension and/or minor dimension of the non-circular shaped cyclone bin assembly 116 may be lengthened to increase the dirt collection capacity. Conversely, it may be desirable to increase the dirt collection capacity of the dirt collection chamber 184 without extending one or both of the major dimension and the minor dimension of the non-circular shaped cyclone bin assembly 116. To increase the dirt collection capacity, the sidewall 140 may be lengthened axially.

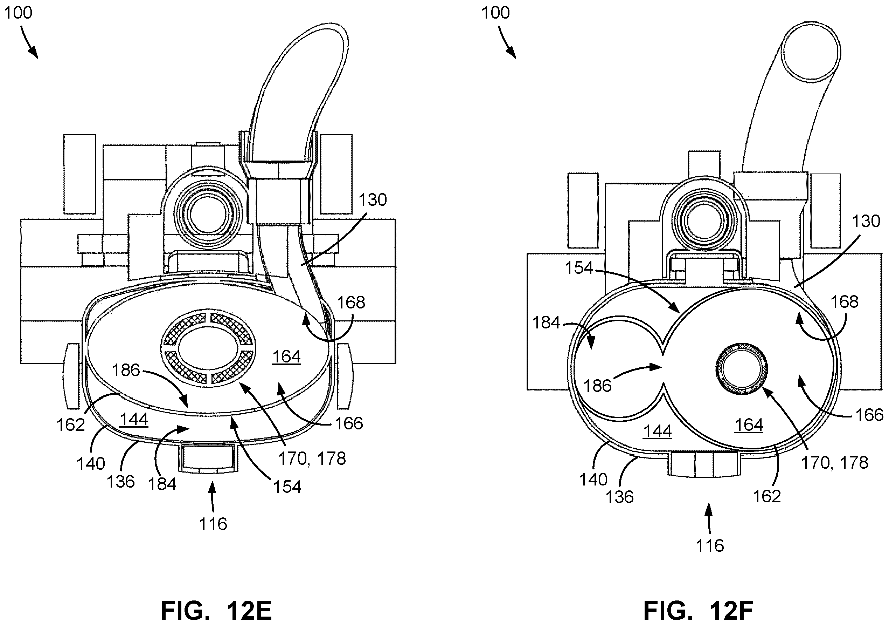

As exemplified in Figures 12A-12D, the dirt collection chamber is spaced laterally from the cyclone (i.e., in the direction of the longer diameter D₁). As exemplified in Figure 12E, the dirt collection chamber is spaced forwardly from the cyclone (i.e., in the direction of the short diameter D₂). In each of these embodiments, the cyclone bin assembly itself is non-circular.

Alternately, or in addition, a dirt collection region may be provided internal of the cyclone chamber and contiguous therewith. As expanded upon subsequently herein, the cyclone chamber 166 may comprise a cyclone portion and a dirt collection portion. For example, Figure 12F shows an example surface cleaning apparatus 100 wherein the dirt collection portion 184 is spaced laterally from the cyclone portion 166 and is contiguous therewith. The cyclone portion 166 and the dirt collection portion 184 each has a circular cross-sectional area. Dirt exits the cyclone portion through an interface of the cyclone portion 166 and the dirt collection portion 184, which may be referred to as a dirt outlet 186 may be an opening at the interface. It will be appreciated that the cyclone portion 166 and the dirt collection portion 184 may have any shaped cross-sectional area in the plane that is transverse to the cyclone axis of rotation, such as ovaloid, ellipsoid, or rectangular with rounded ends, and the shapes may be the same or different. In this embodiment, the cyclone bin assembly itself is non-circular.

As discussed subsequently, a non-circular cyclone bin assembly 116, or a non-circular cyclone if only a cyclone is provided, may be used to provide novel configurations for vacuum cleaners.

### Non-Circular Vortex Finder

In accordance with another aspect of this disclosure, which may be used alone or in combination with any other aspect, part or all of the cyclone air outlet 170, which may be or comprise a vortex finder 178, may have a non-circular cross-sectional area in a plane transverse to a direction of flow (e.g., a cyclone axis of rotation) through the vortex finder. For example, all of the vortex finder 178 may have a non-circular cross-sectional area.

An advantage of this aspect is that the vortex finder may be shaped and oriented to match the shape and orientation of the cyclone thereby enabling the cyclone to be narrower in the smaller dimension. A further advantage is that the cyclone air outlet 170 may be shaped to provide, or assist in providing, a flow area with a radial width that decreases in the direction of air circulating in the cyclone.

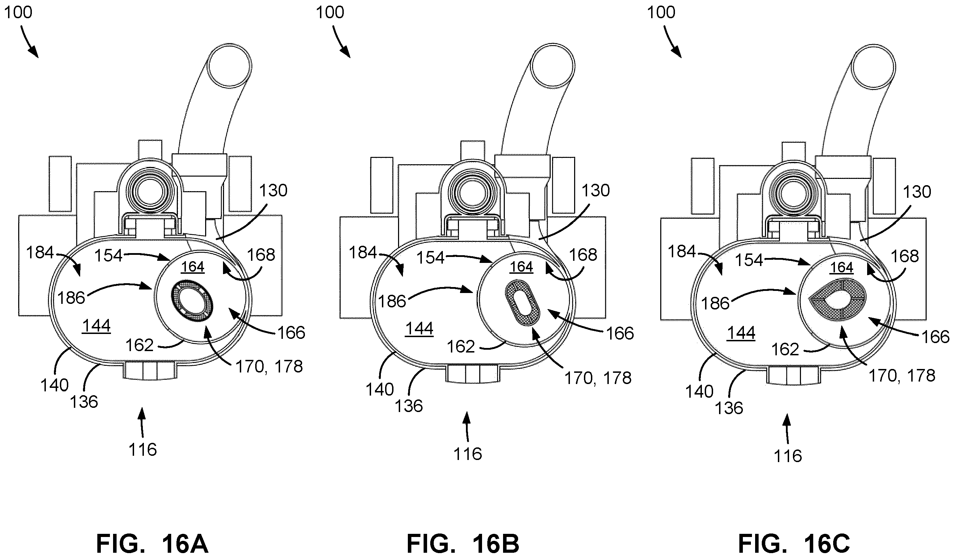

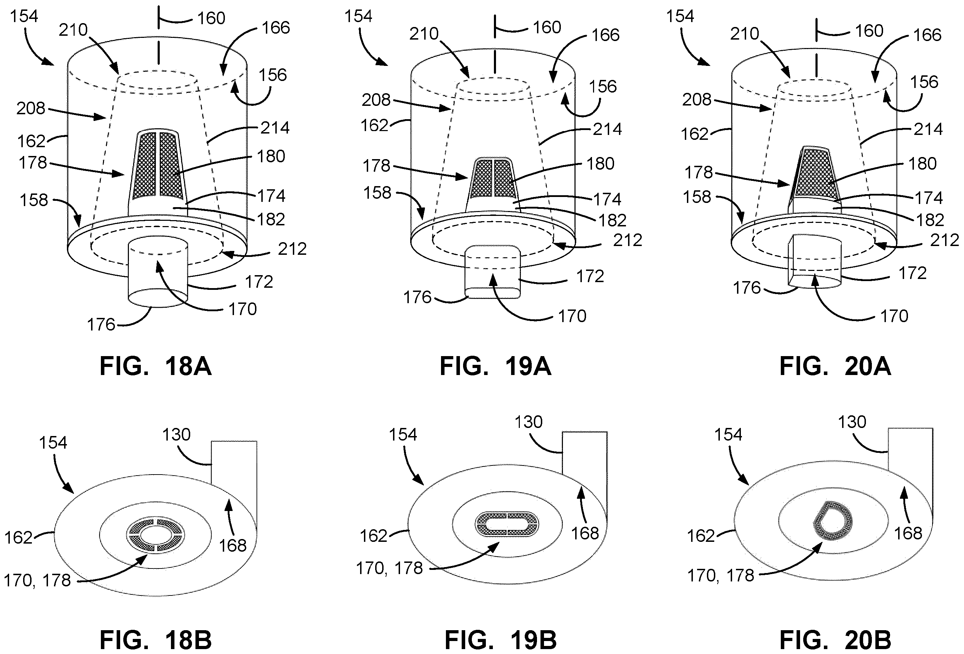

As discussed with respect to a cyclone, the vortex finder 178 of the cyclone air outlet 170 may have any non-circular shape in the plane that is transverse to the cyclone axis of rotation 160. For example, as discussed previous with respect to the cyclone, the vortex finder 178 may be ovaloid, ellipsoid (see, e.g., Figures 16A, 18B), nautiloid (see, e.g., Figures 16C, 20B), or rectangular with rounded ends (see, e.g., Figures 16B, 19B). It will be appreciated that the long diameter D₁ and the shorter diameter D₂ may extend in the same direction as the long diameter D₁ and the shorter diameter D₂ of the cyclone and/or the cyclone bin assembly. Alternately, the long diameter D₁ and the shorter diameter D₂ of the vortex finder 178 may be oriented differently to the long diameter D₁ and the shorter diameter D₂ of the cyclone and/or the cyclone bin assembly. For example, the long diameter D₁ of the vortex finder may extend in the direction of the shorter diameter D₂ of the cyclone and/or the cyclone bin assembly.

The vortex finder 178 may be any vortex finder 178 known in the art. As exemplified herein, the vortex finder 178 may include a porous portion 180 that extends axially into the cyclone chamber 166 and optionally includes a solid portion 182 that may extend axially into the cyclone chamber 166 from an end wall, wherein the porous portion 180 extends inwardly from an axially inner end of the solid portion 182. The solid portion 182 may be a portion of the air outlet conduit 172 such that the porous portion 180 extends from the first end 174 of the portion of the air outlet conduit 172 that is positioned within the cyclone chamber 166. Alternately, the solid portion 182 (when used) and optionally the porous portion 180 may surround any portion of the air outlet conduit 172 that is positioned therewithin.

The solid portion 182 may be used in embodiments wherein the cyclone air inlet 168 is positioned at the same end of the cyclone 154 as the cyclone air outlet 170 so as to avoid dirty air from directly impacting and passing through the porous portion 182 from the cyclone air inlet 168, which may cause the porous portion 180 to become blocked quicker, which may further increase backpressure and diminish the cyclonic separation efficiency of removing entrained particulate matter from the dirty air flow.

The axial length of the solid portion 182 may be the same as or larger than the axial length of the cyclone air inlet. Accordingly, the screen portion 180 may extend to or towards the second end 158 of the cyclone 154 from a location at or axially inwardly of the side of the cyclone air inlet that is distal to the end wall through which air exits the cyclone (see for example Figure 32).

As discussed with respect to the cyclone, the cyclone air outlet 170 may be a longitudinally extending hollow body, e.g. cylindrical (i.e., it may have the same cross-sectional area along its axial length) or part or all of the cyclone air outlet 170 may be tapered, such as conical or frusto-conical. Accordingly, the cross-sectional shape may be constant along the axial length of the cyclone air outlet 170 or the cross-sectional area may increase or decrease for all or part of the axial length of the cyclone air outlet 170 and the cross-sectional area may increase or decrease continuously. For example, part or all of the cyclone air outlet 170 may be fursto-conical but with a non-circular cross-sectional area. For example, referring to Figure 15A, both the porous portion 180 and the solid portion 182 of the vortex finder 178 are cylindrical. As another example, referring to Figure 15B, the vortex finder 178 is frusto-conical and both the porous portion 180 and the solid portion 182 are tapered. As a further example, referring to Figure 15C, the vortex finder 178 is conical and both the porous portion 180 and the solid portion 182 are tapered.

If the vortex finder includes a solid portion, the solid portion may have the same cross-sectional shape as the porous portion or it may be different. For example, figures 19A and 19B exemplify a cyclone air outlet 170 wherein each of the solid portion 182 and the porous portion 180 has a cross-sectional area that is rectangular with rounded ends. The solid portion 182 and the porous portion 180 are tapered extending from the second end 158 of the cyclone 154 axially inwardly into the interior of the insert 208. Figures 20A and 20B exemplify a cyclone air outlet 170 wherein each of the solid portion 182 and the porous portion 180 has a cross-sectional area that has a nautiloid shaped cross-sectional area. The porous portion 180 is tapered extending from the first end 174 of the air outlet conduit 172 axially inwardly into the interior of the insert 208.

The porous portion 182 may be made of any material suitable for permitting air to pass through the porous portion 182 without collapsing or substantially deforming under the suction force of the suction motor. It may be a screen and/or filter media. For example, the porous portion 180 may be a filter fabric reinforced with supporting ribs 206, wherein the supporting ribs act as a frame to maintain the porous portion 182 in any shape, such as cylindrical, conical, or frusto-conical, under the suction force of the suction motor. Alternately, the porous portion 180 may be a material having sufficient strength and rigidity to maintain its shape under the suction force of the suction motor with or without supporting ribs. For example, the porous portion may be a formed or shaped etched metal screen, etched plastic, laser cut plastic, or sintered plastic (porous plastic) or a woven metal screen. Referring to Figure 15B, the porous portion 180 of the vortex finder 178 is an etched metal screen that has been formed to a frusto-conical shape.

The porous portion 180 of a non-circular vortex finder 178 may have a larger surface area than a circular vortex finder of the same shape (cylindrical, conical, frusto-conical, etc.) and height. This, of course, depends on the major and minor dimensions of the non-circular vortex finder compared to the diameter of the circular vortex finder. An increase the surface area of the porous portion 180 through which air may pass may advantageously decrease the back pressure of the surface cleaning apparatus, help improve the dirt separation efficiency of the cyclone chamber and/or help reduce power requirements for generating and/or maintaining a desired level of suction. This may also enable a smaller motor to be used, facilitating a more compact surface cleaning apparatus.

### Non-Circular Insert

In accordance with another aspect of this disclosure, which may be used alone or in combination with any other aspect, the surface cleaning apparatus includes an air impermeable insert 208 positioned within the cyclone chamber 166 interior of the sidewall 162 of the cyclone 154. The air outlet or vortex finder may be positioned within the insert.

Optionally, part or all of the inert may have a non-circular cross-sectional area in a plane transverse to a direction of flow (e.g., a cyclone axis of rotation) through the insert. For example, all of the insert 208 may have a non-circular cross-sectional area. Alternately, only a portion of the length of the insert 208 may have a non-circular cross-sectional area.

The insert 208 is a hollow axial extending member positioned in the cyclone chamber. The insert extends inwardly from the wall of the cyclone through which air exits the cyclone. Accordingly, the cyclone air outlet 170 may be positioned internal of the insert. Alternately, a portion of the end wall of the cyclone, which is located radial inwardly of the insert, may have a port through which air exits the cyclone.

As exemplified in Figure 17D, the insert 208 has a first end 210, a second axially spaced apart end 212, and an insert sidewall 214 extending longitudinally between the first and second ends 210, 212. An air flow region may be located between an inner surface of the cyclone sidewall 162 and an outer surface of the insert sidewall 214. Accordingly, the cyclone air inlet 168 introduces dirty air into the air flow region such that the cyclonic air flow path of the dirty air from the cyclone air inlet 168 about the cyclone axis of rotation 160 takes place between the inner surface of the cyclone sidewall 162 and the outer surface of the insert sidewall 214.

As exemplified, the first end 210 of the insert 208 is positioned within the cyclone chamber 166 between the first and second ends 156, 158 of the cyclone 154, and the second end 212 of the insert 208 is positioned at the second end 158 of the cyclone 154 and around the cyclone air outlet 170. Any portion of the cyclone air outlet conduit 172 that extends axially inwardly into the cyclone chamber 166 may therefore be interior to the sidewall 214 of the insert 208.

The first end 210 of the insert 208 may be open to permit air to flow into the interior of the insert 208 toward the air outlet 170, e.g., a vortex finder 178 positioned therein as exemplified in Figure 17D. From the cyclone air inlet 168, dirty air may travel in the cyclonic air flow path about the cyclone axis of rotation 160 within the airflow region between the insert sidewall 214 and the cyclone sidewall 162 before entering the interior of the insert 208 through the open first end 210. Optionally, the first end 208 of the insert 208 includes a porous member such as a screen 216. The cyclonic airflow may separate larger particulate matter prior to reaching the first end 210 of the insert 208. The insert 208 may advantageously permit the cyclonic dirt separation from the air flow to take place away from the vortex finder 178, which may prevent large particulate matter from reaching the porous portion 182 and thereby blocking the cyclone air outlet 170. The screen 216 at the first end 210 of the insert 208 may provide additional separation of particulate matter of a selected size such that the cyclone air outlet 170 may not need a porous portion 182 or vortex finder 178, or may use a porous portion 182 for separation a finer size particulate matter. Accordingly, the insert 208 may improve the dirt separation efficiency of the cyclone 154 of the surface cleaning apparatus 100.

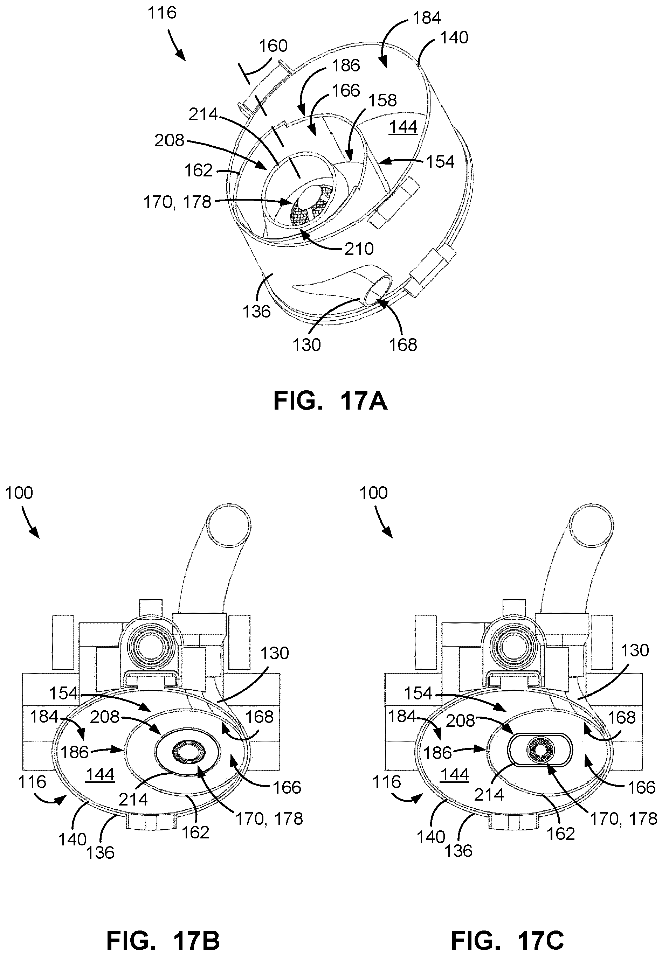

For example, in the embodiment of Figures 17A and 17B which use an inverted cyclone, in use dirty air cyclones upwardly toward the first end 156 of the cyclone 154 about the cyclone axis of rotation 160 within the airflow region. Particulate matter is disentrained via momentum separation toward the sidewall 162 of the cyclone 154 and exits the cyclone chamber 166 through the dirt outlet 186, shown as a slot dirt outlet in the sidewall 162 of the cyclone 154, into the dirt collection chamber 184 external to the cyclone 154. The air flow may then travel downwardly through the open first end 210 of the insert 208 toward the vortex finder 178.

Alternately, as exemplified in Figure 17E, the first end 210 of the insert 208 includes a screen 216. The air outlet 170 does not include a porous portion such that only the solid air outlet conduit 172 extends into the interior of the insert 208. It will be appreciated that the screen and porous portion may be used in combination, such as by adding a screen 216 to the open end 210 of the insert 208 in the examples illustrated in Figures 17A and 17E, for example.

As discussed with respect to a cyclone, the air impermeable insert 208 may have any non-circular shape in the plane that is transverse to the cyclone axis of rotation 160. For example, as discussed previous with respect to the cyclone, the air impermeable insert 208 may be ovaloid, ellipsoid (see, e.g., Figure 17B), nautiloid, or rectangular with rounded ends (see, e.g., Figure 17C). It will be appreciated that the long diameter D₁ and the shorter diameter D₂ may extend in the same direction as the long diameter D₁ and the shorter diameter D₂ of the cyclone and/or the cyclone bin assembly. Alternately, the long diameter D₁ and the shorter diameter D₂ of the air impermeable insert 208 may be oriented differently to the long diameter D₁ and the shorter diameter D₂ of the cyclone and/or the cyclone bin assembly. For example, the long diameter D₁ of the air impermeable insert 208 may extend in the direction of the shorter diameter D₂ of the cyclone and/or the cyclone bin assembly.

An insert 208 having a non-circular shape in the plane that is transverse to the cyclone axis of rotation 160 may be used, alone or in combination with a cyclone 154 having a non-circular shape, to change the size of the air flow region between the inner surface of the cyclone sidewall 162 and the outer surface of the insert sidewall 214. Accordingly, a non-circular insert 208 may compensate for the compression of air as it rotates within the cyclone over at least a portion of the air flow path as the air rotates around the cyclone axis of rotation by decreasing the radial width of the air flow region between the cyclone sidewall 162 and the insert sidewall 214.

### Offset Cyclone Air Outlet and/or Offset Insert

In accordance with another aspect of this disclosure, which may be used alone or in combination with any other aspect, a component that is positioned inside the cyclone may be located off center from the cyclone axis of rotation. Accordingly, the vortex finder 178 may be located off center from the cyclone axis of rotation. If an insert 208 is provided, then the insert 208 may be located off center from the cyclone axis of rotation and/or the air outlet 170 may be located off center from the center of the insert 208.

According to this aspect, the vortex finder 178 or the insert 208 if an insert is provided may be positioned off center from a center of the cyclone sidewall 162 to adjust the radial width of the air flow region around at least a portion of the air flow path.

Optionally, one or more of the cyclone, the insert 208 and the air outlet 170 may have a non-circular cross-sectional area and the non-circular cross-section area of one or more of the cyclone, the insert 208 and the air outlet 170 may be the same of different.

Accordingly, the cyclone air outlet 170 (e.g., vortex finder 178) may be laterally spaced from the cyclone axis of rotation to thereby be further spaced from the cyclone air inlet 168 than if the cyclone air outlet 170 were positioned to be centered around the cyclone axis of rotation. Accordingly, a central outlet axis of the cyclone air outlet 170 may be off center from the cyclone axis of rotation 160. An advantage of this embodiment is that the cyclone air outlet 170 may be spaced further from the dirty air stream at the location at which it enters the cyclone chamber, which may reduce the tendency of dirty air from directly impacting or travelling to, e.g., a porous portion 182, from the cyclone air inlet 168. For example, the vortex finder 178 may be offset from the cyclone axis of rotation by a distance in the range of from about 40% of the diameter of the vortex finder to about 25% of the diameter of the vortex.

As discussed subsequently, as dirty air travels in a cyclonic air flow path about the cyclone axis of rotation 160, the dirty air compresses. Accordingly, the cyclone air outlet 170, or insert 208 if one is provided, may be positioned off center from the cyclone axis of rotation 160 to compensate partially or fully for the compression of the air over at least a portion of the air flow path by decreasing the radial flow area between the sidewall 162 and the air outlet 170 or insert 208.

As exemplified in Figures 16A and 16B, the vortex finders 178 are offset from the cyclone air inlet 168 and off center from the cyclone axis of rotation 160. As positioned, the space between the vortex finders 178 and the inside of the sidewalls 162 of the cyclones 154 decreases along the air flow path from the dirty air inlet over a portion of the air flow path. Accordingly, the vortex finders 178 as positioned compensate for the compression effect over at least a portion of the air flow path.

As exemplified in Figure 16C, the nautiloid shaped vortex finder 178 has a radius that continuously increases angularly about the cyclone axis of rotation in the direction of airflow (clockwise) from the air inlet 168. The vortex finder 178 has a straight segment to close the nautiloid shape. Accordingly, the nautiloid shaped vortex finder 178 may reduce the radial width of the air flow path of the dirty air within the cyclone chamber 166 for a larger portion of the airflow path.

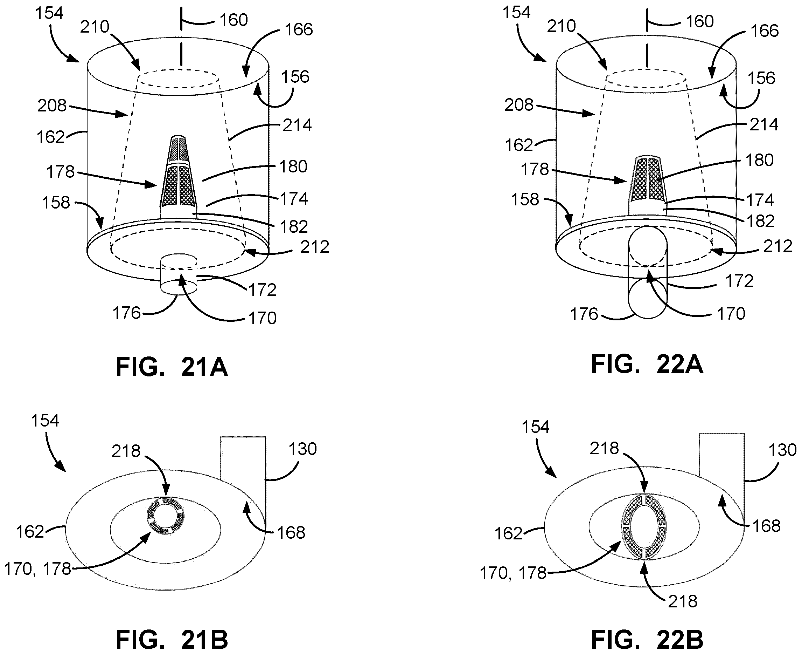

Alternately, or in addition, if an insert 208 is provided, then the cyclone air outlet 170 may be centered within the interior of the insert 208 (as exemplified in Figures 18A to 20B) or it may be offset from a radial center of the insert 208 (as exemplified in Figure 21B).

In any embodiment, whether centered in the insert 208 or not, the cyclone air outlet 170 may have one or more points of contact with an inner surface of the sidewall 214 of the insert 208. As exemplified in Figures 21A and 21B, the cyclone air outlet 170 is off set from the center of the insert 208 and has a circular cross-section, wherein the solid portion 182 is cylindrical and the porous portion 180 is conical extending from the first end 174 of the air outlet conduit 172 axially inwardly into the interior of the insert 208. In the example shown, there is one point of contact 218 between a first portion of the cyclone air outlet 170 and a first portion of an inner surface of the insert sidewall 214.

As exemplified in Figures 22A and 22B, the cyclone air outlet 170 is centered in the insert 208 and has an ellipsoid shaped cross-sectional area, wherein the solid portion 182 is cylindrical and the porous portion 180 is frusto-conical. In the example shown, there are two points of contact 218. A first portion of the cyclone air outlet 170 is in contact with a first portion of an inner surface of the insert sidewall 214. A second portion of the cyclone air outlet 170, which is angularly spaced from the first portion, is in contact with a second portion of an inner surface of the insert sidewall 214.

It will be appreciated that any combination of circular and non-circular shaped air outlets and inserts may be used and positioned in any orientation with respect to each other to change the extent and/or location of the point(s) of contact.

The air outlet 170 may have the same cross-sectional shape as the insert 208 (see for example Figure 18B), partially the same cross-sectional shape as the insert 208 (see for example Figure 19B), or a different cross-sectional shape than the insert 208 (see for example Figure 20B). If the cross-sectional shape of the air outlet 170 is partially the same as the cross-sectional shape of the insert 208, the perimeter of the air outlet 170 may, along one or more segments, be coincident with the perimeter of the insert 208 (i.e., follow the same shape). For example, at least 15%, at least 30%, at least 40%, or at least 60% of the perimeter of the cyclone air outlet 170 may be coincident with the inner surface of the sidewall 214 of the insert 208.

### Cyclone Chamber Air Flow Region

In accordance with another aspect of this disclosure, which may be used alone or in combination with any other aspect, one or more of the cyclone 154, the radius of the flow region inside the cyclone (in a plane transverse to the cyclone axis of rotation) varies as the air rotates around the cyclone axis of rotation.

As discussed previously, air compresses as the air rotates within the cyclone. Accordingly, as exemplified in Figure 34, in a traditional cylindrical cyclone, (in a plane transverse to the cyclone axis of rotation) as the air rotates in the cyclone chamber, the radius of the band of air 300 of air that rotates ion the cyclone (i.e., the distance between the inner boundary 303 and outer boundary 304 of the band of air that rotates in the cyclone) will reduce as the air rotates in the cyclone chamber. Accordingly, as exemplified, the radius will reduce from r₁ at the cyclone air inlet to r₂ after the air has rotated 90° in the cyclone chamber, to r₃ after the air has rotated 180° in the cyclone chamber to r₄ after the air has rotated 270° in the cyclone chamber and the air will further compress as the air completes a rotation around the cyclone axis of rotation. Accordingly, as the air rotates, a flow gap 302 will form between the outer boundary 304 of the flow region 300 and the inner surface 306 of the cyclone sidewall.

In accordance with this aspect, the interior volume of a cyclone (i.e., the open volume in which air may rotate) is shaped to partially or fully match the radius of the band of air 300. Accordingly, for example, the perimeter of the cyclone sidewall, in a plane transverse to the cyclone axis of rotation may be shaped to reduce the interior volume in the cyclone in the direction of rotation of air in the cyclone. Accordingly, for example, if no insert 208 is provided, then the radial distance between a vortex finder 178, which is circular in transverse section, and the inner surface 306 of the cyclone sidewall may be reduced by changing the shape of the sidewall of the cyclone to partially or fully match the location of the outer boundary 304 of the flow region. Accordingly, the radial thickness of the flow gap 302 may be reduced or, optionally, eliminated, for all of part of the angular distance around the cyclone axis of rotation.

Alternately, or in addition, if an insert 208 is provided, then the shape of the insert 208 may be adjusted to reduce or eliminate the flow gap for part or all of the angular distance around the cyclone axis of rotation. For example, if the cyclone sidewall is circular in transverse section and the insert 208 is shaped to fully eliminate the flow gap 302, then the air will not compress inwardly as it rotates in the cyclone. Instead, the radius of the flow region 300 will match the radius of the interior volume of the cyclone between the insert and the cyclone sidewall. It will be appreciated that, in this way, the flow gap 302 may be eliminated for part of all of the angular distance around the cyclone axis of rotation (e.g., 90°, 180°, 270°, 360° or any other angular portion)

Alternately, if no insert 208 is provided, then the shape of the vortex finder 178 may be similarly adjusted to reduce or eliminate the flow gap for part or all of the angular distance around the cyclone axis of rotation.

Accordingly, by varying one or more of the shape of the sidewall of the cyclone, an insert (if an insert is provided) or a vortex finder (if no insert is provided), and/or the position of an insert with respect to the cyclone axis of rotation (if an insert is provided) or the position of a vortex finder with respect to the cyclone axis of rotation (if no insert is provided), the shape of the interior volume of a cyclone may be adjusted. Accordingly, the insert 208 and/or vortex finder 178, may have a non-circular cross-sectional area in the plane that is transverse to the axis of rotation 160 of air in the air flow region. The shape of the cross-sectional area of any non-circular element may be individually selected from ovaloid, ellipsoid, nautiloid, rectangular with rounded ends, rectangular with rounded corners, or any combination thereof, in accordance with any of the example embodiments described herein. Any other non-circular cross-sectional shape may be used.

It will be appreciated that the shape of the shape of the interior volume of a cyclone may vary continuously and may vary at a constant rate. Accordingly, for example, r₄ may be less than r₃, which may be less than r₂, which may be less than r₁, and optionally, the rate of decrease in the radius may be constant or variable.

It will be appreciated that each non-circular element may have the same shape or a different shape.

If two non-circular elements are provided, then the non-circular elements may have any orientation with respect to one another, such as oriented with the major dimension of each element extending parallel to one another, or oriented with the major dimension of one element extending transverse to the major dimension of at least one other element.

Alternately, or in addition, the elements, one or more of which may be non-circular, may be positioned such that a central longitudinal axis (i.e., an axis parallel to the cyclone axis of rotation) of each element is coincident or offset from each other.

Accordingly, it will be appreciated that, the combination of shapes of the non-circular cross-sectional area of each element and/or the relative positioning and or orientation of each element may alter the width of the interior volume of a cyclone within the cyclone chamber 166 between the inner surface of the sidewall 162 of the cyclone 154 and the outer surface of the sidewall 214 of the insert 208, where used, or the outer surface of the vortex finder 178. For example, the width of the interior volume of a cyclone may be constant, vary, or decrease continuously angularly about the cyclone axis of rotation 160. The combination of shapes of the non-circular cross-sectional area of each element and/or the relative positioning of each element may approximate the compression effect of the dirty air during cyclonic air flow by decreasing the width of the width of the interior volume of a cyclone over at least a portion of the air flow path. In some embodiments, this may enable the surface cleaning apparatus to have a slimmer profile or to be more compact as described previously.

As exemplified in Figure 23A, the cyclone 154 and vortex finder 178 have a similarly shaped ovaloid cross-sectional area. The major dimension of each element is parallel and extends in the lateral direction of the surface cleaning apparatus 100, and the vortex finder 178 is centered in the cyclone 154. Accordingly, the width of the airflow region within the cyclone chamber 166 between the inner surface of the sidewall 162 of the cyclone 154 and the outer surface of the vortex finder 178 is constant about the cyclone axis of rotation.

As exemplified in Figure 17B, insert 208 has an ovaloid cross-sectional area shaped similarly to the cyclone 154 and is centered within the cyclone 154. Accordingly, the width of the airflow region within the cyclone chamber 166 between the inner surface of the sidewall 162 of the cyclone 154 and the outer surface of the sidewall 214 of the insert 208 is constant about the cyclone axis of rotation.

As exemplified in Figure 17C, the sidewall 214 of the insert 208 defines a rectangular cross-section with rounded ends. The sidewall 162 of the cyclone 154 defines a cyclone chamber 166 having an ovaloid cross-section such that the air flow region between the inner surface of the cyclone sidewall 162 and the outer surface of the insert sidewall 214 varies angularly about the cyclone axis of rotation. The insert 208 is further positioned off center from a center of the cyclone sidewall 162. By positioning the insert 208 off center from the cyclone axis of rotation as shown, the reduction in the width of the airflow region may be more consistent over a larger portion of the air flow path than if the insert 208 was centered. This may therefore assist in more closely approximating the compression effect of the air flow path and/or approximating the compression effect over a larger portion of the air flow path.

As exemplified in Figure 23B, each of the cyclone 154 and vortex finder 178 have a nautiloid cross-sectional area. The radius of the cyclone 154 decreases continuously angularly clockwise about the cyclone axis of rotation from the cyclone air inlet 168, and the perimeter of the cyclone 154 is closed by a segment having a differently shaped curve. The radius of the vortex finder 178 increases continuously angularly clockwise about the cyclone axis of rotation from the cyclone air inlet 168, and the vortex finder 178 is closed by a straight segment. Accordingly, the width of the airflow region within the cyclone chamber 166 between the inner surface of the sidewall 162 of the cyclone 154 and the outer surface of the vortex finder 178 decreases continuously about the cyclone axis of rotation along a portion of the airflow path (i.e., from the cyclone air inlet 168 to the start of the straight and differently curved segments). It will be appreciated that a similar effect may be achieved with a nautiloid cyclone 154 and circular vortex finder 178 (see for example Figure 12D) or a circular cyclone 154 and a nautiloid vortex finder 178 (see for example Figure 16C).

In any embodiment, the width of the air flow region may vary between the cyclone 154 and the insert 208 or vortex finder 178, where the cyclone 154 has a differently shaped cross-sectional area than the insert 208 or vortex finder 178. For example, the width of the airflow region may vary where a circular cyclone 154 is used with a non-circular insert 208 or vortex finder 178 (see for example Figures 12A to 12C), where a non-circular cyclone 154 is used with a circular insert 208 or vortex finder 178 (see for example Figures 16A to 16B), or where a non-circular cyclone 154 is used with a non-circular insert 208 or vortex finder 178 having a different or differently oriented cross-sectional shape (see for example Figures 12E and 17C).

### Air Inlet

In accordance with another aspect of this disclosure, which may be used alone or in combination with any other aspect, the cyclone air inlet may have a non-circular cross-sectional area, in a plane transverse to a direction of flow through the cyclone air inlet, along part or all of the length of the cyclone air inlet.

The cyclone air inlet 168 may have a circular or a non-circular cross-sectional area, such as ovaloid, ellipsoid, or any other shape discussed herein with respect to a cyclone. If the cyclone air inlet 168 has a non-circular cross-section, it may be oriented with the major dimension extending in the direction of the cyclone axis of rotation 160 or in a direction perpendicular to the cyclone axis of rotation 160.

As exemplified in Figures 26A and 26B, the cyclone air inlet 168 has an ovaloid shaped cross-section, the major dimension of which is oriented extending parallel to the direction of the cyclone axis of rotation 160. The cyclone bin assembly inlet conduit 130 similarly has a non-circular cross-section and passes through the sidewall 140 of the cyclone bin assembly 116 and the sidewall 162 of the cyclone 154 to introduce dirty air tangentially into the cyclone chamber 166.

### Deflecting Members

In accordance with another aspect of this disclosure, which may be used alone or in combination with any other aspect, the dirt collection region is or comprises a laterally positioned portion of a contiguous volume in which the air cyclones. As exemplified in Figure 12F, the contiguous volume comprises or consists of a cyclone portion 166 and a dirt collection portion 184 that are contiguous with each other and one or more deflecting members 220 may be provided at the interface of the cyclone portion 166 and the dirt collection portion 184.

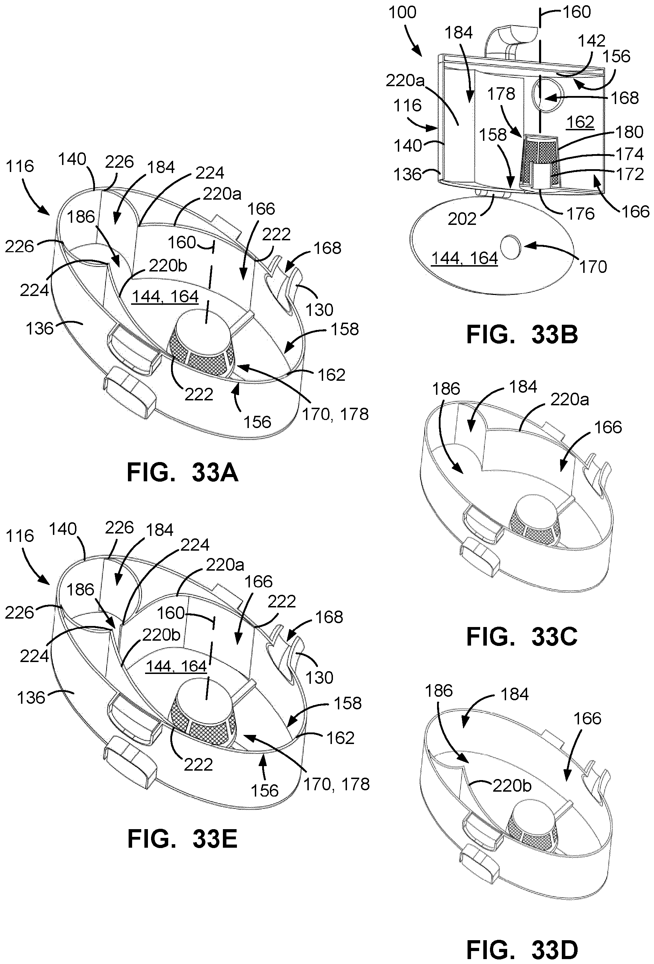

If a single deflecting member is provided (see for example Figure 33C), then the dirt outlet 186 may be defined by the space between the innermost point of a first deflecting member 220a and the inner surface of the sidewall 140 of the cyclone bin assembly 116 immediately downstream thereof in a direction of rotation of air in the cyclone portion 166,

If two deflecting members are provided (see for example Figure 33E), then the dirt outlet 186 may be defined by the space between the innermost point of a first deflecting member 220a and the innermost point of a second deflecting member 220b.

Each deflecting member 220 positioned in a rotational airflow path in the cyclone portion 166 may inhibit air rotating in the cyclone portion 166 from entering the dirt collection portion 184, while permitting particulate matter to exit the cyclone portion 166 through the dirt outlet 186. Accordingly, the deflecting member 220 or members assist in maintaining air swirling or rotating in the cyclone portion 166 and reduce or inhibit the tendency of air in cyclone portion 166 to enter into dirt collection portion 184 and swirl or rotate therein. Accordingly, each deflecting member 220 may be shaped, such as curved in a direction of rotation in the cyclone portion 166, to form a portion of the sidewall of the cyclone portion 166. Accordingly, as the air cyclones within the cyclone portion 186, the deflecting member or members 220 may assist in causing the air to change direction to continue rotating with the cyclone portion. However, entrained dirt which has a higher density may not be able to change direction as quickly as the air and therefore travel in the opening between opposed directing members ( if two are provided). And enter the dirt collection portion. The opening between opposed directing members may be referred to as dirt outlet 186.

As exemplified in Figures 33A-33E, the deflecting members 220 extend inwardly from the inner surface of the sidewall 140 of the cyclone bin assembly 116. As exemplified in Figures 33A-33D, the deflecting members follow the curvature of the sidewall immediately upstream or downstream thereof. The deflecting members may have a greater curvature than the sidewall immediately upstream or downstream thereof. Accordingly, each deflecting member 220 may be integrally formed with the sidewall 140 of the cyclone bin assembly 116 or removably couplable thereto.

Each deflecting member 220 may extend along all of a portion of the axial length of the sidewall 140 of the cyclone bin assembly 116 from the first end 156 to the second end 158. Accordingly, an open interface (dirt outlet 186) may extend along the axial length of the cyclone portion 166 and the cyclone portion166 may be referred to as an open cyclone portion 166. Alternately, the sidewall of the cyclone portion 166 may be continuous for a portion of the axial length of the cyclone portion 166 to thereby form a closed cyclone portion (a cyclone chamber with a continuous wall in a plane transverse to the cyclone axis of rotation) for apportion of the length of the cyclone portion 166. In such a case, an open interface (dirt outlet 186) may extend along a portion of the axial length of the cyclone portion 166 and a subsequent portion of the axial length of the cyclone portion 166 may have a continuous wall in a plane transverse to the cyclone axis of rotation. Optionally, a series of closed cyclone chamber portions and open cyclone chamber portions may be provided along the axial length of the cyclone portion 186.

As discussed previously with respect to a cyclone, the cyclone portion may be circular or non-circular in a plane transverse to the cyclone axis of rotation. Similarly the dirt collection portion may be circular or non-circular in a plane transverse to the cyclone axis of rotation. Any non-circular shape may be used. Accordingly, the sidewall 162 of the cyclone portion 166 may be bound by a portion of the sidewall 140 of the cyclone bin assembly 116 and a portion of one or more deflecting members 220 to define a cyclone portion 166 that is ovaloid, ellipsoid, rectangular with rounded ends, etc. The dirt collection portion 184 may be bound by a portion of the sidewall 140 of the cyclone bin assembly 116 and another portion of the one or more deflecting members 220.

Optionally, the innermost point of a first (downstream) deflecting member 220a may by slightly offset radially inwardly towards the vortex finder 178 from the innermost point of an upstream second deflecting member 220b, such as slightly closer to the vortex finder 178. In this way, the first deflecting member 220a may form a lip that may facilitate the transfer of particulate matter from the cyclone portion 166 to the direct collection portion 184 by catching the particulate matter as it travels in the cyclonic air flow path. In other words, the dirt may not change direction sufficiently and may contact the dirt collection portion side of a deflecting member after passing through the dirt outlet 186.The lip may also prevent the recirculation of the particulate matter back into the air flow path in the cyclone portion 166.

Referring again to Figures 33A and 33B, the example cyclone bin assembly 116 includes two deflecting members 220a, 220b removably positioned within the housing 136. The deflecting members 220a, 220b extend from the top wall 142 to the bottom wall 144 of the housing 136. The deflecting members 220a, 220b have a first end 222 provided on the inner surface of the sidewall 140 and a free outer end 224 that is located inwardly from the inner surface of the sidewall 140. The deflecting members 220a, 220b are curved in the direction of rotation about the cyclone axis of rotation 160 in the cyclone portion 166 between the first end 222 and the free outer end 224. The ovaloid cyclone portion 166 is thus defined by the sidewall 140 at the air inlet side of the cyclone bin assembly 116 and the curved portion of each deflecting member 220a, 220b between the first end 222 and the free outer end 224. Optionally, as in the example shown, the deflecting members 220a, 220b include a second end 226 provided on the inner surface of the sidewall 140 that may be formed to define a dirt collection portion 184 having any cross-sectional shape. In the example shown, the deflecting members 220a, 220b are curved in the direction of rotation between the free outer end 224 and the second end 226 and, together with the sidewall 140 opposite the air inlet side of the cyclone bin assembly 116, form the circular dirt collection portion 184. The dirt outlet 186 is defined by the gap between the free outer end 224 of each deflecting member 220a, 220b.

Optionally, only one of deflecting members 220a, 220b may be used, or one of deflecting members 220a, 220b may be removed. For example, in Figure 33C only the downstream deflecting member 220a is used. In Figure 33D, only the upstream deflecting member 220b is used. If one deflecting member 220 is used, it may be advantageous to position the deflecting member in the cyclonic air flow path as is the example shown in Figure 33D to inhibit air rotating in the cyclone portion 166 from entering the dirt collection portion 184. The free end 224 of the deflector 220 may extend any distance inwardly from the inner surface of the sidewall 140 of the cyclone bin assembly 116 to define a dirt outlet 186 of any size and provide suitable separation between the cyclone portion 166 and the dirt collection portion 184.

Referring to Figure 33E, in the example shown, two deflecting members 220a, 220b are used and the free end 224 of the first deflecting member 220a extends further inwardly from the inner surface of the sidewall 140 of the cyclone bin assembly 116 than the free end 224 of the second deflecting member 220b. The cyclonic airflow may accelerate around the narrow ends of a non-circular cyclone portion 166 such that greater separation of the particulate matter from the air flow may occur in the cyclone portion 166 around the narrow ends. It may therefore be advantageous to position the dirt outlet 186 at the narrow ends, such as the start of the narrow curve (as shown in Figure 33D) or the end of the narrow curve by providing one deflecting member 220 having a free end 224 that extends further inwardly from the inner surface of the sidewall 140 of the cyclone bin assembly 116 than the free end 224 of another deflecting member 220.

### Cyclone Bin Configurations

It will be appreciated that a cyclone bin assembly may be constructed using any of the cyclone, the dirt chamber (alternately a dirt region or dirt or portion), the insert (if provided) and the air outlet shapes, positioning (on or off center) and orientations discussed herein. In addition, optionally, one or more deflecting member may be used. Further, the position of the cyclone air inlet, the cyclone air outlet, the dirt outlet may be at any location discussed herein.

Accordingly, a cyclone bin assembly may be provided which comprises a non-circular cyclone with a slot dirt outlet. The cyclone may be inverted, non-inverted or a uniflow cyclone. An upper dirt outlet may be provided and the dirt collection chamber may be laterally positioned beside the cyclone and both the cyclone and the dirt collection chamber have ends that empty concurrently.

For example, a cyclone bin assembly may comprise a non-circular inverted cyclone with an upper dirt outlet wherein at least a portion of the cyclone sidewall is spaced from the upper end wall. The dirt chamber is laterally beside the cyclone and both the cyclone and the dirt collection chamber have an end that empty concurrently.

As another example, the cyclone may be a non-circular cyclone portion with a contiguous dirt collection portion on one or both sides of the cyclone portion. The vortex finder is centered in cyclone the cyclone portion but off-center with respect to the dirt collection portion.

In the example shown in Figure 27A, the cyclone 154 is an inverted cyclone wherein the cyclone air inlet 168 is a tangential air inlet and the cyclone air inlet 168 and the and cyclone air outlet 170 are at the second end 158 of the cyclone 154. The dirt outlet 186 is at the first end 156 of the cyclone 154. The dirt outlet 186 is a slot or opening in the sidewall 162 of the cyclone 154 proximate the top wall 142 of the cyclone bin assembly 116 facing a lateral side of the surface cleaning apparatus 100. The cyclone air outlet 170 includes cylindrical vortex finder 178 positioned around the portion of the air outlet conduit 172 extending axially inwardly into the cyclone chamber 166. The vortex finder 178 includes the solid portion 182 proximate the cyclone air inlet 168 and the porous portion 180 extending axially inwardly from the solid portion 182. From the cyclone air inlet 168, dirty air may travel upwardly in a cyclonic air flow path about the circular vortex finder 178 in the air flow region of the non-circular cyclone chamber 166, and particulate matter may be thrown from the air flow and exit the cyclone chamber 166 laterally through the dirt outlet 186 into the dirt collection chamber 184 (i.e., when the cyclone axis of rotation extends 160 vertically). The particulate matter may accumulate in the dirt collection chamber 184 within the sidewall 140 of the cyclone bin assembly 116 between the lower wall of the cyclone 154 and the bottom wall 144 of the cyclone bin assembly 116. The air flow may then travel downwardly through the porous portion 180 of the vortex finder 178 and through the air outlet conduit 172 toward the suction motor. The portion of the air outlet conduit 172 between the lower wall of the cyclone 154 and the bottom wall 144 of the cyclone bin assembly 116 also serves as the connector 204 permitting the lower wall of the cyclone 154 and the bottom wall 144 of the cyclone bin assembly 116 to rotate together about the pivot 202 to empty the cyclone 154 and the dirt collection chamber 184 concurrently. Optionally, the outlet conduit terminates at the lower wall 164 and the solid portion may be an extension of the outlet conduit and have the same diameter and optionally shape thereof.

Referring to Figure 27B, the cyclone 154 is a uniflow cyclone wherein the cyclone air inlet 168 is an axial air inlet at the first end 156 of the cyclone and cyclone air outlet 170 and the dirt outlet 186 are at the second end 158 of the cyclone 154. The dirt outlet 186 is a slot or opening in the sidewall 162 of the cyclone 154 proximate the lower wall 164 of the cyclone 154 facing a lateral side of the surface cleaning apparatus 100. The cyclone air outlet 170 includes a frusto-conical vortex finder 178, optionally positioned around the portion of the air outlet conduit 172, extending axially inwardly into the cyclone chamber 166. From the cyclone air inlet 168, dirty air may travel downwardly in a cyclonic air flow path about the non-circular vortex finder 178 in the air flow region of the non-circular cyclone chamber 166, and particulate matter may be thrown from the air flow and exit the cyclone chamber 166 laterally through the dirt outlet 186 into the dirt collection chamber 184. The major dimension of the vortex finder 178 and air outlet 170 is shown to be about perpendicular to the major dimension of the cyclone 154. Particulate matter may accumulate, and the cyclone chamber 166 and the dirt collection chamber 184 may be concurrently emptied, as described with respect to Figure 27A. The air flow may then travel downwardly through the porous portion 180 of the vortex finder 178 and through the air outlet conduit 172 toward the suction motor.

Referring to Figure 27C, the cyclone 154 is a uniflow cyclone wherein the cyclone air inlet 168 is an axial air inlet and the cyclone air inlet 168 and the dirt outlet 186 at the first end 156 of the cyclone 154. The cyclone air outlet 170 is at the second end 158 of the cyclone 154. The dirt outlet 186 is a slot or opening in the sidewall 162 of the cyclone 154 proximate the top wall 142 of the cyclone bin assembly 116 facing a lateral side of the surface cleaning apparatus 100. The cyclone air outlet 170 includes conical vortex finder 178, optionally positioned around the air outlet conduit 172, extending axially inwardly into the cyclone chamber 166. From the cyclone air inlet 168, dirty air may travel downwardly in a cyclonic air flow path about the non-circular vortex finder 178 in the air flow region of the non-circular cyclone chamber 166, and particulate matter may be thrown from the airflow and exit the cyclone chamber 166 laterally through the dirt outlet 186 into the dirt collection chamber 184. The particulate matter may accumulate in the dirt collection chamber 184 at a lateral side of the cyclone 154 between the sidewall 140, top wall 142, and bottom wall 144 of the cyclone bin assembly 116, and the sidewall 162 of the cyclone 154. The major dimension of the vortex finder 178 and air outlet 170 is shown to be about parallel to the major dimension of the cyclone 154. The lower wall 164 of the cyclone 154 is formed as part of the bottom wall 144 of the cyclone bin assembly 116 such that there is no intervening portion of the air outlet conduit 172 therebetween. The lower wall 164 of the cyclone 154 and the bottom wall 144 of the cyclone bin assembly 116 thus rotate together about the pivot 202 to empty the cyclone 154 and the dirt collection chamber 184 concurrently.

Figures 28A and 28B are cross-sectional views of the example cyclone bin assembly 116 of Figure 26B while closed and while being emptied. In the example shown, the cyclone 154 is a uniflow cyclone wherein the cyclone air inlet 168 is a tangential air inlet at the first end 156 of the cyclone 154 and the cyclone air outlet 170 and the two dirt outlets 186a, 186b are at the second end 158 of the cyclone 154. The dirt outlets 186a, 186b are slots or openings in the sidewall 162 of the cyclone 154 proximate the lower wall 164 of the cyclone 154 spaced angularly from one another facing opposite lateral sides of the surface cleaning apparatus 100. The cyclone 154 is centered in the cyclone bin assembly 116. The cyclone air outlet 170 includes a frusto-conical vortex finder 178 having the porous portion 180 extending from the lower wall 164 and positioned around the air outlet conduit 172. From the cyclone air inlet 168, dirty air may travel downwardly in a cyclonic air flow path about the non-circular vortex finder 178 in the air flow region of the non-circular cyclone chamber 166, and particulate matter may be thrown from the airflow and exit the cyclone chamber 166 laterally through the dirt outlets 186a, 186b into the dirt collection chamber 184. Particulate matter may accumulate, and the cyclone chamber 166 and the dirt collection chamber 184 may be concurrently emptied, as described with respect to Figure 27A. It will be appreciated that in embodiments in which the lower wall 164 of the cyclone 154 is formed with the bottom wall 144 of the cyclone bin assembly 116, the dirt outlets 186a, 186b may be in the sidewall 162 of the cyclone 154 at the first end 156 of the cyclone 154, and particulate matter may accumulate between the sidewall 140, top wall 142, and bottom wall 144 of the cyclone bin assembly 116, and the opposed lateral sides (and optionally the forward side) of the sidewall 162 of the cyclone 154.

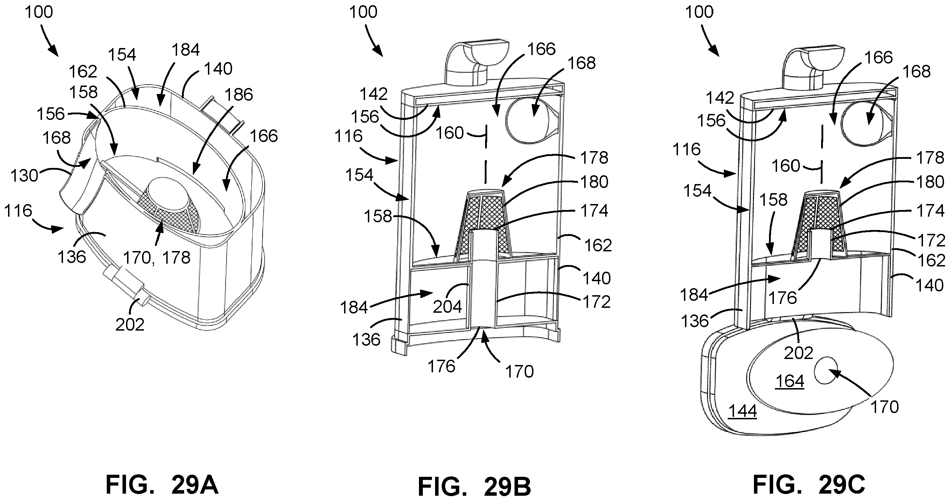

Figures 29A to 29C, exemplify a uniflow cyclone 154 wherein the cyclone air inlet 168 is a tangential air inlet at the first end 156 of the cyclone 154 and the cyclone air outlet 170 and the dirt outlet 186 are at the second end 158 of the cyclone 154. The dirt outlet 186 is a slot or opening in the sidewall 162 of the cyclone 154 proximate the lower wall 164 of the cyclone 154 facing the forward side of the surface cleaning apparatus 100. The major dimension of the ellipsoid cyclone 154 is about the same as the major dimension of the cyclone bin assembly 116 having a cross-sectional shape that is rectangular with rounded corners. The cyclone air outlet 170 includes a frusto-conical vortex finder 178 having the porous portion 180 only extending from the lower wall 164 and optionally positioned around the air outlet conduit 172. From the cyclone air inlet 168, dirty air may travel downwardly in a cyclonic air flow path about the non-circular vortex finder 178 in the air flow region of the non-circular cyclone chamber 166, and particulate matter may be thrown from the air flow and exit the cyclone chamber 166 in the forward direction through the dirt outlet 186 into the dirt collection chamber 184. Particulate matter may accumulate, and the cyclone chamber 166 and the dirt collection chamber 184 may be concurrently emptied, as described with respect to Figure 27A. It will be appreciated that in embodiments in which the lower wall 164 of the cyclone 154 is formed with the bottom wall 144 of the cyclone bin assembly 116, the dirt outlet 186 may be in the sidewall 162 of the cyclone 154 at the first end 156 of the cyclone 154, and particulate matter may accumulate between the sidewall 140, top wall 142, and bottom wall 144 of the cyclone bin assembly 116, and a forward side of the sidewall 162 of the cyclone 154.

While the example surface cleaning apparatuses of Figures 27A through 29C illustrate cyclone bin assemblies 116 of an upright vacuum cleaner, it will be appreciated that the description may be similarly applicable to other types of surface cleaning apparatuses, such and a hand or stick type vacuum. For example, Figures 30A and 30B, 31, and 32 each show cross-sectional views of an example cyclone bin assembly 116 of a hand or stick type vacuum. In the example shown in Figures 30A and 30B, the cyclone 154 is an inverted cyclone wherein the cyclone air inlet 168 is a tangential air inlet and the cyclone air inlet 168 and the cyclone air outlet 170 are at the second end 158 of the cyclone 154. The dirt outlet 186 is at the first end 156 of the cyclone 154. The dirt outlet 186 is a slot or opening in the sidewall 162 of the cyclone 154 proximate the front wall 164 of the cyclone 154. The cyclone air outlet 170 includes vortex finder 178 positioned around the portion of the air outlet conduit 172 extending axially inwardly into the cyclone chamber 166. The vortex finder 178 includes a cylindrical solid portion 182 proximate the cyclone air inlet 168 and a conical porous portion 180 extending from the solid portion 182. From the cyclone air inlet 168, dirty air may travel toward the front wall 164 in a cyclonic air flow path about the circular vortex finder 178 in the air flow region of the non-circular cyclone chamber 166, and particulate matter may be thrown from the air flow and exit the cyclone chamber 166 generally downwardly through the dirt outlet 186 into the dirt collection chamber 184. Alternately, the dirt outlet 186 may be positioned such that the particulate matter may be thrown from the air flow and exit the cyclone chamber 166 generally upwardly. The particulate matter may accumulate in the dirt collection chamber 184 within the sidewall 140 of the cyclone bin assembly 116 between the front wall 164 of the cyclone 154 and the bottom wall 144 of the cyclone bin assembly 116. The air flow may then travel toward the rear wall 142 of the cyclone bin assembly 116 through the porous portion 180 of the vortex finder 178 and through the air outlet conduit 172 toward the suction motor. As the air outlet 170 passes through the rear wall 142 (as opposed to the front wall 144 as in an upright vacuum), the front wall 164 of the cyclone 154 and the front wall 144 of the cyclone bin assembly 116 are coupled by a solid connector 204. As shown in Figure 30B, the connector 204 permits the front walls 144, 164 to rotate together about the pivot 202 to empty the cyclone chamber 166 and the dirt collection chamber 184 concurrently. It will be appreciated that, in a hand vacuum cleaner using this cyclone assembly, the cyclone axis may extend vertically or horizontally when (in the embodiment of Figure 8) flat surface 123 is positioned on a table.

The cyclone bin assembly of Figure 31 is similar to the cyclone bin assembly of Figure 30 except that two dirt outlets 186a, 186b are provided at the first end 156 of the cyclone 154 and the cyclone air outlet 170 includes vortex finder 178 having a frusto-conical porous portion 180 and a cylindrical solid portion 180 positioned proximate the air inlet 168.

The cyclone bin assembly of Figure 32 is similar to the cyclone bin assembly of Figure 31 except that two dirt outlets 186a, 186b are provided at the second end 158 of the cyclone 154 a vortex finder has a solid portion 180 proximate the air inlet 168.

Figures 33A and 33B exemplify a dirt collection portion 184 that is contiguous with a dirt collection portion and is spaced laterally from the cyclone portion. The cyclone air inlet 168 is located at the first end 156 of the cyclone portion 166 and the cyclone air outlet 170 is located at the second end 158 of the cyclone portion 166. Alternately, the cyclone air inlet 168 and the cyclone air outlet 170 may be located at the second end 158 of the cyclone portion 166. The cyclone air outlet 170 is centered in the cyclone portion 166 and off center with respect to the dirt collection portion 184. The dirt outlet 186 is an opening at the interface of the cyclone portion 166 and the dirt collection portion 184 extending between the first and second ends 156, 158. The cyclone portion 166 has an ovaloid cross-sectional area and the dirt collection portion 184 has a circular cross-sectional area. From the cyclone air inlet 168, dirty air may travel downwardly in a cyclonic air flow path about the non-circular vortex finder 178 in the air flow region of the non-circular cyclone portion 166, and particulate matter may be thrown from the air flow laterally through the dirt outlet 186 into the dirt collection portion 184. The lower wall 164 of the cyclone portion 166 is formed as part of the bottom wall 144 of the cyclone bin assembly 116 such that there is no intervening portion of the air outlet conduit 172 therebetween. The walls 144, 164 may thus rotate together about the pivot 202 to empty the cyclone portion 166 and the dirt collection portion 184 concurrently as exemplified in Figure 33B. It will be appreciated that more than one dirt collection region may be provided. For example, in the embodiment of Figure 33A, a second dirt collection region may be provided on a laterally opposed side to the exemplified dirt collection region.

### Upright and Stick Vacuum Cleaner Configurations

In accordance with this aspect, the suction unit 118 may have the same shape in a plane transverse to the cyclone axis of rotation as the cyclone bin assembly. Accordingly, the portable unit 114 may have the same shape in a plane transverse to the cyclone axis of rotation as the cyclone bin assembly.

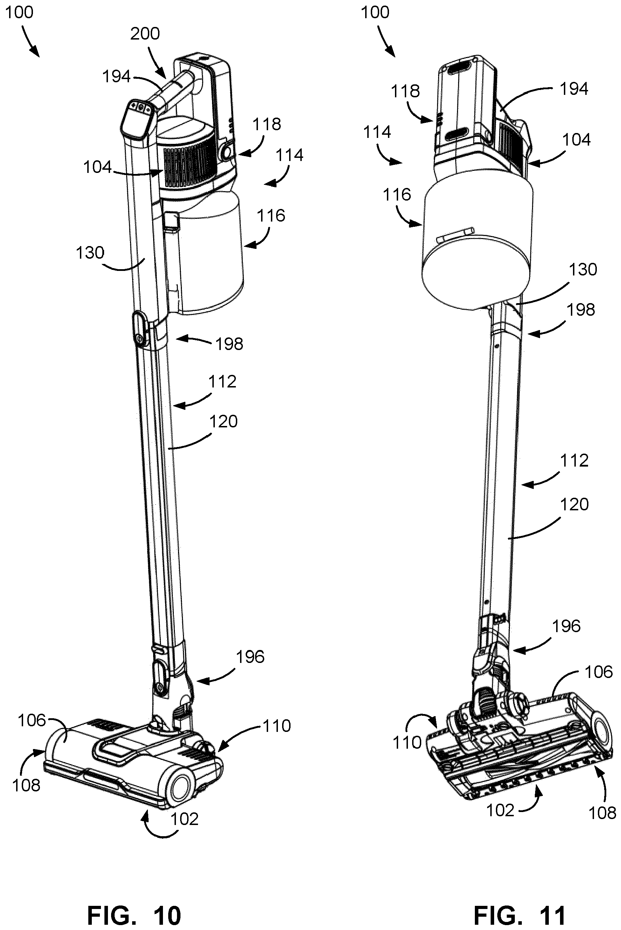

The non-circular cross-sectional area may therefore provide a surface cleaning apparatus having a slimmer profile in at least one dimension. Referring to Figure 1, the surface cleaning apparatus 100 is an upright vacuum cleaner having a non-circular cleaning unit 114, including the cyclone bin assembly 116 and suction unit 118, where the major dimension of the non-circular cleaning unit 114 is in the lateral direction (width) and the minor dimension of the non-circular cleaning unit 114 is in the forward/rearward (depth) direction. This configuration may be desirable for providing a surface cleaning apparatus having the same depth or a reduced depth while maintaining or increasing the dirt collection capacity of the cyclone bin assembly and/or cyclone therewithin. Referring to Figures 6 and 7, the hand/stick type surface cleaning apparatus 100 has a non-circular cyclone bin assembly 116 where the minor dimension is in the lateral direction (width) and the major dimension is in the forward/rearward (depth) direction (or vertical when the hand vacuum cleaner is oriented with the cyclone axis of rotation extending horizontally). This configuration may be desirable for providing a surface cleaning apparatus having the same width or a reduced width while maintaining or increasing the dirt collection capacity of the cyclone bin assembly and/or cyclone therewithin. Similarly, referring to Figures 10 and 11, the surface cleaning apparatus 100 is another hand/stick type vacuum cleaner having a non-circular cyclone bin assembly 116 where the major dimension is in the lateral direction (width) and the minor dimension is in the forward/rearward (depth) direction (or vertical when the hand vacuum cleaner is oriented with the cyclone axis of rotation extending horizontally). This configuration may be desirable for providing a surface cleaning apparatus having the same depth or a reduced depth while maintaining or increasing the dirt collection capacity of the cyclone bin assembly and/or cyclone therewithin.

It will be appreciated that the non-circular cross-sectional area may also provide a more compact surface cleaning apparatus. By adjusting the major and minor dimensions of the cross-sectional area of the non-circular cyclone or cyclone bin assembly, the cross-sectional area may be greater than a circular cyclone or cyclone bin assembly. By adjusting the length of the cyclone or cyclone bin assembly in the direction of the cyclone axis of rotation, the volume of the cyclone or cyclone bin assembly, and therefore the dirt collection capacity, may be further adjusted. Accordingly, using a non-circular cross-sectional area may advantageously enable a more compact surface cleaning apparatus with the same dirt collection capacity. For example, referring to Figure 10 and 11, in comparison to a circular cyclone bin assembly having a diameter equal to the minor dimension of the cyclone bin assembly 116, the cyclone bin assembly 116 may have the same or greater dirt collection capacity while simultaneously being shorter in the direction of the cyclone axis of rotation. The surface cleaning apparatus 100 as a whole may similarly be more compact through a reduction of the overall length of the surface cleaning apparatus in the longitudinal direction.

Reference is now made to Figures 12A to 12F, each showing a cross-sectional view from above of the surface cleaning apparatus 100 of Figure 1 along the plane transverse to the cyclone axis of rotation 160 when the plane is horizontal and the surface cleaning apparatus 100 is in the upright storage position. It will be appreciated that either or both of the cyclone bin assembly 116 and the cyclone 154 may have a non-circular cross-sectional area and, further, that the shape of the cross sectional area of the cyclone bin assembly 116 and the cyclone 154 may be the same, different, partially the same, or the same but having a different orientation.

In the example shown in Figure 12A, the sidewall 162 of the cyclone 154 defines a cyclone chamber 166 having an ovaloid shape. As shown, the sidewall 162 has first and second diameters, each of which is located in the horizontal plane. The first diameter D₁ extends transversely and is greater than the second diameter D2, which extends in a forward/rearward direction. As exemplified, the cyclone air inlet 168 introduces dirty air along a narrow side 168₁ of the ovaloid cyclone chamber 166. The narrow side 168₁ refers to the portion of the cyclone wherein the opposed walls are closer together - such as the portion of the cyclone with the tighter curve. Air is introduced along this portion of the sidewall or optionally immediately upstream thereof and directed to travel initially through the narrow side. Alternately, the cyclone 154 may be oriented such that the cyclone air inlet introduces dirty air along one of the elongated sides 168₂ of the ovaloid cyclone chamber 166. For example, as shown in Figure 12B, the sidewall 162 of the cyclone chamber 154 defines a cyclone chamber 166 having another ovaloid shape. As shown, the transversely extending first diameter of the sidewall 162 is less than the second diameter, which extends in the forward/rearward direction. The cyclone air inlet 168 thus introduces dirty air along an elongated side 168₂ of the ovaloid cyclone chamber 166. The elongated side 168₂ refers to the portion of the cyclone wherein the opposed walls are further apart - such as the portion of the cyclone with the slighter curve. Air is introduced along this portion of the sidewall or optionally immediately upstream thereof and directed to travel initially through the portion of the cyclone defined by the elongated side 168₂.

Orienting the ovaloid cyclone 154 as exemplified in Figure 12A may enable the surface cleaning apparatus 100 to have a slimmer or more compact profile in the forward/rearward direction. That is, when the ovaloid cyclone 154 is oriented such that the second diameter in the forward/rearward direction is less than the first diameter in the transverse or lateral direction, the cyclone bin assembly 136 may be slimmer in the forward/rearward direction. The suction unit 118 may optionally have the same shape as the cyclone bin assembly 116 such that the cleaning unit 114 is substantially consistently shaped in cross-section in the plane that is transverse to the cyclone axis of rotation (see for example Figure 1). This may make the surface cleaning apparatus 100 easier to store, easier to maneuver in any of the cleaning modes described herein, and/or able to fit/reach under low raised surfaces such as a bed or coffee table, for example, among other advantages.

As exemplified in Figures 12A and 12B, the cyclone bin assembly also includes an external dirt collection chamber. It will be appreciated that, optionally, the cyclone bin assembly 116 may also have the same, partially the same, or different non-circular cross-sectional shape as the cyclone 154. For example, in Figure 12A the sidewall 140 of the cyclone bin assembly 116 defines the same ovaloid shape as the cyclone 154 and has the same orientation as the cyclone 154. The sidewall 140 of the cyclone bin assembly 116 has a first or long diameter D₁ that is located in the transverse plane (i.e., to the cyclone axis of rotation) that extends transversely and is greater than a second or shorter diameter D₂ that is located in the plane and that extends in a forward/rearward direction.

As another example, in Figure 12B the sidewall 140 of the cyclone bin assembly 116 defines is ovaloid but oriented with the long diameter D₁ of the cyclone bin assembly 116 extending in a different direction to the long diameter D₁ of the cyclone 154. That is, the major dimension of the sidewall 140 of the cyclone bin assembly 116 in the transverse plane is transversely extending, while the major dimension of the sidewall 162 of the cyclone 154 extends in the forward/rearward direction. By comparison of the examples shown in Figures 12A and 12B, the surface cleaning apparatus 100 exemplified in Figure 12A has a slimmer profile than the surface cleaning apparatus 100 of Figure 12B.

It will be appreciated that the dirt collection region may be internal of the sidewall of the cyclone (i.e., no external dirt collection chamber is provided). In such a case, the perimeter of the cyclone bin assembly may be the perimeter of the cyclone. The cyclone may therefore define the shape of the suction unit 118 if the suction unit has the same shape.

Referring to Figure 12C, another example surface cleaning apparatus 100 is shown wherein the sidewall 140 of the cyclone bin assembly 116 defines an interior having the same shape as the cyclone chamber 166 defined by the sidewall 162 of the cyclone 154. In the example shown, each of the cyclone bin assembly 116 and the cyclone 154 are rectangular with rounded ends. As shown the sidewall 162 of the cyclone 154 includes two straight segments extending in the lateral direction between respective sides of the rounded ends. The rounded ends have a radius r. The radius r of each end is the same radius such that the two straight segments extend parallel to each other but, in some examples, each end may have a different radius and/or a different curvature.

Referring to Figure 12D, another example surface cleaning apparatus 100 is shown wherein the sidewall 140 of the cyclone bin assembly 116 defines an interior having a different shape than the cyclone chamber 166 defined by the sidewall 162 of the cyclone 154. As shown, the cyclone bin assembly 116 is rectangular with rounded ends. The cyclone 154 has an ever-decreasing radius from the air inlet angularly around the cyclone axis of rotation (referred to herein for simplicity as "nautiloid" shaped). A nautiloid shaped element may have a radius that increases or decreases continuously. For example, as shown in Figure 12D, the radius of the cyclone chamber 166 defined by the sidewall 162 of the cyclone 154 decreases in the angular direction about the cyclone axis of rotation in the direction of airflow (clockwise) from the air inlet 168. As the starting radius of a nautiloid shaped element would not match with the ending radius after a 360°rotation, the cyclone 154 has a straight segment (or may have a curved segment that deviates from the changing radius trend, in some examples) such that the nautiloid shaped cyclone 154 is closed. The straight segment or differently curved segment may extend any length of the sidewall 162 to enclose the cyclone chamber 166 without creating any significant edges, corners, or curves that may disrupt the cyclonic air flow within the cyclone chamber 166. Accordingly, it will be appreciated that a nautiloid shaped cyclone may closely approximate the compression in the air flow path of the dirty air in the cyclone chamber.

Referring to Figure 12E, another example surface cleaning apparatus 100 is shown wherein the sidewall 140 of the cyclone bin assembly 116 defines an interior having a different shape than the cyclone chamber 166 defined by the sidewall 162 of the cyclone 154. As shown, the cyclone bin assembly 116 is substantially rectangular with rounded corners. The cyclone chamber 166 is ellipsoid in the transverse plane. The sidewall 162 has a first diameter that is located in the plane that extends transversely and is greater than a second diameter that is located in the plane that extends in the forward/rearward direction. In the example shown, the first diameter is about the same as the lateral dimension of the cyclone bin assembly housing 140. In such examples, the first dirt outlet 186 may be a gap or slot in a forward portion of the sidewall 162 of the cyclone 154 to communicate with the dirt collection chamber 184 external thereto, such as forward of and/or below, the cyclone chamber 166. As expanded upon subsequently herein, the dirt outlet 186 may have any position in the sidewall 162 of the cyclone 154 to communicate with the dirt collection chamber 184. For example, as shown in Figures 12A to 12D, the first dirt outlet 186 is positioned to communicate with the external dirt collection chamber 184 positioned at a lateral side of and/or below the cyclone 154.

### Hand Vacuum Cleaner Configurations

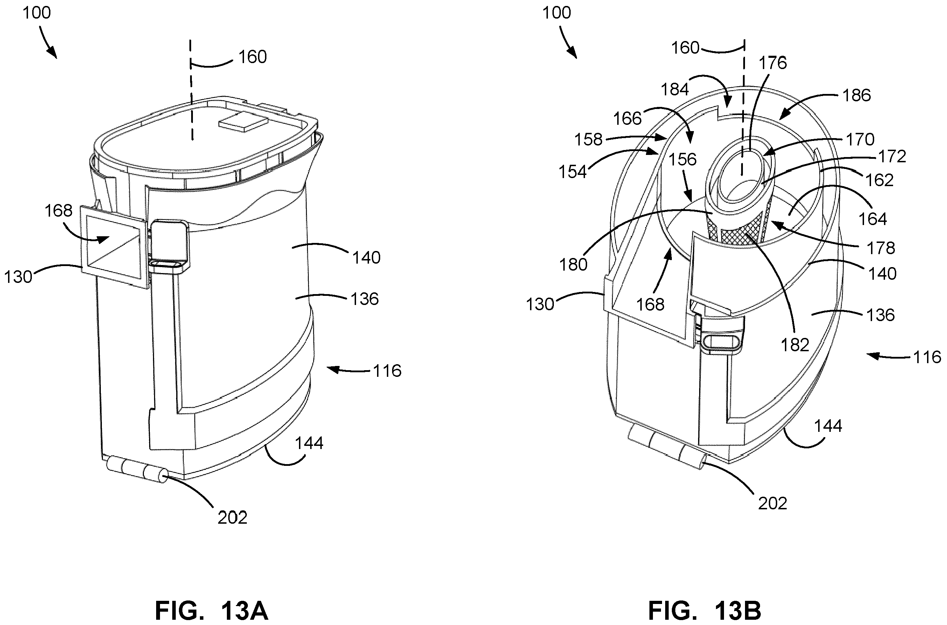

While the surface cleaning apparatus 100 exemplified in Figures 12A to 12F is an upright vacuum, it will be appreciated that the foregoing discussion may be equally applicable to other surface cleaning apparatus types, such as the stick/hand type surface cleaning apparatus 100 exemplified in Figures 6 and 10. For example, Figure 13A shows a perspective view of the cyclone bin assembly 116 of the surface cleaning apparatus 100 of Figure 6. The cyclone bin assembly 116 is oriented vertically (in the orientation it would have when mounted to a vertically extending wand of a stick vac) such that the cyclone axis of rotation 160 extends vertically. Figure 13B shows a cross-sectional view of the cyclone bin assembly 116 taken in the transverse plane. The sidewall 162 of the cyclone 154 defines a cyclone chamber 166 having an ovaloid cross-sectional area in the transversely extending plane. The sidewall 140 of the housing 136 of the cyclone bin assembly similarly defines an interior space having an ovaloid cross-sectional area in the transversely extending plane. In the example shown, the sidewalls 140, 162 each have a first diameter that is located in the plane and a second diameter that is located in the plane and less than the first diameter. In the orientation of Figure 6, the first diameter extends vertically and the second diameter extends transversely. When the hand vacuum cleaner is placed on, e.g., a table, the cyclone bin assembly would appear tall and slim (narrow).

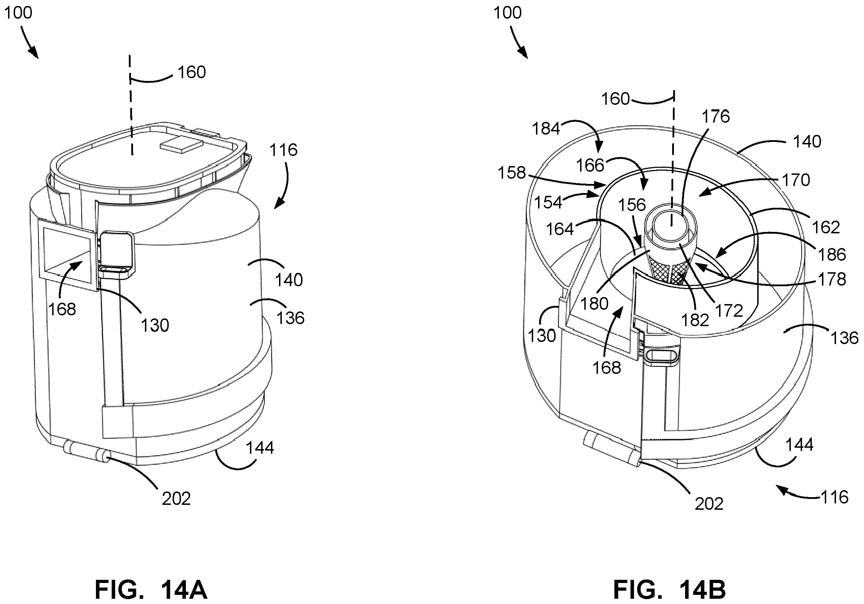

Referring to Figure 14A and Figure 14B show an alternate embodiment wherein the first diameter extends transversely and the second diameter extends vertically. When the hand vacuum cleaner is placed on, e.g., a table, the cyclone bin assembly would appear short and fat (wide).

While specific embodiments have been described and illustrated, such embodiments should be considered illustrative only and should not serve to limit the accompanying claims. No example described above limits any claimed invention and any claimed invention may cover processes or apparatuses that are not described above. The claimed inventions are not limited to apparatuses or processes having all of the features of any one apparatus or process described above or to features common to multiple or all of the apparatuses described above.

A number of variations may be made in the disclosed embodiments, all without departing from the scope of the invention, which is defined solely by the appended claims.

### Clause Set A

1. A surface cleaning apparatus comprising:
   (a) an air flow path from a dirty air inlet to a clean air outlet with a motor and fan assembly located in the air flow path;
   (b) a cyclone located in the air flow path, the cyclone having a first end, an opposed second end, a cyclone axis of rotation that extends between the first and second ends, a sidewall located between the first and second ends, a cyclone air inlet, a cyclone air outlet and a dirt outlet wherein a cyclone chamber is located internal of the sidewall between the first and second ends;
   (c) a dirt collection chamber external to the cyclone chamber and in communication with the cyclone chamber via the dirt outlet

   wherein the cyclone chamber has a non-circular cross-sectional area in a plane that is transverse to the cyclone axis of rotation, and
   wherein the dirt outlet is located at the first end and the cyclone air inlet and the cyclone air outlet are located at the second end.
2. The surface cleaning apparatus of clause 1 wherein the end comprises a first end wall, the sidewall extends to the first end wall and the dirt outlet comprises a gap between the sidewall and the first end wall.
3. The surface cleaning apparatus of clause 1 wherein the cyclone air outlet comprises a vortex finder which has a non-circular cross-sectional area in a plane that is transverse to the cyclone axis of rotation.
4. The surface cleaning apparatus of clause 3 wherein, in transverse section, the cyclone chamber and the vortex finder have a common shape.
5. The surface cleaning apparatus of clause 3 wherein, in transverse section, the shape of the cyclone chamber and the vortex finder are each ovaloid or ellipsoid.
6. The surface cleaning apparatus of clause 3 wherein the vortex finder includes a porous member that extends axially into the cyclone chamber and the porous member has a non-circular cross-sectional area in a plane that is transverse to the cyclone axis of rotation.
7. The surface cleaning apparatus of clause 1 wherein the cyclone air outlet has a central outlet axis and the central outlet axis is off center from the cyclone axis of rotation.
8. The surface cleaning apparatus of clause 1 wherein the cyclone air inlet is a tangential air inlet.
9. A surface cleaning apparatus comprising:
   (a) an air flow path from a dirty air inlet to a clean air outlet with a motor and fan assembly located in the air flow path;
   (b) a cyclone located in the air flow path, the cyclone having a first end, an opposed second end, a cyclone axis of rotation that extends between the first and second ends, a sidewall located between the first and second ends, a cyclone air inlet, a cyclone air outlet and a dirt outlet wherein a cyclone chamber is located internal of the sidewall between the first and second ends;
   (c) a dirt collection chamber external to the cyclone chamber and in communication with the cyclone chamber via the dirt outlet

   wherein the cyclone chamber has a non-circular cross-sectional area in a plane that is transverse to the cyclone axis of rotation, and
   wherein the dirt outlet and the cyclone air outlet are located at the first end and the cyclone air inlet is located at the second end.
10. The surface cleaning apparatus of clause 9 wherein the first end comprises a first end wall, the sidewall extends to the first end wall and the dirt outlet comprises a gap between the sidewall and the first end wall.
11. The surface cleaning apparatus of clause 9 wherein the cyclone air outlet comprises a vortex finder which has a non-circular cross-sectional area in a plane that is transverse to the cyclone axis of rotation.
12. The surface cleaning apparatus of clause 11 wherein, in transverse section, the cyclone chamber and the vortex finder have a common shape.
13. The surface cleaning apparatus of clause 11 wherein, in transverse section, the shape of the cyclone chamber and the vortex finder are each ovaloid or ellipsoid.
14. The surface cleaning apparatus of clause 11 wherein the vortex finder includes a porous member that extends axially into the cyclone chamber and the porous member which has a non-circular cross-sectional area in a plane that is transverse to the cyclone axis of rotation.
15. The surface cleaning apparatus of clause 9 wherein the cyclone air outlet has a central outlet axis and the central outlet axis is off center from the cyclone axis of rotation.

The surface cleaning apparatus of clause 15 wherein the cyclone air inlet is an axial air inlet.

### Clause Set B

1. A surface cleaning apparatus comprising:
   (a) an air flow path from a dirty air inlet to a clean air outlet with a motor and fan assembly located in the air flow path;
   (b) a cyclone located in the air flow path, the cyclone comprising a first end, an opposed second end, a cyclone air inlet, a cyclone air outlet and a longitudinally extending outer wall wherein an internal cavity is located internal of the outer wall and between the first and second ends, the outer wall having an inner surface, the internal cavity having, in transverse section, a cyclone portion in which air rotates when the cyclone is in use and a dirt collection portion spaced laterally from the cyclone portion and contiguous therewith, wherein the cyclone is configured to inhibit air rotating in the cyclone portion from entering the dirt collection portion.
2. The surface cleaning apparatus of clause 1 wherein the cyclone has a first deflecting member which is positioned in a rotational air flow path in the cyclone and which inhibits air rotating in the cyclone portion from entering the dirt collection portion.
3. The surface cleaning apparatus of clause 2 wherein the first deflecting member extends inwardly from the inner surface of the outer wall.
4. The surface cleaning apparatus of clause 3 wherein the first deflecting member has a first end provided on the inner surface of the outer wall and a free outer end that is located inwardly from the inner surface.
5. The surface cleaning apparatus of clause 4 wherein the first deflecting member is curved in a direction of rotation in the cyclone portion.
6. The surface cleaning apparatus of clause 4 wherein the first deflecting member is a continuous member that extends along an axial length of the outer wall from the first end to the second end.
7. The surface cleaning apparatus of clause 4 wherein the dirt collection portion has an inner side at an interface with the cyclone portion, the inner side has an upstream end and a downstream end in a direction of rotation in the cyclone portion and the first deflecting member is provided at the upstream side and a second deflecting member is provided at the downstream side.
8. The surface cleaning apparatus of clause 7 wherein each of the first and second deflecting members are curved in a direction of rotation in the cyclone portion.
9. The surface cleaning apparatus of clause 7 wherein each of the first and second deflecting members are a continuous member that extends along an axial length of the outer wall from the first end to the second end.
10. The surface cleaning apparatus of clause 4 wherein the dirt collection portion has an inner side at an interface with the cyclone portion, the inner side has an upstream end and a downstream end in a direction of rotation in the cyclone portion and the first deflecting member is provided at the upstream side.
11. The surface cleaning apparatus of clause 4 wherein the dirt collection portion has an inner side at an interface with the cyclone portion, the inner side has an upstream end and a downstream end in a direction of rotation in the cyclone portion and the first deflecting member is provided at the downstream side.
12. The surface cleaning apparatus of clause 1 wherein the outer wall has a non-circular cross-sectional area in a plane that is transverse to a cyclone axis of rotation.
13. The surface cleaning apparatus of clause 12 wherein the cyclone air outlet has a non-circular cross-sectional area in a plane that is transverse to the cyclone axis of rotation.
14. The surface cleaning apparatus of clause 13 wherein the cyclone air outlet comprises a vortex finder that includes a porous member which extends axially into the cyclone portion and the porous member has a non-circular cross-sectional area in a plane that is transverse to the cyclone axis of rotation.
15. The surface cleaning apparatus of clause 1 wherein the cyclone air outlet is centered in the cyclone portion and off center from a center of the outer wall.
16. The surface cleaning apparatus of clause 15 wherein the cyclone air outlet has a non-circular cross-sectional area in a plane that is transverse to a cyclone axis of rotation.
17. The surface cleaning apparatus of clause 1 wherein the cyclone portion has a non-circular cross-sectional area in a plane that is transverse to the cyclone axis of rotation.
18. The surface cleaning apparatus of clause 17 wherein the cyclone air outlet has a non-circular cross-sectional area in a plane that is transverse to the cyclone axis of rotation.
19. The surface cleaning apparatus of clause 18 wherein, in transverse section, the cyclone portion and the vortex finder have a common shape.

### Clause Set C

1. A surface cleaning apparatus comprising:
   (a) an air flow path from a dirty air inlet to a clean air outlet with a motor and fan assembly located in the air flow path;
   (b) a cyclone located in the air flow path, the cyclone comprising a first end, an opposed second end, a cyclone air inlet, a cyclone air outlet and a longitudinally extending cyclone sidewall; and,
   (c) a longitudinally extending air impermeable insert positioned interior the cyclone sidewall, the insert having a first end, a second end and a longitudinally extending insert sidewall, wherein an air flow region is located between an inner surface of the cyclone sidewall and an outer surface of the insert sidewall,

   wherein the second end of the insert is open to air flow therethrough and the cyclone air outlet is provided at the first end of the insert, and
   wherein the air outlet is off center from a center of the insert.
2. The surface cleaning apparatus of clause 1 wherein the cyclone sidewall has a non-circular cross-sectional area in a plane that is transverse to an axis of rotation of air in the air flow region.
3. The surface cleaning apparatus of clause 2 wherein the insert sidewall has a non-circular cross-sectional area in the plane that is transverse to the axis of rotation of air in the air flow region.
4. The surface cleaning apparatus of clause 1 wherein the first end of the insert is located at the first end of the cyclone.
5. The surface cleaning apparatus of clause 1 wherein the second end of the insert comprises a screen.
6. The surface cleaning apparatus of clause 1 wherein the cyclone air outlet has a non-circular cross-sectional area in a plane that is transverse to an axis of rotation of air in the air flow region.
7. The surface cleaning apparatus of clause 1 wherein the cyclone air outlet contacts an inner surface of the insert sidewall.
8. The surface cleaning apparatus of clause 1 wherein a first portion of the cyclone air outlet contacts a first portion of an inner surface of the insert sidewall and a second portion of the cyclone air outlet, which is angularly spaced from the first portion, contacts a second portion of an inner surface of the insert sidewall.
9. The surface cleaning apparatus of clause 1 wherein at least 15% of a perimeter of the cyclone air outlet is coincident with an inner surface of the insert sidewall.
10. The surface cleaning apparatus of clause 1 wherein the insert sidewall has a non-circular cross-sectional area in a plane that is transverse to an axis of rotation of air in the air flow region.
11. A surface cleaning apparatus comprising:
   (a) an air flow path from a dirty air inlet to a clean air outlet with a motor and fan assembly located in the air flow path;
   (b) a cyclone located in the air flow path, the cyclone comprising a first end, an opposed second end, a cyclone air inlet, a cyclone air outlet and a longitudinally extending cyclone sidewall; and,
   (c) a longitudinally extending air impermeable insert positioned interior the cyclone sidewall, the insert having a first end, a second end and a longitudinally extending insert sidewall, wherein an air flow region is located between an inner surface of the cyclone sidewall and an outer surface of the insert sidewall,

   wherein the second end of the insert is open to air flow therethrough and the cyclone air outlet is provided at the first end of the insert, and
   wherein the insert is off center from a center of the cyclone sidewall.
12. The surface cleaning apparatus of clause 11 wherein the cyclone sidewall has a non-circular cross-sectional area in a plane that is transverse to an axis of rotation of air in the air flow region.
13. The surface cleaning apparatus of clause 12 wherein the insert sidewall has a non-circular cross-sectional area in the plane that is transverse to the axis of rotation of air in the air flow region.
14. The surface cleaning apparatus of clause 11 wherein the first end of the insert is located at the first end of the cyclone.
15. The surface cleaning apparatus of clause 11 wherein the second end of the insert comprises a screen.
16. The surface cleaning apparatus of clause 11 wherein the cyclone air outlet has a non-circular cross-sectional area in a plane that is transverse to an axis of rotation of air in the air flow region.
17. The surface cleaning apparatus of clause 11 wherein the cyclone air outlet contacts an inner surface of the insert sidewall.
18. The surface cleaning apparatus of clause 11 wherein a first portion of the cyclone air outlet contacts a first portion of an inner surface of the insert sidewall and a second portion of the cyclone air outlet, which is angularly spaced from the first portion, contacts a second portion of an inner surface of the insert sidewall.
19. The surface cleaning apparatus of clause 11 wherein at least 15% of a perimeter of the cyclone air outlet is coincident with an inner surface of the insert sidewall.
20. The surface cleaning apparatus of clause 11 wherein the insert sidewall has a non-circular cross-sectional area in a plane that is transverse to an axis of rotation of air in the air flow region.

### Clause Set D

1. A surface cleaning apparatus comprising:
   (a) an air flow path from a dirty air inlet to a clean air outlet with a motor and fan assembly located in the air flow path;
   (b) a cyclone located in the air flow path, the cyclone comprising a first end, an opposed second end, a cyclone air inlet, a cyclone air outlet and a longitudinally extending cyclone sidewall; and,
   (c) a longitudinally extending air impermeable insert positioned interior of the cyclone sidewall, the insert having a first end, a second end and a longitudinally extending insert sidewall, wherein an air flow region is located between an inner surface of the cyclone sidewall and an outer surface of the insert sidewall,

   wherein the second end of the insert is open to air flow therethrough and the cyclone air outlet is provided at the first end of the insert, and
   wherein the cyclone air outlet contacts an inner surface of the insert sidewall.
2. The surface cleaning apparatus of clause 1 wherein a first portion of the cyclone air outlet contacts a first portion of an inner surface of the insert sidewall and a second portion of the cyclone air outlet, which is angularly spaced from the first portion, contacts a second portion of an inner surface of the insert sidewall.
3. The surface cleaning apparatus of clause 1 wherein at least 15% of a perimeter of the cyclone air outlet is coincident with an inner surface of the insert sidewall.
4. The surface cleaning apparatus of clause 1 wherein the cyclone sidewall has a non-circular cross-sectional area in a plane that is transverse to an axis of rotation of air in the air flow region.
5. The surface cleaning apparatus of clause 4 wherein the insert sidewall has a non-circular cross-sectional area in the plane that is transverse to the axis of rotation of air in the air flow region.
6. The surface cleaning apparatus of clause 5 wherein the cyclone air outlet has a non-circular cross-sectional area in a plane that is transverse to an axis of rotation of air in the air flow region.
7. The surface cleaning apparatus of clause 4 wherein the cyclone air outlet has a non-circular cross-sectional area in a plane that is transverse to an axis of rotation of air in the air flow region.
8. The surface cleaning apparatus of clause 1 wherein the first end of the insert is located at the first end of the cyclone.
9. The surface cleaning apparatus of clause 1 wherein the second end of the insert comprises a screen.
10. The surface cleaning apparatus of clause 1 wherein the cyclone air outlet has a non-circular cross-sectional area in a plane that is transverse to an axis of rotation of air in the air flow region.
11. The surface cleaning apparatus of clause 1 wherein the insert sidewall has a non-circular cross-sectional area in a plane that is transverse to an axis of rotation of air in the air flow region.
12. The surface cleaning apparatus of clause 11 wherein the cyclone air outlet has a non-circular cross-sectional area in a plane that is transverse to an axis of rotation of air in the air flow region.
13. The surface cleaning apparatus of clause 1 wherein the cyclone air outlet comprises a porous portion.
14. The surface cleaning apparatus of clause 13 wherein a downstream end of the cyclone air outlet comprises a screen and an upstream end of the cyclone air outlet comprises an air impermeable conduit.
15. The surface cleaning apparatus of clause 13 wherein the porous portion comprises a non-woven substrate.
16. The surface cleaning apparatus of clause 15 wherein the porous portion comprises a continuous substrate with pores wherein the pores are etched or laser cut.
17. The surface cleaning apparatus of clause 1 further comprising a dirt collection portion spaced laterally from the air flow region and contiguous therewith, wherein the cyclone is configured to inhibit air rotating in the air flow region from entering the dirt collection portion.
18. The surface cleaning apparatus of clause 17 wherein the cyclone has a first deflecting member which is positioned in a rotational air flow path in the air flow region and which inhibits air rotating in the air flow region from entering the dirt collection portion.

### Clause Set E

1. A surface cleaning apparatus comprising:
   (a) an air flow path from a dirty air inlet to a clean air outlet with a motor and fan assembly located in the air flow path;
   (b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends;

   wherein the cyclone chamber has a non-circular cross-sectional area in a plane that is transverse to the cyclone axis of rotation, and
   wherein the cyclone air outlet comprises a porous member extending into the cyclone chamber from the first end, and
   wherein the cyclone air outlet has a non-circular cross-sectional area in a plane that is transverse to the cyclone axis of rotation.
2. The surface cleaning apparatus of clause 1 wherein a downstream end of the cyclone air outlet comprises a screen and an upstream end of the cyclone air outlet comprises an air impermeable conduit.
3. The surface cleaning apparatus of clause 2 wherein the porous portion comprises a non-woven substrate.
4. The surface cleaning apparatus of clause 3 wherein the porous portion comprises a continuous substrate with pores wherein the pores are etched or laser cut.
5. The surface cleaning apparatus of clause 3 wherein the porous portion comprises an etched metal screen, etched plastic, laser cut plastic or sintered plastic.
6. The surface cleaning apparatus of clause 1 wherein, in transverse section, the cyclone chamber and the cyclone air outlet have a common shape.
7. The surface cleaning apparatus of clause 1 wherein the cyclone chamber has a radial thickness between an inner surface of the sidewall and an outer surface of the cyclone air outlet and, in a plane that is transverse to the cyclone axis of rotation, the radial thickness is constant at all angular locations around the cyclone axis of rotation.
8. The surface cleaning apparatus of clause 1 wherein, in a transverse section, the cyclone chamber is ovaloid, ellipsoid or rectangular with rounded ends.
9. The surface cleaning apparatus of clause 8 wherein, in the transverse section, the cyclone chamber and the cyclone air outlet have a common shape.
10. The surface cleaning apparatus of clause 1 wherein the cyclone air outlet has a central outlet axis and the central outlet axis is off center from the cyclone axis of rotation.
11. The surface cleaning apparatus of clause 1 wherein the cyclone has a dirt outlet and the surface cleaning apparatus further comprises a dirt collection chamber external to the cyclone chamber and in communication with the cyclone chamber via the dirt outlet.
12. The surface cleaning apparatus of clause 1 wherein the cyclone has a dirt outlet and the surface cleaning apparatus further comprises a dirt collection portion spaced laterally from the cyclone portion and contiguous therewith, wherein the cyclone is configured to inhibit air rotating in the cyclone portion from entering the dirt collection portion.
13. The surface cleaning apparatus of clause 12 wherein the cyclone has a first deflecting member which is positioned in a rotational air flow path in the cyclone and which inhibits air rotating in the cyclone portion from entering the dirt collection portion.
14. The surface cleaning apparatus of clause 1 wherein the sidewall is cylindrical and the cyclone air outlet comprises a tapered vortex finder.
15. The surface cleaning apparatus of clause 14 wherein a downstream end of the vortex finder comprises a tapered screen and an upstream end of the cyclone air outlet comprises an air impermeable cylindrical conduit.
16. The surface cleaning apparatus of clause 14 wherein the sidewall is cylindrical and the cyclone air outlet comprises a frusto-conical vortex finder.

### Clause Set F

1. A surface cleaning apparatus comprising:
   (a) an air flow path from a dirty air inlet to a clean air outlet with a motor and fan assembly located in the air flow path;
   (b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends;

   wherein the cyclone chamber has a non-circular cross-sectional area in a plane that is transverse to the cyclone axis of rotation, and
   wherein the cyclone air outlet is off center from the cyclone axis of rotation.
2. The surface cleaning apparatus of clause 1 wherein the cyclone air outlet has a non-circular cross-sectional area in a plane that is transverse to the cyclone axis of rotation.
3. The surface cleaning apparatus of clause 1 wherein, in transverse section, the cyclone chamber and the cyclone air outlet have a common shape.
4. The surface cleaning apparatus of clause 2 wherein the cyclone chamber has a radial thickness between an inner surface of the sidewall and an outer surface of the cyclone air outlet and, in a plane that is transverse to the cyclone axis of rotation, the radial thickness is constant at all angular locations around the cyclone axis of rotation.
5. The surface cleaning apparatus of clause 1 wherein, in transverse section, the cyclone chamber is ovaloid, ellipsoid or rectangular with rounded ends.
6. The surface cleaning apparatus of clause 5 wherein, in transverse section, the cyclone chamber and the cyclone air outlet have a common shape.
7. The surface cleaning apparatus of clause 5 wherein the cyclone chamber has a radial thickness between an inner surface of the sidewall and an outer surface of the cyclone air out and, in a plane that is transverse to the cyclone axis of rotation, the radial thickness is constant at all angular locations around the cyclone axis of rotation.
8. The surface cleaning apparatus of clause 1 wherein the cyclone air outlet comprises a porous member extending into the cyclone chamber from the first end.
9. The surface cleaning apparatus of clause 8 wherein a downstream end of the cyclone air outlet comprises a screen and an upstream end of the cyclone air outlet comprises an air impermeable conduit.
10. The surface cleaning apparatus of clause 8 wherein the porous portion comprises a non-woven substrate.
11. The surface cleaning apparatus of clause 1 wherein the cyclone has a dirt outlet and the surface cleaning apparatus further comprises a dirt collection portion spaced laterally from the cyclone portion and contiguous therewith, wherein the cyclone is configured to inhibit air rotating in the cyclone portion from entering the dirt collection portion.
12. The surface cleaning apparatus of clause 11 wherein the cyclone has a first deflecting member which is positioned in a rotational air flow path in the cyclone and which inhibits air rotating in the cyclone portion from entering the dirt collection portion.
13. A surface cleaning apparatus comprising:
   (a) an air flow path from a dirty air inlet to a clean air outlet with a motor and fan assembly located in the air flow path;
   (b) a cyclone located in the air flow path, the cyclone having a first end, an opposed second end, a cyclone axis of rotation that extends between the first and second ends, a sidewall located between the first and second ends, a cyclone air inlet and a cyclone air outlet wherein a cyclone chamber is located internal of the sidewall between the first and second ends;
   wherein the cyclone air outlet is off center from the cyclone axis of rotation.
14. The surface cleaning apparatus of clause 13 wherein the cyclone air outlet has a non-circular cross-sectional area in a plane that is transverse to the cyclone axis of rotation.
15. The surface cleaning apparatus of clause 13 wherein the cyclone air outlet comprises a porous member extending into the cyclone chamber from the first end.
16. The surface cleaning apparatus of clause 15 wherein a downstream end of the cyclone air outlet comprises a screen and an upstream end of the cyclone air outlet comprises an air impermeable conduit.
17. The surface cleaning apparatus of clause 15 wherein the porous portion comprises a non-woven substrate.
18. The surface cleaning apparatus of clause 13 wherein the cyclone has a dirt outlet and the surface cleaning apparatus further comprises a dirt collection portion spaced laterally from the cyclone portion and contiguous therewith, wherein the cyclone is configured to inhibit air rotating in the cyclone portion from entering the dirt collection portion.
19. The surface cleaning apparatus of clause 18 wherein the cyclone has a first deflecting member which is positioned in a rotational air flow path in the cyclone and which inhibits air rotating in the cyclone portion from entering the dirt collection portion.

### Clause Set G

1. A hand vacuum cleaner comprising:
   (a) an air flow path from a dirty air inlet, which is located at a front end of the hand vacuum cleaner, to a clean air outlet with a motor and fan assembly located in the air flow path;
   (b) a cyclone located in the air flow path, the cyclone having a front end, an opposed rear end, a cyclone axis of rotation that extends between the front and rear ends of the cyclone, a cyclone air inlet, a cyclone air outlet, and a sidewall located between the first and second ends of the cyclone, wherein a cyclone portion in which air rotates when the hand vacuum cleaner is in use is located internal of the sidewall between the first and second ends; and,
   (c) a handle having a hand grip portion,

   wherein, when the hand vacuum cleaner is oriented with the cyclone axis of rotation extending horizontally, a plane extends centrally through a longitudinal length of the hand grip portion and transverse to the cyclone axis of rotation, and
   wherein the sidewall has a non-circular cross-sectional area in the plane, the sidewall has a first diameter that is located in the plane and a second diameter that is located in the plane and the first diameter is greater than the second diameter and, when the hand vacuum cleaner is oriented with the plane extending vertically, the first diameter extends vertically and the second diameter extends transversely.
2. The hand vacuum cleaner of clause 1 wherein the cyclone air inlet is located at the front end of the cyclone portion and the cyclone air outlet is located at the rear end of the cyclone portion.
3. The hand vacuum cleaner of clause 1 wherein the cyclone air inlet and the cyclone air outlet are located at the rear end of the cyclone portion.
4. The hand vacuum cleaner of clause 1 wherein the front end of the cyclone is an openable door.
5. The hand vacuum cleaner of clause 1 wherein a dirt collection portion is provided external to the cyclone portion, the dirt collection portion is separated from the cyclone portion by a wall located between the front and rear ends of the cyclone, the dirt collection portion is in communication with the cyclone portion via a dirt outlet and, when the hand vacuum cleaner is oriented with the cyclone axis of rotation extending horizontally and the plane extending vertically, the dirt outlet is at a lower end of the cyclone portion.
6. The hand vacuum cleaner of clause 1 wherein a dirt collection portion is provided external to the cyclone portion, the dirt collection portion is separated from the cyclone portion by a wall located between the front and rear ends of the cyclone, the dirt collection portion is in communication with the cyclone portion via a dirt outlet and, when the hand vacuum cleaner is oriented with the cyclone axis of rotation extending horizontally and plane extending vertically, the dirt outlet is at a upper end of the cyclone portion.
7. The hand vacuum cleaner of clause 1 wherein a dirt collection portion is provided external to the cyclone portion, the dirt collection portion is separated from the cyclone portion by a wall located between the front and rear ends of the cyclone and, when the hand vacuum cleaner is oriented with the cyclone axis of rotation extending horizontally and plane extending vertically, the cyclone portion is in communication with the dirt collection portion at a lower portion of the cyclone portion and at an upper portion of the cyclone portion.
8. The hand vacuum cleaner of clause 1 wherein the cyclone further comprises a dirt collection portion that is located internal of the sidewall and contiguous with the cyclone portion wherein, when the hand vacuum cleaner is oriented with the cyclone axis of rotation extending horizontally and plane extending vertically, the dirt collection portion is spaced vertically from the cyclone portion and is contiguous therewith, wherein the cyclone is configured to inhibit air rotating in the cyclone portion from entering the dirt collection portion.
9. The surface cleaning apparatus of clause 8 wherein the cyclone has a first deflecting member which is positioned in a rotational air flow path in the cyclone and which inhibits air rotating in the cyclone portion from entering the dirt collection portion.
10. The surface cleaning apparatus of clause 9 wherein the first deflecting member extends inwardly from the inner surface of the sidewall.
11. The surface cleaning apparatus of clause 10 wherein the first deflecting member has a first end provided on the inner surface of the sidewall and a free outer end that is located inwardly from the inner surface.
12. The surface cleaning apparatus of clause 9 wherein the first deflecting member is curved in a direction of rotation in the cyclone portion.
13. The surface cleaning apparatus of clause 9 wherein the first deflecting member is a continuous member that extends along an axial length of the outer wall from the first end to the second end.
14. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side and a second deflecting member is provided at the downstream side.
15. The surface cleaning apparatus of clause 14 wherein each of the first and second deflecting members are curved in a direction of rotation in the cyclone portion.
16. The surface cleaning apparatus of clause 14 wherein each of the first and second deflecting members are a continuous member that extends along an axial length of the outer wall from the first end to the second end.
17. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side.
18. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the downstream side.
19. The hand vacuum cleaner of clause 1 wherein the cyclone further comprises:
   (a) a first dirt collection portion that is located internal of the sidewall and contiguous with the cyclone portion wherein, when the hand vacuum cleaner is oriented with the cyclone axis of rotation extending horizontally and the plane extending vertically, the dirt collection portion is spaced vertically above the cyclone portion and is contiguous therewith, wherein the cyclone is configured to inhibit air rotating in the cyclone portion from entering the first dirt collection portion; and,
   (b) a second dirt portion that is located internal of the sidewall and contiguous with the cyclone portion wherein, when the hand vacuum cleaner is oriented with the cyclone axis of rotation extending horizontally and the plane extending vertically, the dirt collection portion is spaced vertically below the cyclone portion and is contiguous therewith, wherein the cyclone is configured to inhibit air rotating in the cyclone portion from entering the first dirt collection portion.
20. The surface cleaning apparatus of clause 19 wherein the cyclone has a first deflecting member which is positioned in a rotational air flow path in the cyclone and which inhibits air rotating in the cyclone portion from entering the first dirt collection portion and a second deflecting member which is positioned in a rotational air flow path in the cyclone and which inhibits air rotating in the cyclone portion from entering the second dirt collection portion.

### Clause Set H

1. A hand vacuum cleaner comprising:
   (a) an air flow path from a dirty air inlet, which is located at a front end of the hand vacuum cleaner, to a clean air outlet with a motor and fan assembly located in the air flow path;
   (b) a cyclone located in the air flow path, the cyclone having a front end, an opposed rear end, a cyclone axis of rotation that extends between the front and rear ends of the cyclone, a cyclone air inlet, a cyclone air outlet, and a sidewall located between the first and second ends of the cyclone, wherein a cyclone portion in which air rotates when the hand vacuum cleaner is in use is located internal of the sidewall between the first and second ends; and,
   (c) a handle having a hand grip portion,

   wherein, when the hand vacuum cleaner is oriented with the cyclone axis of rotation extending horizontally, a plane extends centrally through a longitudinal length of the hand grip portion and transverse to the cyclone axis of rotation, and
   wherein the sidewall has a non-circular cross-sectional area in the plane, the sidewall has a first diameter that is located in the plane and a second diameter that is located in the plane and the first diameter is greater than the second diameter and, when the hand vacuum cleaner is oriented with the plane extending vertically, the first diameter extends transversely and the second diameter extends vertically.
2. The hand vacuum cleaner of clause 1 wherein the cyclone air inlet is located at the front end of the cyclone portion and the cyclone air outlet is located at the rear end of the cyclone portion.
3. The hand vacuum cleaner of clause 1 wherein the cyclone air inlet and the cyclone air outlet are located at the rear end of the cyclone portion.
4. The hand vacuum cleaner of clause 1 wherein the front end of the cyclone is an openable door.
5. The hand vacuum cleaner of clause 1 wherein a dirt collection portion is provided external to the cyclone portion, the dirt collection portion is separated from the cyclone portion by a wall located between the front and rear ends of the cyclone, the dirt collection portion is in communication with the cyclone portion via a dirt outlet and, when the hand vacuum cleaner is oriented with the cyclone axis of rotation extending horizontally and the plane extending vertically, the dirt outlet is at a lower end of the cyclone portion.
6. The hand vacuum cleaner of clause 1 wherein a dirt collection portion is provided external to the cyclone portion, the dirt collection portion is separated from the cyclone portion by a wall located between the front and rear ends of the cyclone, the dirt collection portion is in communication with the cyclone portion via a dirt outlet and, when the hand vacuum cleaner is oriented with the cyclone axis of rotation extending horizontally and plane extending vertically, the dirt outlet is at a upper end of the cyclone portion.
7. The hand vacuum cleaner of clause 1 wherein a dirt collection portion is provided external to the cyclone portion, the dirt collection portion is separated from the cyclone portion by a wall located between the front and rear ends of the cyclone and, when the hand vacuum cleaner is oriented with the cyclone axis of rotation extending horizontally plane extending vertically, the cyclone portion is in communication with the dirt collection portion at a lower portion of the cyclone portion and at an upper portion of the cyclone portion.
8. The hand vacuum cleaner of clause 1 wherein the cyclone further comprises a dirt collection portion that is located internal of the sidewall and contiguous with the cyclone portion wherein, when the hand vacuum cleaner is oriented with the cyclone axis of rotation extending horizontally and plane extending vertically, the dirt collection portion is spaced transversely from the cyclone portion and is contiguous therewith, wherein the cyclone is configured to inhibit air rotating in the cyclone portion from entering the dirt collection portion.
9. The surface cleaning apparatus of clause 8 wherein the cyclone has a first deflecting member which is positioned in a rotational air flow path in the cyclone and which inhibits air rotating in the cyclone portion from entering the dirt collection portion.
10. The surface cleaning apparatus of clause 9 wherein the first deflecting member extends inwardly from the inner surface of the sidewall.
11. The surface cleaning apparatus of clause 10 wherein the first deflecting member has a first end provided on the inner surface of the sidewall and a free outer end that is located inwardly from the inner surface.
12. The surface cleaning apparatus of clause 9 wherein the first deflecting member is curved in a direction of rotation in the cyclone portion.
13. The surface cleaning apparatus of clause 9 wherein the first deflecting member is a continuous member that extends along an axial length of the outer wall from the first end to the second end.
14. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side and a second deflecting member is provided at the downstream side.
15. The surface cleaning apparatus of clause 14 wherein each of the first and second deflecting members are curved in a direction of rotation in the cyclone portion.
16. The surface cleaning apparatus of clause 14 wherein each of the first and second deflecting members are a continuous member that extends along an axial length of the outer wall from the first end to the second end.
17. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side.
18. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the downstream side.
19. The hand vacuum cleaner of clause 1 wherein the cyclone further comprises:
   (a) a first dirt collection portion that is located internal of the sidewall and contiguous with the cyclone portion wherein, when the hand vacuum cleaner is oriented with the cyclone axis of rotation extending horizontally and the plane extending vertically, the dirt collection portion is spaced transversely to one side of the cyclone portion and is contiguous therewith, wherein the cyclone is configured to inhibit air rotating in the cyclone portion from entering the first dirt collection portion; and,
   (b) a second dirt portion that is located internal of the sidewall and contiguous with the cyclone portion wherein, when the hand vacuum cleaner is oriented with the cyclone axis of rotation extending horizontally and the plane extending vertically, the dirt collection portion is spaced transversely to an opposed side of the cyclone portion and is contiguous therewith, wherein the cyclone is configured to inhibit air rotating in the cyclone portion from entering the first dirt collection portion.
20. The surface cleaning apparatus of clause 19 wherein the cyclone has a first deflecting member which is positioned in a rotational air flow path in the cyclone and which inhibits air rotating in the cyclone portion from entering the first dirt collection portion and a second deflecting member which is positioned in a rotational air flow path in the cyclone and which inhibits air rotating in the cyclone portion from entering the second dirt collection portion.

### Clause Set I

1. An upright vacuum cleaner comprising:
   (a) a surface cleaning head having a front end and a rear end;
   (b) an upright section rotationally mounted at the rear end of the surface cleaning head and moveable between an upright storage position in which the upright section extends generally vertically from the surface cleaning head and a reclined in use position;
   (c) an air flow path from a dirty air inlet, which is provided at the front end of the surface cleaning head, to a clean air outlet with a motor and fan assembly located in the air flow path; and,
   (d) a cyclone provided on the upright section and located in the air flow path, the cyclone having a cyclone air inlet, a cyclone air outlet and a sidewall located between the first and second ends of the cyclone and, when the upright section is in the storage position, the cyclone has an upper end, an opposed lower end and a cyclone axis of rotation that extends between the upper and lower ends, wherein a cyclone portion in which air rotates when the upright vacuum cleaner is in use is located internal of the sidewall between the upper and lower ends;

   wherein, when the upright vacuum cleaner is oriented with the cyclone axis of rotation extending vertically, the sidewall has a non-circular cross-sectional area in a horizontal plane, the sidewall has a first diameter that is located in the plane and a second diameter that is located in the plane and the first diameter is greater than the second diameter, and
   the second diameter extends in a forward/rearward direction and the second diameter extends transversely.
2. The upright vacuum cleaner of clause 1 wherein the cyclone air inlet is located at the upper end of the cyclone portion and the cyclone air outlet is located at the lower end of the cyclone portion.
3. The upright vacuum cleaner of clause 1 wherein the cyclone air inlet and the cyclone air outlet are located at the lower end of the cyclone portion.
4. The upright vacuum cleaner of clause 1 wherein the lower end of the cyclone is an openable door.
5. The upright vacuum cleaner of clause 1 wherein a dirt collection portion is provided external to the cyclone portion and transversely from the cyclone portion, the dirt collection portion is separated from the cyclone portion by a wall located between the front and rear ends of the cyclone, the dirt collection portion is in communication with the cyclone portion via a dirt outlet and, when the upright vacuum cleaner is oriented with the cyclone axis of rotation extending vertically, the dirt outlet is at a lower end of the cyclone portion.
6. The upright vacuum cleaner of clause 1 wherein a dirt collection portion is provided external to the cyclone portion and transversely from the cyclone portion, the dirt collection portion is separated from the cyclone portion by a wall located between the front and rear ends of the cyclone, the dirt collection portion is in communication with the cyclone portion via a dirt outlet and, when the upright vacuum cleaner is oriented with the cyclone axis of rotation extending vertically, the dirt outlet is at a upper end of the cyclone portion.
7. The upright vacuum cleaner of clause 1 wherein a dirt collection portion is provided external to the cyclone portion and transversely from the cyclone portion, the dirt collection portion is separated from the cyclone portion by a wall located between the front and rear ends of the cyclone and, when the upright vacuum cleaner is oriented with the cyclone axis of rotation extending vertically, the cyclone portion is in communication with the dirt collection portion at one transverse side of the cyclone portion and at an opposed transverse side of the cyclone portion.
8. The upright vacuum cleaner of clause 1 wherein the cyclone further comprises a dirt collection portion that is located internal of the sidewall and contiguous with the cyclone portion wherein, when the upright vacuum cleaner is oriented with the cyclone axis of rotation extending vertically, the dirt collection portion is spaced transversely from the cyclone portion and is contiguous therewith, wherein the cyclone is configured to inhibit air rotating in the cyclone portion from entering the dirt collection portion.
9. The surface cleaning apparatus of clause 8 wherein the cyclone has a first deflecting member which is positioned in a rotational air flow path in the cyclone and which inhibits air rotating in the cyclone portion from entering the dirt collection portion.
10. The surface cleaning apparatus of clause 9 wherein the first deflecting member extends inwardly from the inner surface of the sidewall.
11. The surface cleaning apparatus of clause 10 wherein the first deflecting member has a first end provided on the inner surface of the sidewall and a free outer end that is located inwardly from the inner surface.
12. The surface cleaning apparatus of clause 9 wherein the first deflecting member is curved in a direction of rotation in the cyclone portion.
13. The surface cleaning apparatus of clause 9 wherein the first deflecting member is a continuous member that extends along an axial length of the outer wall from the first end to the second end.
14. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side and a second deflecting member is provided at the downstream side.
15. The surface cleaning apparatus of clause 14 wherein each of the first and second deflecting members are curved in a direction of rotation in the cyclone portion.
16. The surface cleaning apparatus of clause 14 wherein each of the first and second deflecting members are a continuous member that extends along an axial length of the outer wall from the first end to the second end.
17. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the upstream side.
18. The surface cleaning apparatus of clause 9 wherein the dirt collection portion has an inner side at an interface with the cyclone portion, the inner side has an upstream end and a downstream end in a direction of rotation in the cyclone portion and the first deflecting member is provided at the downstream side.
19. The upright vacuum cleaner of clause 1 wherein the cyclone further comprises:
   (a) a first dirt collection portion that is located internal of the sidewall and contiguous with the cyclone portion wherein, when the upright vacuum cleaner is oriented with the cyclone axis of rotation extending vertically, the dirt collection portion is spaced transversely to one side of the cyclone portion and is contiguous therewith, wherein the cyclone is configured to inhibit air rotating in the cyclone portion from entering the first dirt collection portion; and,
   (b) a second dirt portion that is located internal of the sidewall and contiguous with the cyclone portion wherein, when the upright vacuum cleaner is oriented with the cyclone axis of rotation extending vertically, the dirt collection portion is spaced transversely to an opposed side of the cyclone portion and is contiguous therewith, wherein the cyclone is configured to inhibit air rotating in the cyclone portion from entering the first dirt collection portion.
20. The surface cleaning apparatus of clause 19 wherein the cyclone has a first deflecting member which is positioned in a rotational air flow path in the cyclone and which inhibits air rotating in the cyclone portion from entering the first dirt collection portion and a second deflecting member which is positioned in a rotational air flow path in the cyclone and which inhibits air rotating in the cyclone portion from entering the second dirt collection portion.

## Claims

1. A surface cleaning apparatus comprising:
(a) an air flow path from a dirty air inlet to a clean air outlet with a motor and fan assembly located in the air flow path;
(b) a cyclone located in the air flow path, the cyclone having a first end, an opposed second end, a cyclone axis of rotation that extends between the first and second ends, a sidewall located between the first and second ends, a cyclone air inlet, a cyclone air outlet and a first dirt outlet wherein a cyclone chamber is located internal of the sidewall between the first and second ends;
(c) a dirt collection chamber external to the cyclone chamber and in communication with the cyclone chamber via the first dirt outlet
wherein the cyclone chamber has a non-circular cross-sectional area in a plane that is transverse to the cyclone axis of rotation, and
wherein the first dirt outlet comprises an opening in the sidewall.

2. The surface cleaning apparatus of claim 1 wherein the first dirt outlet is located at the first end, the first end comprises a first end wall and the sidewall extends to the first end wall.

3. The surface cleaning apparatus of claim 2 wherein the first dirt outlet is located at the first end wall and comprises a gap between the sidewall and the first end wall.

4. The surface cleaning apparatus of claim 1 wherein, in transverse section, the cyclone chamber is ovaloid, ellipsoid or rectangular with rounded ends.

5. The surface cleaning apparatus of claim 1 wherein the cyclone air inlet and the cyclone air outlet are located at the second end.

6. The surface cleaning apparatus of claim 1 wherein the cyclone air inlet is located at the second end and the cyclone air outlet is located at the first end.

7. The surface cleaning apparatus of claim 1 wherein the cyclone air outlet comprises a vortex finder which has a non-circular cross-sectional area in a plane that is transverse to the cyclone axis of rotation.

8. The surface cleaning apparatus of claim 7 wherein, in transverse section, the cyclone chamber and the vortex finder have a common shape.

9. The surface cleaning apparatus of claim 8 wherein, in transverse section, the shape of the cyclone chamber and the vortex finder are each ovaloid or ellipsoid.

10. The surface cleaning apparatus of claim 7 wherein the vortex finder includes a porous member that extends axially into the cyclone chamber and the porous member which has a non-circular cross-sectional area in a plane that is transverse to the cyclone axis of rotation.

11. The surface cleaning apparatus of claim 1 further comprising a second dirt outlet that is also located at the first end and is angularly positioned around the sidewall from the first dirt outlet.

12. The surface cleaning apparatus of claim 1 wherein the surface cleaning apparatus is a hand vacuum cleaner having a front end having the dirt air inlet and a rear end, wherein the dirt air inlet comprises an inlet conduit having an inlet conduit axis, wherein the cyclone axis of rotation extends between the front end and the rear end and, when the hand vacuum cleaner is oriented such that the conduit axis extends horizontally, the cyclone axis of rotation extends horizontally and the first dirt outlet is in a lower portion of the sidewall.

13. The surface cleaning apparatus of claim 1 wherein the surface cleaning apparatus is an upright surface cleaning apparatus or a cannister surface cleaning apparatus and, in a storage position in which wheels of the surface cleaning apparatus are positioned on a floor, the cyclone axis of rotation extends vertically and dirt exits the first dirt outlet laterally.

14. The surface cleaning apparatus of claim 1 wherein the cyclone air inlet is a tangential air inlet.

15. The surface cleaning apparatus of claim 1 wherein the cyclone air inlet is an axial air inlet.

16. The surface cleaning apparatus of claim 1 wherein the cyclone chamber is laterally positioned beside the cyclone chamber and the cyclone chamber and the dirt collection chamber are concurrently openable.

17. A surface cleaning apparatus comprising:
(a) an air flow path from a dirty air inlet to a clean air outlet with a motor and fan assembly located in the air flow path;
(b) a cyclone located in the air flow path, the cyclone having a first end comprising a first end wall, an opposed second end, a cyclone axis of rotation that extends between the first and second ends, a sidewall located between the first and second ends, a cyclone air inlet, a cyclone air outlet and a first dirt outlet wherein a cyclone chamber is located internal of the sidewall between the first and second ends;
(c) a dirt collection chamber external to the cyclone chamber and in communication with the cyclone chamber via the first dirt outlet
wherein the cyclone chamber has a non-circular cross-sectional area in a plane that is transverse to the cyclone axis of rotation, and
wherein the first end wall is moveable between a closed position and an open position and the first dirt outlet comprises a spacing between at least a portion of the first end wall and the sidewall.

18. The surface cleaning apparatus of claim 17 wherein the cyclone air outlet comprises a vortex finder which has a non-circular cross-sectional area in a plane that is transverse to the cyclone axis of rotation.

19. The surface cleaning apparatus of claim 18 wherein, in transverse section, the cyclone chamber and the vortex finder have a common shape.

20. The surface cleaning apparatus of claim 17 wherein the cyclone air inlet and the cyclone air outlet are located at the second end.
